# EUROPEAN PATENT APPLICATION

(11) **EP 4 325 413 A1**
(43) Date of publication of application: **21.02.2024**
(21) Application number: 22787646.3
(22) Date of filing: 15.04.2022
(51) Int. Cl.: G06Q 20/40

(54) **PAYMENT METHOD, APPARATUS, AND SYSTEM FOR DIGITAL CURRENCY**

(30) Priority: 16.04.2021 CN 202110414096; 16.04.2021 CN 202110413028; 16.04.2021 CN 202110412860; 16.04.2021 CN 202110412882
(71) Applicant: Digital Currency Institute, The People's Bank of China, Beijing 100071 (CN)
(72) Inventor: DI, Gang, Beijing 100071 (CN); MU, Changchun, Beijing 100071 (CN); ZHAO, Xinyu, Beijing 100071 (CN); CUI, Peidong, Beijing 100071 (CN); DU, Jinli, Beijing 100071 (CN); SHI, Zhan, Beijing 100071 (CN); HAO, Huiting, Beijing 100071 (CN); CHEN, Qiu, Beijing 100071 (CN); BIAN, Yongchao, Beijing 100071 (CN)
(74) Representative: Winter, Brandl - Partnerschaft mbB
(86) International application number: PCT/CN2022/087200
(87) International publication number: WO 2022/218424

(57) **Abstract**

Provided are a digital currency payment method, apparatus, and system, and relates to the technical field of computers. A specific implementation of the method includes: sending a transaction amount to a first currency management apparatus corresponding to a first client, so as to enable the first currency management apparatus to determine whether the transaction amount is greater than an available balance of a first digital currency used for payment; and in the case where the transaction amount is not greater than the available balance, sending a payment request to a second client, the payment request indicating the first digital currency or a circulation identifier of the first digital currency, so as to enable a second currency management apparatus corresponding to the second client to cash, for the first currency management apparatus, a second digital currency corresponding to the transaction amount. With this implementation, the security and reliability in a digital currency transaction process are improved.

## Description

### Cross-Reference to Related Application

The present disclosure claims priority to the Chinese Patent Application No. 202110412860.6 filed on April 16, 2021 and entitled "Digital Currency Payment Method, Apparatus, and System", the Chinese Patent Application No. 202110412882.2 filed on April 16, 2021 and entitled "Digital Currency Payment Method, Apparatus, and System", the Chinese Patent Application No. 202110413028.8 filed on April 16, 2021 and entitled "Digital Currency Payment Method, Apparatus, and System", and the Chinese Patent Application No. 202110414096.6 filed on April 16, 2021 and entitled "Digital Currency Payment Method, Apparatus, and System", the entire contents of which are incorporated herein by reference as part or all of the present disclosure.

### Technical Field

The present disclosure relates to the technical field of computers, in particular to a digital currency payment method, apparatus, and system.

### Background

In the era of digital economy, digital currencies are increasingly attracting the attention of banks and consumers in various countries because of their low cost and convenience, and the use of digital currencies for payment is the key to circulation and application thereof.

Unlike traditional electronic payment in which money used comes from bank accounts, and the money in effect still corresponds to bills, digital currencies of themselves are money, and the use of digital currencies for payment is to pay directly with money. Therefore, the current electronic payment systems are not applicable to digital currency payments.

### Summary

In view of the above, embodiments of the present disclosure provide a digital currency payment method, apparatus, and system. By maintaining an available balance of a digital currency used for payment, a payment transaction of the digital currency is achieved, which is both convenient and fast.

In order to achieve the above purpose, according to a first aspect of embodiments of the present disclosure, a digital currency payment method is provided. The method is applied to a first client and includes:
sending a transaction amount to a first currency management apparatus corresponding to the first client, so as to enable the first currency management apparatus to determine whether the transaction amount is greater than an available balance of a first digital currency used for payment; and
in a case where the transaction amount is not greater than the available balance, sending a payment request to a second client, the payment request indicating the first digital currency or a circulation identifier of the first digital currency, so as to enable a second currency management apparatus corresponding to the second client to cash, for the first currency management apparatus, a second digital currency corresponding to the transaction amount.

As at least one alternative embodiment, in a case where the second currency management apparatus has cashed the second digital currency, the first currency management apparatus updates the available balance of the first digital currency, and the available balance after updating indicates a difference between the available balance before updating and the transaction amount.

In a second aspect, an embodiment of the present disclosure provides a digital currency payment method. The method is applied to a first client and includes:
sending a transaction amount to a first currency management apparatus corresponding to the first client, so as to enable the first currency management apparatus to divide, in a case where the transaction amount is less than a denomination of a first digital currency used for payment, the first digital currency into a third digital currency and a fourth digital currency, wherein a denomination of the third digital currency indicates the transaction amount, and a denomination of the fourth digital currency indicates a difference between the denomination of the first digital currency and the transaction amount;
receiving the third digital currency issued by the first currency management apparatus; and
sending a payment request to a second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

As at least one alternative embodiment,
in a case where the second currency management apparatus has cashed the third digital currency, the first currency management apparatus updates a digital currency used for payment to the fourth digital currency.

As at least one alternative embodiment, the digital currency payment method provided in the second aspect above further includes:
sending a digital currency exporting request to the first currency management apparatus, the digital currency exporting request indicating the denomination of the first digital currency, so as to enable the first currency management apparatus to generate the first digital currency and to record the first digital currency as a digital currency used for payment.

As at least one alternative embodiment, the digital currency payment method provided in the second aspect above further includes: before sending the transaction amount to the first currency management apparatus, generating the transaction amount or receiving the transaction amount sent by the second client.

In a third aspect, an embodiment of the present disclosure provides a digital currency payment method. The method is applied to a first client and includes:
generating a two-dimensional code or receiving a two-dimensional code sent by a first currency management apparatus corresponding to the first client, the two-dimensional code indicating a first digital currency used for payment or a circulation identifier of the first digital currency; and
providing the two-dimensional code to a second client.

As at least one alternative embodiment, the digital currency payment method provided in the third aspect above further includes: in a case where the two-dimensional code is an encrypted two-dimensional code, providing a first key corresponding to an encryption method of the two-dimensional code to the second client.

As at least one alternative embodiment, the digital currency payment method provided in the third aspect above further includes:
in a case where the first digital currency indicated by the two-dimensional code is an encrypted first digital currency, or in a case where the circulation identifier indicated by the two-dimensional code is an encrypted circulation identifier, providing a second key to the second client according to an encryption method corresponding to a denomination of the first digital currency.

In a fourth aspect, an embodiment of the present disclosure provides a digital currency payment method. The method is applied to a first currency management apparatus and includes:
receiving a transaction amount sent by a first client and determining whether the transaction amount is greater than an available balance of a first digital currency used for payment; and
in a case where the transaction amount is not greater than the available balance, notifying the first client to send a payment request to a second client, the payment request indicating the first digital currency or a circulation identifier of the first digital currency.

As at least one alternative embodiment, the digital currency payment method provided in the fourth aspect above further includes:
receiving a digital currency exporting request sent by the first client, the digital currency exporting request indicating the denomination of the first digital currency; and
generating the first digital currency according to the digital currency exporting request, and recording the available balance corresponding to the first digital currency as the denomination of the first digital currency.

As at least one alternative embodiment, the digital currency payment method provided in the fourth aspect above further includes:
in a case of receiving the first digital currency or the circulation identifier sent by a second currency management apparatus corresponding to the second client, verifying the first digital currency or the circulation identifier;
sending a verification result of the first digital currency or the circulation identifier to the second currency management apparatus; and
in the case where the first digital currency or the circulation identifier passes the verification, updating the available balance of the first digital currency, the available balance after updating indicating a difference between the available balance before updating and the transaction amount.

In a fifth aspect, an embodiment of the present disclosure provides a digital currency payment method. The method is applied to a first currency management apparatus and includes:
receiving a transaction amount sent by a first client corresponding to the first currency management apparatus;
determining whether the transaction amount is less than a denomination of a first digital currency used for payment;
in a case where the transaction amount is less than the denomination of the first digital currency, dividing the first digital currency into a third digital currency and a fourth digital currency, wherein a denomination of the third digital currency indicates the transaction amount, and a denomination of the fourth digital currency indicates a difference between the denomination of the first digital currency and the transaction amount; and
issuing the third digital currency to the first client, so as to enable the first client to make a payment by using the third digital currency.

As at least one alternative embodiment, the digital currency payment method provided in the fifth aspect above further includes:
receiving a digital currency exporting request sent by the first client, the digital currency exporting request indicating the denomination of the first digital currency; and
generating the first digital currency according to the digital currency exporting request, and recording the first digital currency as a digital currency used for payment.

As at least one alternative embodiment, the digital currency payment method provided in the fifth aspect above further includes:
in a case of receiving the third digital currency or a circulation identifier sent by a second currency management apparatus corresponding to a second client, verifying the third digital currency or the circulation identifier;
sending a verification result of the third digital currency or the circulation identifier to the second currency management apparatus; and
in the case where the third digital currency or the circulation identifier passes the verification, updating a digital currency used for payment to the fourth digital currency.

In a sixth aspect, an embodiment of the present disclosure provides a digital currency payment method. The method is applied to a first currency management apparatus and includes:
receiving a first digital currency used for cashing or a circulation identifier corresponding to the first digital currency sent by a second currency management apparatus;
verifying the first digital currency or the circulation identifier according to a digital currency record corresponding to a first client;
sending a verification result of the first digital currency or the circulation identifier to the second currency management apparatus, so as to enable the second currency management apparatus to generate, in a case where the first digital currency or the circulation identifier passes the verification, a second digital currency corresponding to the first digital currency; and
in the case where the first digital currency or the circulation identifier passes the verification, updating the digital currency record corresponding to the first client.

As at least one alternative embodiment, the digital currency payment method provided in the sixth aspect above further includes:
generating a two-dimensional code according to the first digital currency used for payment or the circulation identifier of the first digital currency, and sending the two-dimensional code to the first client.

As at least one alternative embodiment, the digital currency payment method provided in the sixth aspect above further includes:
in a case where the first digital currency is an encrypted first digital currency, or in a case where the circulation identifier is an encrypted circulation identifier, receiving a second key corresponding to an encryption method corresponding to a denomination of the first digital currency sent by the second currency management apparatus; and
verifying the second key according to the digital currency record corresponding to the first client.

In a seventh aspect, an embodiment of the present disclosure provides a digital currency payment method. The method is applied to a second client and includes:
receiving a payment request sent by a first client, the payment request indicating a first digital currency used for payment or a circulation identifier of the first digital currency; and
sending a digital currency cashing request to a second currency management apparatus corresponding to the second client, the digital currency cashing request indicating a transaction amount and the first digital currency or the circulation identifier, so as to enable the second currency management apparatus to cash, for a first currency management apparatus corresponding to the first client, a second digital currency corresponding to the transaction amount.

As at least one alternative embodiment, the digital currency payment method provided in the seventh aspect above further includes:
generating the transaction amount or receiving the transaction amount sent by the first client.

In an eighth aspect, an embodiment of the present disclosure provides a digital currency payment method. The method is applied to a second client and includes:
receiving a payment request sent by a first client, the payment request indicating a third digital currency used for payment or a circulation identifier of the third digital currency; and
sending a digital currency cashing request to a second currency management apparatus corresponding to the second client, the digital currency cashing request the third digital currency or the circulation identifier, so as to enable the second currency management apparatus to cash, for a first currency management apparatus corresponding to the first client, a fifth digital currency corresponding to the third digital currency.

As at least one alternative embodiment, the digital currency payment method provided in the eighth aspect above further includes:
generating a transaction amount and sending the transaction amount to the first client.

In a ninth aspect, an embodiment of the present disclosure provides a digital currency payment method. The method is applied to a second client and includes:
acquiring a two-dimensional code provided by a first client, the two-dimensional code indicating a first digital currency used for payment or a circulation identifier corresponding to the first digital currency; and
sending a digital currency cashing request to a second currency management apparatus corresponding to the second client, the digital currency cashing request indicating the two-dimensional code, or the first digital currency or the circulation identifier acquired by parsing the two-dimensional code, so as to enable the second currency management apparatus to cash, for a first currency management apparatus corresponding to the first client, a second digital currency corresponding to the first digital currency.

As at least one alternative embodiment, the digital currency payment method provided in the ninth aspect above further includes:
in a case where the two-dimensional code is an encrypted two-dimensional code, acquiring a first key corresponding to an encryption method of the two-dimensional code before sending the digital currency cashing request to the second currency management apparatus corresponding to the second client; and
decrypting the two-dimensional code with the first key.

As at least one alternative embodiment, the digital currency payment method provided in the ninth aspect above further includes:
in a case where the first digital currency indicated by the two-dimensional code is an encrypted first digital currency, or in a case where the circulation identifier indicated by the two-dimensional code is an encrypted circulation identifier, acquiring, according to an encryption method corresponding to a denomination of the first digital currency, a second key corresponding to the encryption method; and
sending the digital currency cashing request to the second currency management apparatus corresponding to the second client,
the digital currency cashing request indicating the two-dimensional code, or the first digital currency or the circulation identifier acquired by parsing the two-dimensional code, and the second key.

As at least one alternative embodiment, the two-dimensional code is generated by the first client or the first currency management apparatus according to the first digital currency or the circulation identifier.

As at least one alternative embodiment, the two-dimensional code further indicates one or more of the following information: an identifier of the first currency management apparatus, and a usage scenario of the first digital currency.

In a tenth aspect, an embodiment of the present disclosure provides a digital currency payment method. The method is applied to a second client and includes:
receiving a payment request sent by a first client, the payment request indicating a first digital currency used for payment or a circulation identifier corresponding to the first digital currency; and
sending a digital currency cashing request to a second currency management apparatus corresponding to the second client according to the first digital currency or the circulation identifier, so as to enable the second currency management apparatus to cash, for a first currency management apparatus corresponding to the first client, a second digital currency corresponding to the first digital currency.

As at least one alternative embodiment, the digital currency payment method provided in the tenth aspect above further includes:
in a case where the second currency management apparatus has cashed the second digital currency, receiving the second digital currency issued by the second currency management apparatus.

As at least one alternative embodiment, the second currency management apparatus cashing, for the first currency management apparatus corresponding to the first client, the second digital currency corresponding to the first digital currency includes:
sending the first digital currency or the circulation identifier to the first currency management apparatus, so as to enable the first currency management apparatus to verify the first digital currency or the circulation identifier; and
in a case where the first digital currency or the circulation identifier passes the verification, generating the second digital currency corresponding to the first digital currency, and updating a digital currency record corresponding to the second client.

As at least one alternative embodiment, in a case where the first currency management apparatus is different from the second currency management apparatus, the second currency management apparatus sends the first digital currency or the circulation identifier to the first currency management apparatus via a third party currency management apparatus.

As at least one alternative embodiment, after the first digital currency or the circulation identifier passes the verification, the first currency management apparatus updates a digital currency record corresponding to the first client.

As at least one alternative embodiment, the digital currency payment method provided in the tenth aspect above further includes:
in a case where the first digital currency is an encrypted first digital currency or the circulation identifier is an encrypted circulation identifier, acquiring, according to an encryption method corresponding to a denomination of the first digital currency, a key corresponding to the encryption method; and
sending the digital currency cashing request to the second currency management apparatus corresponding to the second client, the digital currency cashing request indicating the first digital currency or the circulation identifier and the key corresponding to the encryption method.

In an eleventh aspect, an embodiment of the present disclosure provides a digital currency payment method. The method is applied to a second currency management apparatus and includes:
receiving a digital currency cashing request sent by a second client, the digital currency cashing request indicating a transaction amount, and a first digital currency used for payment or a circulation identifier of the first digital currency provided by a first client;
sending the first digital currency or the circulation identifier to a first currency management apparatus corresponding to the first client, so as to enable the first currency management apparatus to verify the first digital currency or the circulation identifier;
receiving a verification result of the first digital currency or the circulation identifier sent by the first currency management apparatus; and
in the case where the first digital currency or the circulation identifier passes the verification, generating a second digital currency corresponding to the transaction amount.

In a twelfth aspect, an embodiment of the present disclosure provides a digital currency payment method. The method is applied to a second currency management apparatus and includes:
receiving a digital currency cashing request sent by a second client, the digital currency cashing request indicating a third digital currency used for payment or a circulation identifier of the third digital currency provided by a first client;
sending the third digital currency or the circulation identifier to a first currency management apparatus corresponding to the first client, so as to enable the first currency management apparatus to verify the third digital currency or the circulation identifier;
receiving a verification result of the third digital currency or the circulation identifier sent by the first currency management apparatus; and
in the case where the third digital currency or the circulation identifier passes the verification, generating a fifth digital currency corresponding to the third digital currency.

In a thirteenth aspect, an embodiment of the present disclosure provides a digital currency payment method. The method is applied to a second currency management apparatus and includes:
receiving a digital currency cashing request sent by a second client, the digital currency cashing request indicating a two-dimensional code provided by a first client, or a first digital currency or a circulation identifier corresponding to the first digital currency acquired by parsing the two-dimensional code;
sending the first digital currency or the circulation identifier to a first currency management apparatus corresponding to the first client, so as to enable the first currency management apparatus to verify the first digital currency or the circulation identifier;
receiving a verification result of the first digital currency or the circulation identifier from the first currency management apparatus; and
in the case where the first digital currency or the circulation identifier passes the verification, generating a second digital currency corresponding to the first digital currency, and updating a digital currency record corresponding to the second client.

As at least one alternative embodiment, according to the digital currency payment method provided in the thirteenth aspect above, in a case where the first digital currency is an encrypted first digital currency, or in the case where the circulation identifier is an encrypted circulation identifier, the digital currency cashing request further indicates a second key corresponding to an encryption method corresponding to a denomination of the first digital currency.

In a fourteenth aspect, an embodiment of the present disclosure provides a first client for digital currency payment. The first client includes: a transaction amount sending module and a payment request sending module;
the transaction amount sending module is configured to send a transaction amount to a first currency management apparatus corresponding to the first client; and
the payment request sending module is configured to send a payment request to a second client according to a processing result of the first currency management apparatus.

As at least one alternative embodiment, in the first client for digital currency payment provided in the fourteenth aspect above,
the transaction amount sending module is further configured to send the transaction amount to the first currency management apparatus corresponding to the first client, so as to enable the first currency management apparatus to determine whether the transaction amount is greater than an available balance of a first digital currency used for payment; and
the payment request sending module is further configured to send, in a case where the transaction amount is not greater than the available balance, the payment request to the second client, the payment request indicating the first digital currency or a circulation identifier of the first digital currency, so as to enable a second currency management apparatus corresponding to the second client to cash, for the first currency management apparatus, a second digital currency corresponding to the transaction amount.

As at least one alternative embodiment, the first client for digital currency payment provided in the fourteenth aspect above further includes: a digital currency receiving module;
the transaction amount sending module is configured to send the transaction amount to the first currency management apparatus corresponding to the first client, so as to enable the first currency management apparatus to divide, in a case where the transaction amount is less than a denomination of a first digital currency used for payment, the first digital currency into a third digital currency and a fourth digital currency, wherein a denomination of the third digital currency indicates the transaction amount, and a denomination of the fourth digital currency indicates a difference between the denomination of the first digital currency and the transaction amount;
the digital currency receiving module is configured to receive the third digital currency issued by the first currency management apparatus; and
the payment request sending module is configured to send the payment request to the second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

In a fifteenth aspect, an embodiment of the present disclosure provides a first client for digital currency payment. The first client includes: a two-dimensional code generating module and a two-dimensional code providing module;
the two-dimensional code generating module is configured to generate a two-dimensional code or receive a two-dimensional code sent by a first currency management apparatus corresponding to the first client, the two-dimensional code indicating a first digital currency used for payment or a circulation identifier of the first digital currency; and
the two-dimensional code providing module is configured to provide the two-dimensional code to a second client.

In a sixteenth aspect, an embodiment of the present disclosure provides a first currency management apparatus for digital currency payment. The first currency management apparatus includes: a transaction amount receiving module, a transaction amount verification module, and a payment request notification module;
the transaction amount receiving module is configured to receive a transaction amount sent by a first client;
the transaction amount verification module is configured to determine whether the transaction amount is greater than an available balance of a first digital currency used for payment; and
the payment request notification module is configured to notify, in a case where the transaction amount is not greater than the available balance, the first client to send a payment request to a second client, the payment request indicating the first digital currency or a circulation identifier of the first digital currency.

In a seventeenth aspect, an embodiment of the present disclosure provides a first currency management apparatus for digital currency payment. The first currency management apparatus includes: a transaction amount receiving module, a second transaction amount verification module, a digital currency division module, and a digital currency issuing module;
the transaction amount receiving module is configured to receive a transaction amount sent by a first client corresponding to the first currency management apparatus;
the second transaction amount verification module is configured to determine whether the transaction amount is less than a denomination of a first digital currency used for payment;
the digital currency division module is configured to divide, in the case where the transaction amount is less than the denomination of the first digital currency, the first digital currency into a third digital currency and a fourth digital currency, wherein a denomination of the third digital currency indicates the transaction amount, and a denomination of the fourth digital currency indicates a difference between the denomination of the first digital currency and the transaction amount; and
the digital currency issuing module is configured to issue the third digital currency to the first client, so as to enable the first client to make a payment by using the third digital currency.

In an eighteenth aspect, an embodiment of the present disclosure provides a first currency management apparatus for digital currency payment. The first currency management apparatus includes: a digital currency receiving module, a digital currency verification module, a verification result sending module, and a currency record updating module;
the digital currency receiving module is configured to receive a first digital currency used for cashing or a circulation identifier corresponding to the first digital currency sent by a second currency management apparatus;
the digital currency verification module is configured to verify the first digital currency or the circulation identifier according to a digital currency record corresponding to a first client;
the verification result sending module is configured to send a verification result of the first digital currency or the circulation identifier to the second currency management apparatus, so as to enable the second currency management apparatus to generate a second digital currency corresponding to the first digital currency in the case where the first digital currency or the circulation identifier passes the verification; and
the currency record updating module is configured to update the digital currency record corresponding to the first client in the case where the first digital currency or the circulation identifier passes the verification.

In a nineteenth aspect, an embodiment of the present disclosure provides a second client for digital currency payment. The second client includes: a payment request receiving module and a digital currency cashing module;
the payment request receiving module is configured to receive a payment request sent by a first client, the payment request indicating a first digital currency used for payment or a circulation identifier of the first digital currency; and
the digital currency cashing module is configured to send a digital currency cashing request to a second currency management apparatus corresponding to the second client, the digital currency cashing request indicating a transaction amount and the first digital currency or the circulation identifier, so as to enable the second currency management apparatus to cash, for a first currency management apparatus corresponding to the first client, a second digital currency corresponding to the transaction amount.

In a twentieth aspect, an embodiment of the present disclosure provides a second client for digital currency payment. The second client includes: a payment request receiving module and a digital currency cashing module;
the payment request receiving module is configured to receive a payment request sent by a first client, the payment request indicating a third digital currency used for payment or a circulation identifier of the third digital currency; and
the digital currency cashing module is configured to send a digital currency cashing request to a second currency management apparatus corresponding to the second client, the digital currency cashing request indicating the third digital currency or the circulation identifier, so as to enable the second currency management apparatus to cash, for a first currency management apparatus corresponding to the first client, a fifth digital currency corresponding to the third digital currency.

In a twenty-first aspect, an embodiment of the present disclosure provides a second client for digital currency payment. The second client includes: a two-dimensional code acquiring module and a second digital currency cashing module;
the two-dimensional code acquiring module is configured to acquire a two-dimensional code provided by a first client, the two-dimensional code indicating a first digital currency used for payment or a circulation identifier corresponding to the first digital currency; and
the second digital currency cashing module is configured to send a digital currency cashing request to a second currency management apparatus corresponding to the second client, the digital currency cashing request indicating the two-dimensional code, or the first digital currency or the circulation identifier acquired by parsing the two-dimensional code, so as to enable the second currency management apparatus to cash, for a first currency management apparatus corresponding to the first client, a second digital currency corresponding to the first digital currency.

In a twenty-second aspect, an embodiment of the present disclosure provides a digital currency payment apparatus. The apparatus is applied to a second client and includes: a payment request receiving module and a digital currency cashing module;
the payment request receiving module is configured to receive a payment request sent by a first client, the payment request indicating a first digital currency used for payment or a circulation identifier corresponding to the first digital currency; and
the digital currency cashing module is configured to send a digital currency cashing request to a second currency management apparatus corresponding to the second client according to the first digital currency or the circulation identifier, so as to enable the second currency management apparatus to cash, for a first currency management apparatus corresponding to the first client, a second digital currency corresponding to the first digital currency.

As at least one alternative embodiment, the digital currency payment apparatus provided in the twenty-second aspect above further includes: a digital currency receiving module; and
the digital currency receiving module is configured to receive, in the case where the second currency management apparatus has cashed the second digital currency, the second digital currency issued by the second currency management apparatus.

In a twenty-third aspect, an embodiment of the present disclosure provides a second currency management apparatus for digital currency payment. The second currency management apparatus includes: a cashing request receiving module, a digital currency sending module, a verification result receiving module, and a digital currency generating module;
the cashing request receiving module is configured to receive a digital currency cashing request sent by a second client, the digital currency cashing request indicating a transaction amount, and a first digital currency used for payment or a circulation identifier of the first digital currency provided by a first client;
the digital currency sending module is configured to send the first digital currency or the circulation identifier to a first currency management apparatus corresponding to the first client, so as to enable the first currency management apparatus to verify the first digital currency or the circulation identifier;
the verification result receiving module is configured to receive a verification result of the first digital currency or the circulation identifier sent by the first currency management apparatus; and
the digital currency generating module is configured to generate a second digital currency corresponding to the transaction amount in the case where the first digital currency or the circulation identifier passes the verification.

In a twenty-fourth aspect, an embodiment of the present disclosure provides a second currency management apparatus for digital currency payment. The second currency management apparatus includes: a cashing request receiving module, a digital currency sending module, a verification result receiving module, and a digital currency generating module;
the cashing request receiving module is configured to receive a digital currency cashing request sent by a second client, the digital currency cashing request indicating a third digital currency used for payment or a circulation identifier of the third digital currency provided by a first client;
the digital currency sending module is configured to send the third digital currency or the circulation identifier to a first currency management apparatus corresponding to the first client, so as to enable the first currency management apparatus to verify the third digital currency or the circulation identifier;
the verification result receiving module is configured to receive a verification result of the third digital currency or the circulation identifier sent by the first currency management apparatus; and
the digital currency generating module is configured to generate, in the case where the third digital currency or the circulation identifier passes the verification, a fifth digital currency corresponding to the third digital currency.

In a twenty-fifth aspect, an embodiment of the present disclosure provides a second currency management apparatus for digital currency payment. The second currency management apparatus includes: a cashing request receiving module, a digital currency sending module, a verification result receiving module, and a digital currency generating module;
the cashing request receiving module is configured to receive a digital currency cashing request sent by a second client, the digital currency cashing request indicating a two-dimensional code provided by a first client, or a first digital currency or a circulation identifier corresponding to the first digital currency acquired by parsing the two-dimensional code;
the digital currency sending module is configured to send the first digital currency or the circulation identifier to a first currency management apparatus corresponding to the first client, so as to enable the first currency management apparatus to verify the first digital currency or the circulation identifier;
the verification result receiving module is configured to receive a verification result of the first digital currency or the circulation identifier from the first currency management apparatus; and
the digital currency generating module is configured to generate a second digital currency corresponding to the first digital currency and update a digital currency record corresponding to the second client in the case where the first digital currency or the circulation identifier passes the verification.

In a twenty-sixth aspect, an embodiment of the present disclosure provides a digital currency payment system. The digital currency payment system includes: a first client, a second client, a first currency management apparatus corresponding to the first client, and a second currency management apparatus corresponding to the second client.

As at least one alternative embodiment, in the digital currency payment system provided in the twenty-sixth aspect above,
the first client is configured to: send a transaction amount to the first currency management apparatus and send, in the case where the transaction amount is not greater than an available balance of a first digital currency used for payment, a payment request to the second client, the payment request indicating the first digital currency or a circulation identifier of the first digital currency;
the second client is configured to: receive the payment request sent by the first client, the payment request indicating the first digital currency used for payment or the circulation identifier of the first digital currency, and send a digital currency cashing request to the second currency management apparatus corresponding to the second client, the digital currency cashing request indicating the transaction amount and the first digital currency or the circulation identifier;
the first currency management apparatus is configured to: receive the transaction amount sent by the first client, determine whether the transaction amount is greater than the available balance of the first digital currency used for payment, and notify, in the case where the transaction amount is not greater than the available balance, the first client to send the payment request to the second client; and
the second currency management apparatus is configured to: receive the digital currency cashing request sent by the second client, and cash, for the first currency management apparatus corresponding to the first client, a second digital currency corresponding to the transaction amount.

As at least one alternative embodiment, in the digital currency payment system provided in the twenty-sixth aspect above,
the first client is configured to: send a transaction amount to the first currency management apparatus, receive, in the case where the transaction amount is less than a denomination of a first digital currency used for payment, a third digital currency issued by the first currency management apparatus, and send a payment request to the second client, the payment request indicating the third digital currency or a circulation identifier of the third digital currency;
the second client is configured to: receive the payment request sent by the first client and send a digital currency cashing request to the second currency management apparatus corresponding to the second client, the digital currency cashing request indicating the third digital currency or the circulation identifier of the third digital currency;
the first currency management apparatus is configured to: receive the transaction amount sent by the first client, divide, in the case where the transaction amount is less than the denomination of the first digital currency used for payment, the first digital currency into the third digital currency and a fourth digital currency, wherein a denomination of the third digital currency indicates the transaction amount, and a denomination of the fourth digital currency indicates a difference between the denomination of the first digital currency and the transaction amount, and issue the third digital currency to the first client; and
the second currency management apparatus is configured to: receive the digital currency cashing request sent by the second client, and cash, for the first currency management apparatus corresponding to the first client, a fifth digital currency corresponding to the third digital currency.

As at least one alternative embodiment, in the digital currency payment system provided in the twenty-sixth aspect above,
the first client is configured to provide a two-dimensional code to the second client, the two-dimensional code indicating a first digital currency used for payment or a circulation identifier corresponding to the first digital currency;
the second client is configured to receive the two-dimensional code and send a digital currency cashing request to the second currency management apparatus, the digital currency cashing request indicating the two-dimensional code, or the first digital currency or the circulation identifier acquired by parsing the two-dimensional code;
the second currency management apparatus is configured to cash, for the first currency management apparatus, a second digital currency corresponding to the first digital currency according to the digital currency cashing request; and
the first currency management apparatus is configured to verify the first digital currency or the circulation identifier.

As at least one alternative embodiment, in the digital currency payment system provided in the twenty-sixth aspect above,
the first client is configured to send a payment request to the second client;
the second client is configured to: receive the payment request sent by the first client, the payment request indicating a first digital currency used for payment or a circulation identifier corresponding to the first digital currency, and send a digital currency cashing request to the second currency management apparatus corresponding to the second client according to the first digital currency or the circulation identifier;
the second currency management apparatus is configured to cash, for the first currency management apparatus corresponding to the first client, a second digital currency corresponding to the first digital currency according to the digital currency cashing request; and
the first currency management apparatus is configured to verify the first digital currency or the circulation identifier.

As at least one alternative embodiment, the digital currency payment system provided in the twenty-sixth aspect above further includes: a third party currency management apparatus; and
the third party currency management apparatus is configured to send, in the case where the first currency management apparatus is different from the second currency management apparatus, the first digital currency or the circulation identifier to the first currency management apparatus.

The above application has the following advantages or beneficial effects: by maintaining the available balance of the first digital currency used for payment through the first currency management apparatus corresponding to the first client, and comparing the available balance with the transaction amount, a payment transaction may be conducted normally when and only when the transaction amount is not greater than the available balance, thereby achieving control over the transaction amount, avoiding a user of the first client from overdrawing an account for illegal transactions, and ensuring the security and reliability in a digital currency transaction process.

Further effects of the above-mentioned non-conventional alternatives will be described below in connection with the detailed description.

### Brief Description of the Drawings

The accompanying drawings are included to provide a better understanding of the present disclosure and are not to be construed as unduly limiting the present disclosure.
Fig. 1 is a schematic diagram of a main flow of a digital currency payment method applied to a first client according to an embodiment of the present disclosure.
Fig. 2 is a schematic diagram of a main flow of another digital currency payment method applied to a first client according to an embodiment of the present disclosure.
Fig. 3 is a schematic diagram of a main flow of a digital currency payment method applied to a first currency management apparatus according to an embodiment of the present disclosure.
Fig. 4 is a schematic diagram of a main flow of another digital currency payment method applied to a first currency management apparatus according to an embodiment of the present disclosure.
Fig. 5 is a schematic diagram of a main flow of a digital currency payment method applied to a second client according to an embodiment of the present disclosure.
Fig. 6 is a schematic diagram of a main flow of a digital currency payment method applied to a second currency management apparatus according to an embodiment of the present disclosure.
Fig. 7 is a schematic diagram of main modules of a first client for digital currency payment according to an embodiment of the present disclosure.
Fig. 8 is a schematic diagram of main modules of a first currency management apparatus for digital currency payment according to an embodiment of the present disclosure.
Fig. 9 is a schematic diagram of main modules of a second client for digital currency payment according to an embodiment of the present disclosure.
Fig. 10 is a schematic diagram of main modules of a second currency management apparatus for digital currency payment according to an embodiment of the present disclosure.
Fig. 11 is a schematic diagram of a main structure of a digital currency payment system according to an embodiment of the present disclosure.
Fig. 12 is a schematic diagram of a main flow of a digital currency payment method applied to a digital currency payment system according to an embodiment of the present disclosure.
Fig. 13 is a schematic diagram of a main flow of a digital currency payment method applied to a first client according to an embodiment of the present disclosure.
Fig. 14 is a schematic diagram of a main flow of another digital currency payment method applied to a first client according to an embodiment of the present disclosure.
Fig. 15 is a schematic diagram of a main flow of a digital currency payment method applied to a first currency management apparatus according to an embodiment of the present disclosure.
Fig. 16 is a schematic diagram of a main flow of another digital currency payment method applied to a first currency management apparatus according to an embodiment of the present disclosure.
Fig. 17 is a schematic diagram of a main flow of a digital currency payment method applied to a second client according to an embodiment of the present disclosure.
Fig. 18 is a schematic diagram of a main flow of a digital currency payment method applied to a second currency management apparatus according to an embodiment of the present disclosure.
Fig. 19 is a schematic diagram of main modules of a first client for digital currency payment according to an embodiment of the present disclosure.
Fig. 20 is a schematic diagram of main modules of a first currency management apparatus for digital currency payment according to an embodiment of the present disclosure.
Fig. 21 is a schematic diagram of main modules of a second client for digital currency payment according to an embodiment of the present disclosure.
Fig. 22 is a schematic diagram of main modules of a second currency management apparatus for digital currency payment according to a second aspect of an embodiment of the present disclosure.
Fig. 23 is a schematic diagram of a main flow of a digital currency payment method applied to a digital currency payment system according to an embodiment of the present disclosure.
Fig. 24 is a schematic diagram of a main flow of a digital currency payment method applied to a second client according to an embodiment of the present disclosure.
Fig. 25 is a schematic diagram of a main flow of another digital currency payment method applied to a second client according to an embodiment of the present disclosure.
Fig. 26 is a schematic diagram of a main flow of yet another digital currency payment method applied to a second client according to an embodiment of the present disclosure.
Fig. 27 is a schematic diagram of a main flow of a digital currency payment method applied to a second currency management apparatus according to an embodiment of the present disclosure.
Fig. 28 is a schematic diagram of a main flow of a digital currency payment method applied to a first client according to an embodiment of the present disclosure.
Fig. 29 is a schematic diagram of a main flow of another digital currency payment method applied to a first client according to a third aspect of an embodiment of the present disclosure.
Fig. 30 is a schematic diagram of a main flow of a digital currency payment method applied to a first currency management apparatus according to an embodiment of the present disclosure.
Fig. 31 is a schematic diagram of a main flow of another digital currency payment method applied to a first currency management apparatus according to an embodiment of the present disclosure.
Fig. 32 is a schematic diagram of main modules of a second client for digital currency payment according to a third aspect of an embodiment of the present disclosure.
Fig. 33 is a schematic diagram of main modules of a second currency management apparatus for digital currency payment according to an embodiment of the present disclosure.
Fig. 34 is a schematic diagram of main modules of a first client for digital currency payment according to an embodiment of the present disclosure.
Fig. 35 is a schematic diagram of main modules of a first currency management apparatus for digital currency payment according to an embodiment of the present disclosure.
Fig. 36 is a schematic diagram of a main flow of a digital currency payment method applied to a digital currency payment system according to an embodiment of the present disclosure.
Fig. 37 is a schematic diagram of a main flow of a digital currency payment method applied to a second client according to a fourth aspect of an embodiment of the present disclosure.
Fig. 38 is a schematic diagram of a main flow of another digital currency payment method applied to a second client according to an embodiment of the present disclosure.
Fig. 39 is a schematic diagram of a main flow of yet another digital currency payment method applied to a second client according to an embodiment of the present disclosure.
Fig. 40 is a schematic diagram of main modules of a digital currency payment apparatus according to an embodiment of the present disclosure.
Fig. 41 is a schematic diagram of a main structure of a digital currency payment system according to an embodiment of the present disclosure.
Fig. 42 is a schematic diagram of a main flow of a digital currency payment method applied to a digital currency payment system according to an embodiment of the present disclosure.
Fig. 43 is a diagram of an exemplary system architecture to which embodiments of the present disclosure may be applied.
Fig. 44 is a schematic structural diagram of a computer system suitable for implementing a terminal device or server according to an embodiment of the present disclosure.

### Detailed Description of the Embodiments

Exemplary embodiments of the present disclosure will be described below with reference to the accompanying drawings, where the various details of the embodiments of the present disclosure are set forth to aid in understanding, which are to be considered exemplary only. Accordingly, a person of ordinary skill in the art will recognize that various changes and modifications may be made to the embodiments described herein without departing from the scope and spirit of the present disclosure. Similarly, for clarity and conciseness, the description of well-known functions and structures is omitted from the following description.

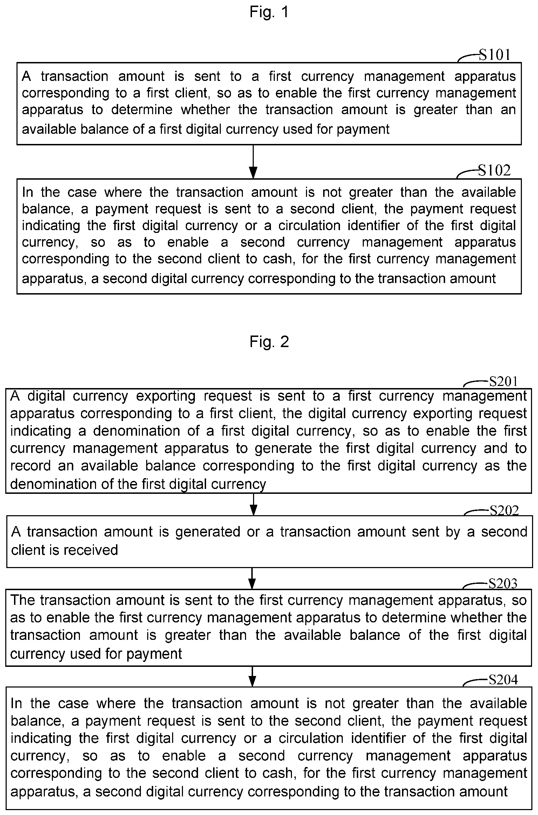

Fig. 1 is a schematic diagram of a main flow of a digital currency payment method applied to a first client according to a first aspect of an embodiment of the present disclosure. As shown in Fig. 1, the digital currency payment method may include the following steps:
Step S101: a transaction amount is sent to a first currency management apparatus corresponding to the first client, so as to enable the first currency management apparatus to determine whether the transaction amount is greater than an available balance of a first digital currency used for payment.

A digital currency is a currency that may be used to replace a paper currency for a variety of circulation operations, for example, making payment using the digital currency to achieve a transfer of a holder of the digital currency, or directly transferring the digital currency. For example, the digital currency includes one or more of the following information: a circulation identifier of the digital currency, an identifier of a digital currency management apparatus to which the digital currency belongs, and a signature of the digital currency management apparatus. The circulation identifier of the digital currency refers to a unique circulation identifier (e.g., a serial number) corresponding to the digital currency, which may be in the form of a character string or a two-dimensional code or the like, so as to facilitate the circulation of the digital currency.

The transaction amount may refer to either an amount generated by the first client according to an actual amount to be paid, or a transaction amount received by the first client from a second client. Thus, before sending the transaction amount to the first currency management apparatus, the first client is further required to generate the transaction amount or receive the transaction amount sent by the second client.

The available balance of the first digital currency is the maximum amount of the first digital currency used for payment that is currently available for payment. For example, before sending the transaction amount to the first currency management apparatus, the first client is further required to send a digital currency exporting request to the first currency management apparatus in advance, the digital currency exporting request indicating a denomination of the first digital currency, so as to enable the first currency management apparatus to generate the first digital currency and to record the available balance corresponding to the first digital currency as the denomination of the first digital currency. That is, an initial available balance of the first digital currency is the denomination of the first digital currency, and the available balance of the first digital currency is progressively reduced as a payment transaction is performed.

On this basis, upon receiving the transaction amount sent by the first client, the first currency management apparatus determines whether the transaction amount is greater than the available balance of the first digital currency. If the transaction amount is not greater than the available balance, it indicates that the available balance is sufficient to cover the transaction amount, and the transaction may be performed normally using the first digital currency. If the transaction amount is greater than the available balance, it indicates that the available balance is insufficient to cover the transaction amount, and it is not possible to use the first digital currency to continue a normal payment transaction. In this way, by comparing the transaction amount with the available balance, the amount of money that may be normally used for transactions may be controlled, it is avoided that a user of the first client overdraws an account balance for illegal transactions, and the security and reliability of the digital currency transaction process are further improved.

Step S102: In the case where the transaction amount is not greater than the available balance, a payment request is sent to a second client, the payment request indicating the first digital currency or a circulation identifier of the first digital currency, so as to enable a second currency management apparatus corresponding to the second client to cash, for the first currency management apparatus, a second digital currency corresponding to the transaction amount.

As at least one alternative embodiment, upon receiving the payment request sent by the first client, the second client sends a digital currency cashing request to the second currency management apparatus, the digital currency cashing request indicating the transaction amount and the first digital currency or the identifier of the first digital currency. Based on this, the second currency management apparatus sends the first digital currency or the circulation identifier of the first digital currency to the first currency management apparatus, so as to enable the first currency management apparatus to verify the first digital currency or the circulation identifier of the first digital currency; and generates the second digital currency corresponding to the transaction amount in the case where the first digital currency or the circulation identifier of the first digital currency passes the verification, thereby achieving transfer of the digital currency between the first client and the second client.

It is to be understood that the second currency management apparatus shall update a digital currency record corresponding to the second client after the generation of the second digital currency, thus managing the digital currency.

Accordingly, in the case where the second currency management apparatus has cashed the second digital currency, the first currency management apparatus updates the available balance of the first digital currency, the available balance after updating indicating a difference between the available balance before updating and the transaction amount. In this way, the balance of the total amount of a digital currency is ensured in the digital currency payment process.

It is worth mentioning that the currency management apparatuses corresponding to the first client and the second client may or may not be the same, and in order to regulate the currency circulation between different currency management apparatuses and avoid illegal transactions between the different currency management apparatuses to further ensure the legitimacy and security of the digital currency, in the case where the first currency management apparatus is different from the second currency management apparatus, the second currency management apparatus sends the first digital currency or the circulation identifier to the first currency management apparatus via a third party currency management apparatus that regulates the different currency management apparatuses. At the same time, upon verifying the first digital currency or the circulation identifier of the first digital currency, the first currency management apparatus also sends a corresponding verification result to the second currency management apparatus via the third party currency management apparatus.

In addition, to further improve the security in the digital currency payment process, the first client may encrypt the first digital currency or the circulation identifier corresponding to the first digital currency, i.e., set a payment password. The payment transaction of the digital currency may be completed normally when and only when the second client acquires the correct payment password, so as to avoid illegal transactions by illegal clients. As at least one alternative embodiment, encryption methods that may be used include, but are not limited to, any one or a combination of string encryption (letters, numbers, or a combination of letters and numbers), question and answer, voiceprint recognition, face recognition, and picture recognition.

Based on the above embodiments, by maintaining the available balance of the first digital currency used for payment through the first currency management apparatus corresponding to the first client, and comparing the available balance with the transaction amount, a payment transaction may be conducted normally when and only when the transaction amount is not greater than the available balance, thereby achieving control over the transaction amount, avoiding a user of the first client from overdrawing an account for illegal transactions, and ensuring the security and reliability of the digital currency transaction process.

Referring to Fig. 2, according to the above embodiment related to Fig. 1, an embodiment of the present disclosure provides a digital currency payment method applied to a first client. The method may include the following steps:
Step S201: a digital currency exporting request is sent to a first currency management apparatus corresponding to the first client, the digital currency exporting request indicating a denomination of a first digital currency, so as to enable the first currency management apparatus to generate the first digital currency and to record an available balance corresponding to the first digital currency as the denomination of the first digital currency.
Step S202: a transaction amount is generated or a transaction amount sent by a second client is received.
Step S203: the transaction amount is sent to the first currency management apparatus, so as to enable the first currency management apparatus to determine whether the transaction amount is greater than the available balance of the first digital currency used for payment.
Step S204: In the case where the transaction amount is not greater than the available balance, a payment request is sent to the second client, the payment request indicating the first digital currency or a circulation identifier of the first digital currency, so as to enable a second currency management apparatus corresponding to the second client to cash, for the first currency management apparatus, a second digital currency corresponding to the transaction amount.

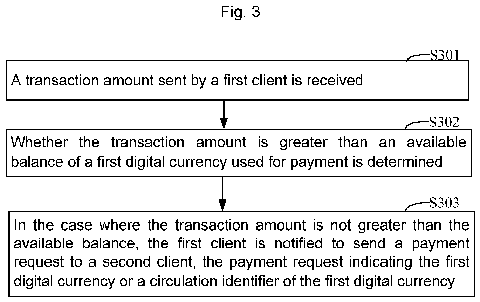

Referring to Fig. 3, corresponding to the above embodiment illustrated in Fig. 1 or Fig. 2, an embodiment of the present disclosure provides a digital currency payment method applied to a first currency management apparatus. The method may specifically include the following steps:
Step S301: a transaction amount sent by a first client is received.

The transaction amount may refer to either an amount generated by the first client according to an actual amount to be paid, or a transaction amount received by the first client from a second client. Thus, before sending the transaction amount to the first currency management apparatus, the first client is further required to generate the transaction amount or receive the transaction amount sent by the second client.

Step S302: whether the transaction amount is greater than an available balance of a first digital currency used for payment is determined.

It is to be understood that before receiving the transaction amount sent by the first client, the first currency management apparatus also receives a digital currency exporting request sent by the first client, the digital currency exporting request indicating a denomination of the first digital currency; generates the first digital currency according to the digital currency exporting request, and records the available balance corresponding to the first digital currency as the denomination of the first digital currency. That is, an initial available balance of the first digital currency is the denomination of the first digital currency, and the available balance of the first digital currency is progressively reduced as a payment transaction is carried out.

As at least one alternative embodiment, taking the available balance of the first digital currency being 100 as an example for illustration, if the transaction amount is 50, it indicates that the available balance of 100 is sufficient to cover the transaction amount of 50, and the transaction may be performed normally using the first digital currency; and if the transaction amount is 150, it indicates that the available balance of 100 is insufficient to cover the transaction amount of 150, and it is not possible to use the first digital currency to continue the normal payment transaction. In this way, by comparing the transaction amount with the available balance, the amount of money that may be normally used for transactions may be controlled, it is avoided that a user of the first client overdraws an account balance for illegal transactions, and the security and reliability of the digital currency transaction process are further improved.

Step S303: In the case where the transaction amount is not greater than the available balance, the first client is notified to send a payment request to a second client, the payment request indicating the first digital currency or a circulation identifier of the first digital currency.

Furthermore, upon receiving the payment request sent by the first client, the second client sends a digital currency cashing request to a second currency management apparatus, the digital currency cashing request indicating the transaction amount and the first digital currency or the identifier of the first digital currency. Based on this, the second currency management apparatus sends the first digital currency or the circulation identifier of the first digital currency to the first currency management apparatus, so as to enable the first currency management apparatus to verify the first digital currency or the circulation identifier of the first digital currency.

On this basis, upon receiving the first digital currency or the circulation identifier sent by the second currency management apparatus corresponding to the second client, the first currency management apparatus verifies the first digital currency or the circulation identifier as follows: determining whether the first digital currency or the circulation identifier is a first digital currency that has been recorded or stored, so as to verify the legitimacy of the source of the digital currency; or determining, according to an identifier of a currency management apparatus indicated by the first digital currency, whether the identifier of the currency management apparatus is consistent with an identifier of the first currency management apparatus to verify the legitimacy of the source of the digital currency; or performing verification according to a signature of the currency management apparatus included in the first digital currency. For example, if the signature of the currency management apparatus is generated using an asymmetric cryptographic algorithm, the first currency management apparatus may decrypt the signature of the currency management apparatus in the first digital currency by using a private key corresponding to a public key for generating signature information, so as to verify the reliability of the signature information. In this way, both the legitimacy of the source of the first digital currency and the security of digital currency cashing may be ensured.

In the case where the first digital currency or the circulation identifier passes the verification, the available balance of the first digital currency is updated, and the available balance after updating indicates a difference between the available balance before updating and the transaction amount. For example, if the available balance before updating is 100 and the transaction amount is 40, the available balance after updating is 60.

At the same time, the first currency management apparatus sends a verification result of the first digital currency or the circulation identifier to the second currency management apparatus, so as to enable the second currency management apparatus to generate a second digital currency corresponding to the transaction amount in the case where the first digital currency or the circulation identifier of the first digital currency passes the verification, thereby achieving transfer of the digital currency between the first client and the second client.

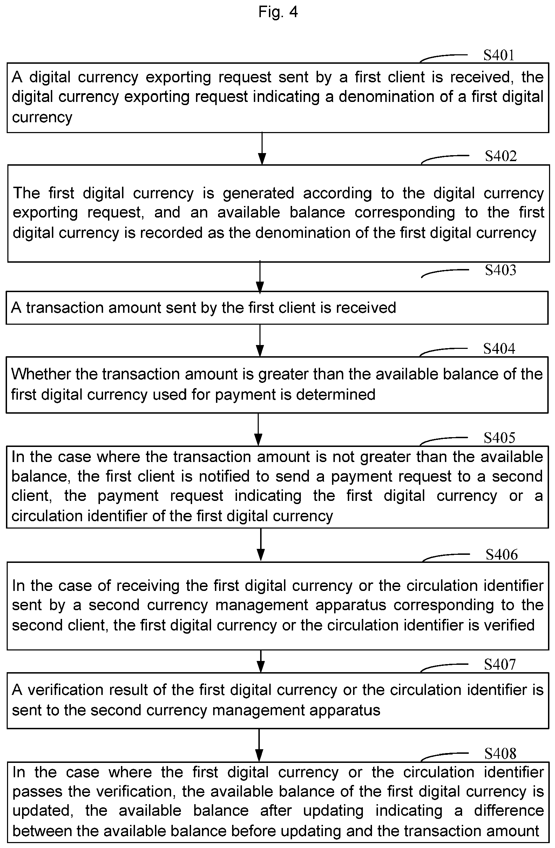

Referring to Fig. 4, according to the above embodiment related to Fig. 3, an embodiment of the present disclosure provides another digital currency payment method applied to a first currency management apparatus. The method may specifically include the following steps:
Step S401: a digital currency exporting request sent by a first client is received, the digital currency exporting request indicating a denomination of a first digital currency.
Step S402: the first digital currency is generated according to the digital currency exporting request, and an available balance corresponding to the first digital currency is recorded as the denomination of the first digital currency.
Step S403: a transaction amount sent by the first client is received.
Step S404: whether the transaction amount is greater than the available balance of the first digital currency used for payment is determined.
Step S405: In the case where the transaction amount is not greater than the available balance, the first client is notified to send a payment request to a second client, the payment request indicating the first digital currency or a circulation identifier of the first digital currency.
Step S406: In the case of receiving the first digital currency or the circulation identifier sent by a second currency management apparatus corresponding to the second client, the first digital currency or the circulation identifier is verified.
Step S407: a verification result of the first digital currency or the circulation identifier is sent to the second currency management apparatus.
Step S408: In the case where the first digital currency or the circulation identifier passes the verification, the available balance of the first digital currency is updated, the available balance after updating indicating a difference between the available balance before updating and the transaction amount.

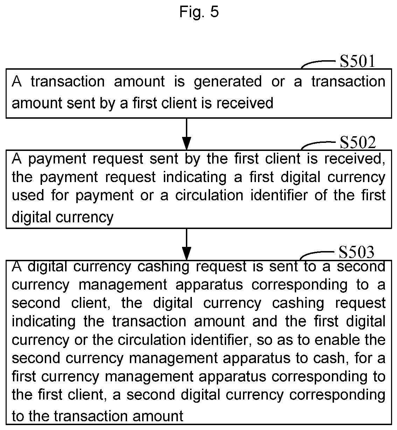

Referring to Fig. 5, corresponding to the above embodiment illustrated in Fig. 1 or Fig. 2, an embodiment of the present disclosure provides a digital currency payment method applied to a second client. The method may include the following steps:
Step S501: a transaction amount is generated or a transaction amount sent by a first client is received.
Step S502: a payment request sent by the first client is received, the payment request indicating a first digital currency used for payment or a circulation identifier of the first digital currency.
Step S503: a digital currency cashing request is sent to a second currency management apparatus corresponding to the second client, the digital currency cashing request indicating the transaction amount and the first digital currency or the circulation identifier, so as to enable the second currency management apparatus to cash, for a first currency management apparatus corresponding to the first client, a second digital currency corresponding to the transaction amount.

As at least one alternative embodiment, upon receiving the payment request sent by the first client, the second client sends the digital currency cashing request to the second currency management apparatus, the digital currency cashing request indicating the transaction amount and the first digital currency or the identifier of the first digital currency. Based on this, the second currency management apparatus sends the first digital currency or the circulation identifier of the first digital currency to the first currency management apparatus, so as to enable the first currency management apparatus to verify the first digital currency or the circulation identifier of the first digital currency; and generates the second digital currency corresponding to the transaction amount in the case where the first digital currency or the circulation identifier of the first digital currency passes the verification, thereby achieving transfer of the digital currency between the first client and the second client.

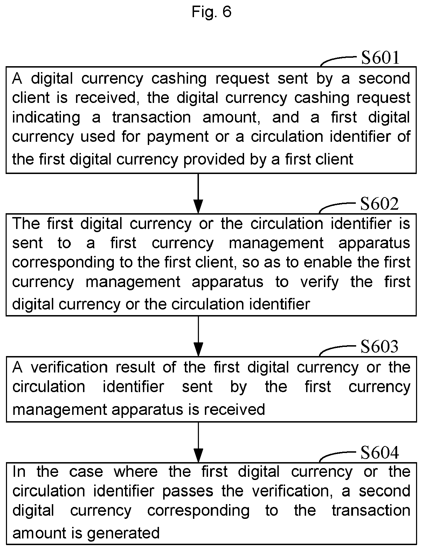

Referring to Fig. 6, corresponding to the above embodiment illustrated in Fig. 1 or Fig. 2, an embodiment of the present disclosure provides a digital currency payment method applied to a second currency management apparatus. The method may specifically include the following steps:
Step S601: a digital currency cashing request sent by a second client is received, the digital currency cashing request indicating a transaction amount, and a first digital currency used for payment or a circulation identifier of the first digital currency provided by a first client.
Step S602: the first digital currency or the circulation identifier is sent to a first currency management apparatus corresponding to the first client, so as to enable the first currency management apparatus to verify the first digital currency or the circulation identifier.
Step S603: a verification result of the first digital currency or the circulation identifier sent by the first currency management apparatus is received.
Step S604: In the case where the first digital currency or the circulation identifier passes the verification, a second digital currency corresponding to the transaction amount is generated.

It is to be understood that, after generating the second digital currency, the second currency management apparatus updates a digital currency record corresponding to the second client, so as to achieve management on the digital currency. In addition, the generated second digital currency or a circulation identifier of the second digital currency may be issued to the second client according to actual demands.

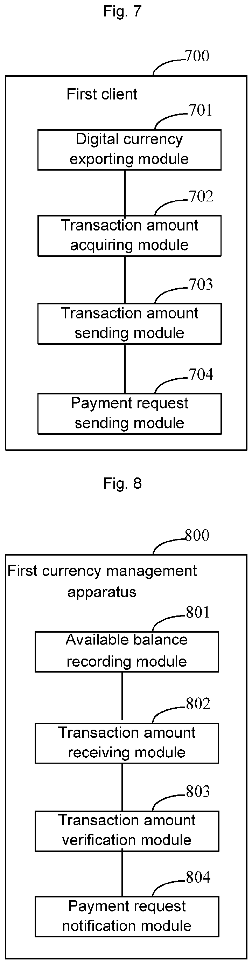

Referring to Fig. 7, according to the above embodiment related to Fig. 1 or Fig. 2, an embodiment of the present disclosure provides a first client 700 for digital currency payment. The first client includes: a transaction amount sending module 703 and a payment request sending module 704.

The transaction amount sending module 703 is configured to send a transaction amount to a first currency management apparatus corresponding to the first client, so as to enable the first currency management apparatus to determine whether the transaction amount is greater than an available balance of a first digital currency used for payment.

The payment request sending module 704 is configured to send, in the case where the transaction amount is not greater than the available balance, a payment request to a second client, the payment request indicating the first digital currency or a circulation identifier of the first digital currency, so as to enable a second currency management apparatus corresponding to the second client to cash, for the first currency management apparatus, a second digital currency corresponding to the transaction amount.

In one optional implementation, the first client further includes: a digital currency exporting module 701.

The digital currency exporting module is further configured to send a digital currency exporting request to the first currency management apparatus, the digital currency exporting request indicating a denomination of the first digital currency, so as to enable the first currency management apparatus to generate the first digital currency and to record the available balance corresponding to the first digital currency as the denomination of the first digital currency.

In one optional implementation, in the case where the second currency management apparatus has cashed the second digital currency, the first currency management apparatus updates the available balance of the first digital currency, and the available balance after updating indicates a difference between the available balance before updating and the transaction amount.

In one optional implementation, the first client further includes: a transaction amount acquiring module 702.

The transaction amount acquiring module is configured to generate, before sending the transaction amount to the first currency management apparatus, the transaction amount or receive the transaction amount sent by the second client.

Referring to Fig. 8, corresponding to the above embodiment illustrated in Fig. 3, an embodiment of the present disclosure provides a first currency management apparatus 800 for digital currency payment. The first currency management apparatus includes: a transaction amount receiving module 802, a first transaction amount verification module 803, and a payment request notification module 804.

The transaction amount receiving module 802 is configured to receive a transaction amount send by a first client. The first transaction amount verification module 803 is configured to determine whether the transaction amount is greater than an available balance of a first digital currency used for payment.

The payment request notification module 804 is configured to notify, in the case where the transaction amount is not greater than the available balance, the first client to send a payment request to a second client, the payment request indicating the first digital currency or a circulation identifier of the first digital currency.

In one optional implementation, the first currency management apparatus further includes: an available balance recording module 801.

The available balance recording module is configured to: receive a digital currency exporting request sent by the first client, the digital currency exporting request indicating a denomination of the first digital currency,
generate the first digital currency according to the digital currency exporting request, and record the available balance corresponding to the first digital currency as the denomination of the first digital currency.

In one optional implementation, the available balance recording module 802 is further configured to:
verify, in the case of receiving the first digital currency or the circulation identifier sent by a second currency management apparatus corresponding to the second client, the first digital currency or the circulation identifier;
send a verification result of the first digital currency or the circulation identifier to the second currency management apparatus; and
update, in the case where the first digital currency or the circulation identifier passes the verification, the available balance of the first digital currency, the available balance after updating indicating a difference between the available balance before updating and the transaction amount.

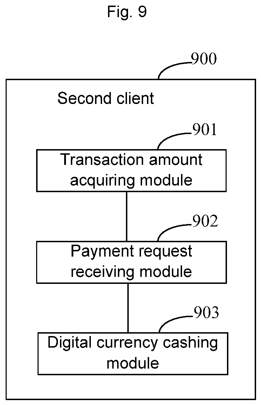

Referring to Fig. 9, corresponding to the above embodiment illustrated in Fig. 5, an embodiment of the present disclosure provides a second client 900 for digital currency payment. The second client includes: a payment request receiving module 902 and a first digital currency cashing module 903.

The payment request receiving module 902 is configured to receive a payment request sent by a first client, the payment request indicating a first digital currency used for payment or a circulation identifier of the first digital currency.

The first digital currency cashing module 903 is configured to send a digital currency cashing request to a second currency management apparatus corresponding to the second client, the digital currency cashing request indicating a transaction amount and the first digital currency or the circulation identifier, so as to enable the second currency management apparatus to cash, for a first currency management apparatus corresponding to the first client, a second digital currency corresponding to the transaction amount.

In one optional implementation, the second client further includes: a transaction amount acquiring module 901. The transaction amount acquiring module 901 is configured to generate the transaction amount or receive the transaction amount sent by the first client.

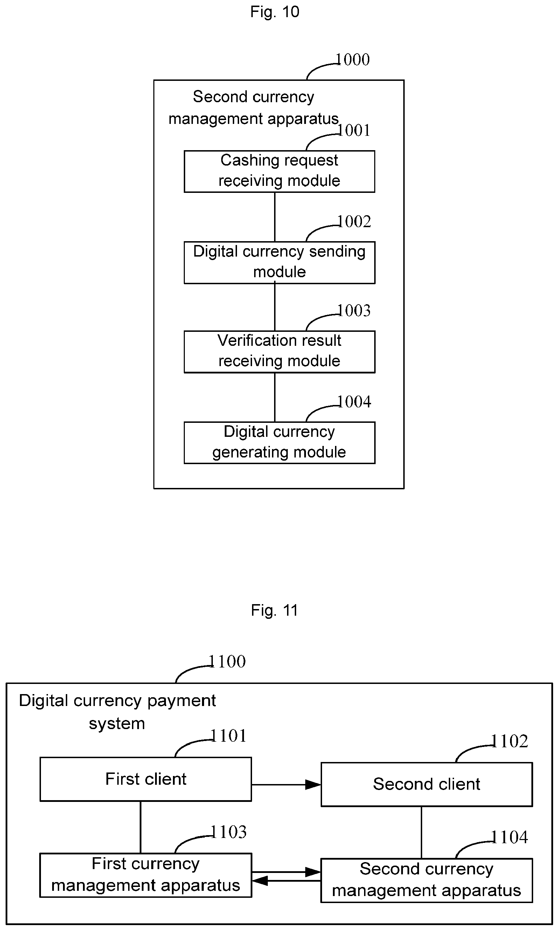

Referring to Fig. 10, corresponding to the above embodiment illustrated in Fig. 1 or Fig. 2, an embodiment of the present disclosure provides a second currency management apparatus 1000 for digital currency payment. The second currency management apparatus includes: a cashing request receiving module 1001, a digital currency sending module 1002, a verification result receiving module 1003, and a digital currency generating module 1004.

The cashing request receiving module 1001 is configured to receive a digital currency cashing request sent by a second client, the digital currency cashing request indicating a transaction amount, and a first digital currency used for payment or a circulation identifier of the first digital currency provided by a first client.

The digital currency sending module 1002 is configured to send the first digital currency or the circulation identifier to a first currency management apparatus corresponding to the first client, so as to enable the first currency management apparatus to verify the first digital currency or the circulation identifier.

The verification result receiving module 1003 is configured to receive a verification result of the first digital currency or the circulation identifier sent by the first currency management apparatus.

The digital currency generating module 1004 is configured to generate a second digital currency corresponding to the transaction amount in the case where the first digital currency or the circulation identifier passes the verification.

Referring to Fig. 11, an embodiment of the present disclosure provides a digital currency payment system 1100. The digital currency payment system includes: a first client 1101, a second client 1102, a first currency management apparatus 1103 corresponding to the first client, and a second currency management apparatus 1104 corresponding to the second client.

For the embodiment in any one of Fig. 1 to Fig. 6, the first client 1101 is configured to: send a transaction amount to the first currency management apparatus, and send, in the case where the transaction amount is not greater than an available balance of a first digital currency used for payment, a payment request to the second client, the payment request indicating the first digital currency or a circulation identifier of the first digital currency.

The second client 1102 is configured to: receive the payment request sent by the first client, the payment request indicating the first digital currency used for payment or the circulation identifier of the first digital currency, and send a digital currency cashing request to the second currency management apparatus corresponding to the second client, the digital currency cashing request indicating the transaction amount and the first digital currency or the circulation identifier.

The first currency management apparatus 1103 is configured to: receive the transaction amount sent by the first client, determine whether the transaction amount is greater than the available balance of the first digital currency used for payment, and notify, in the case where the transaction amount is not greater than the available balance, the first client to send the payment request to the second client.

The second currency management apparatus 1104 is configured to: receive the digital currency cashing request sent by the second client, and cash, for the first currency management apparatus corresponding to the first client, a second digital currency corresponding to the transaction amount.

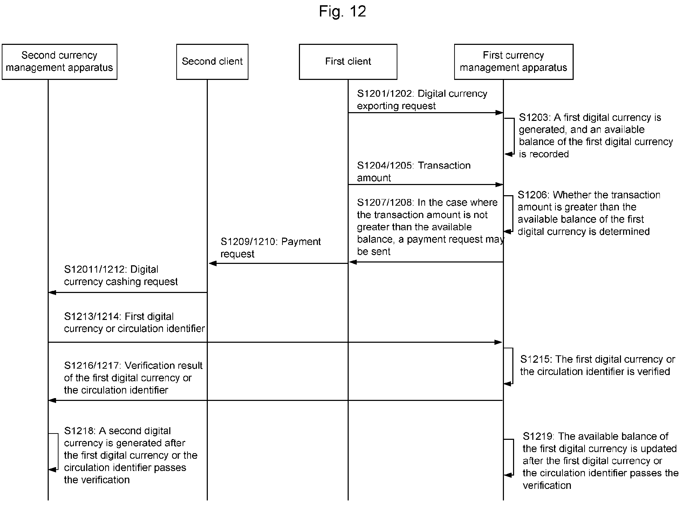

Referring to Fig. 12, according to the above embodiments provided in Fig. 1 to Fig. 6, an embodiment of the present disclosure provides a digital currency payment method applied to a digital currency payment system. The method may include the following steps:
Step S1201: a first client sends a digital currency exporting request to a first currency management apparatus, the digital currency exporting request indicating a denomination of a first digital currency.
Step S1202: the first currency management apparatus receives the digital currency exporting request sent by the first client.
Step S1203: the first currency management apparatus generates the first digital currency according to the denomination of the first digital currency, and records the denomination of the first digital currency as an available balance of the first digital currency.
Step S1204: the first client sends a transaction amount to the first currency management apparatus.

The transaction amount may refer to either an amount generated by the first client according to an actual amount to be paid, or a transaction amount received by the first client from a second client. In the case where the first client generates the transaction amount, the first client is further required to send the transaction amount to the second client.

Step S1205: the first currency management apparatus receives the transaction amount sent by the first client.

Step S1206: the first currency management apparatus determines whether the transaction amount is greater than the available balance of the first digital currency.

Step S1207: In the case where the transaction amount is not greater than the available balance, the first currency management apparatus notifies the first client to send a payment request, the payment request indicating the first digital currency or a circulation identifier of the first digital currency.

Step S1208: the first client receives from the first currency management apparatus, a notification of sending the payment request.

Step S1209: the first client sends the payment request to the second client.

Step S1210: the second client receives the payment request sent by the first client.

Step S1211: the second client sends a digital currency cashing request to a second currency management apparatus, the digital currency cashing request indicating the transaction amount and the first digital currency or the circulation identifier of the first digital currency.

Step S1212: the second currency management apparatus sends the first digital currency or the circulation identifier of the first digital currency to the first currency management apparatus.

Step S1213: the first currency management apparatus receives the first digital currency or the circulation identifier of the first digital currency sent by the second currency management apparatus.

Step S1214: the first digital currency or the circulation identifier of the first digital currency is verified.

Step S1215: the first currency management apparatus sends a verification result of the first digital currency or the circulation identifier of the first digital currency to the second currency management apparatus.

Step S1216: the second currency management apparatus receives the verification result of the first digital currency or the circulation identifier of the first digital currency sent by the first currency management apparatus.

Step S1217: In the case where the first digital currency or the circulation identifier of the first digital currency passes the verification, the second currency management apparatus generates a second digital currency corresponding to the transaction amount.

In addition, the second currency management apparatus is further required to update a digital currency record corresponding to the second client, and issue the second digital currency or a circulation identifier of the second digital currency to the second client according to actual demands.

Step S1218: In the case where the first digital currency or the circulation identifier of the first digital currency passes the verification, the first currency management apparatus updates the available balance of the first digital currency, the available balance after updating indicating a difference between the available balance before updating and the transaction amount.

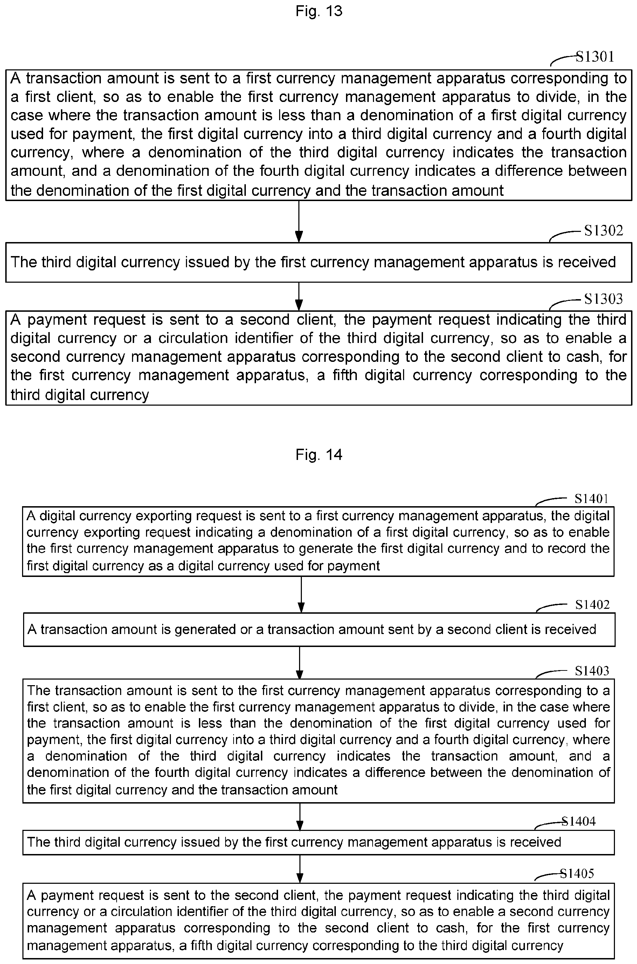

Fig. 13 is a schematic diagram of a main flow of a digital currency payment method applied to a first client according to an embodiment in a second aspect of the present disclosure. As shown in Fig. 13, the digital currency payment method may include the following steps:
Step S1301: a transaction amount is sent to a first currency management apparatus corresponding to the first client, so as to enable the first currency management apparatus to divide, in the case where the transaction amount is less than a denomination of a first digital currency used for payment, the first digital currency into a third digital currency and a fourth digital currency. A denomination of the third digital currency indicates the transaction amount, and a denomination of the fourth digital currency indicates a difference between the denomination of the first digital currency and the transaction amount.

The digital currency, the circulation identifier of the digital currency, and the transaction amount have been described in the above embodiment shown in Fig. 1 and will not be repeated herein.

Before sending the transaction amount to the first currency management apparatus, the first client is further required to generate the transaction amount or receive the transaction amount sent by a second client.

In the course of a payment transaction, the transaction amount may be either greater or less than the denomination of the first digital currency, and the first digital currency may be used for conducting a normal transaction if and only if the transaction amount is not greater than the denomination of the first digital currency. As at least one alternative embodiment, taking the denomination of the first digital currency being 100 and the transaction amount being 40 as an example for illustration, in order to complete the payment, the first digital currency (with the denomination of 100) is divided into the third digital currency (with the denomination of 40) with the denomination being equal to the transaction amount, and the fourth digital currency (with the denomination of 60) according to the transaction amount; and the third digital currency (with the denomination of 40) corresponding to the transaction amount may then be used for payment directly, thereby achieving cashing and change in the digital currency payment process. It is to be understood that in the case where the transaction amount is equal to the denomination of the first digital currency, the first digital currency does not need to be divided and may be directly used for payment.

It is to be understood that, before sending the transaction amount to the first currency management apparatus, the first client is further required to send a digital currency exporting request to the first currency management apparatus in advance, the digital currency exporting request indicating the denomination of the first digital currency, so as to enable the first currency management apparatus to generate the first digital currency and to record the first digital currency as a digital currency used for payment. That is, the newly generated first digital currency is the digital currency used for payment, but as the payment transaction proceeds, the first digital currency is divided into the third digital currency and the fourth digital currency, and thus the digital currency used for payment keeps changing and the corresponding denomination keeps decreasing.

Step S1302: the third digital currency issued by the first currency management apparatus is received. That is, in order to conveniently and quickly complete the digital currency payment, after the first currency management apparatus divides the first digital currency into the third digital currency and the fourth digital currency, merely the third digital currency corresponding to the transaction amount is issued to the first client, such that the first client conducts a payment transaction by using the first digital currency.

Step S1303: a payment request is sent to the second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

As at least one alternative embodiment, upon receiving the payment request sent by the first client, the second client sends a digital currency cashing request to the second currency management apparatus, the digital currency cashing request indicating the third digital currency or the circulation identifier of the third digital currency. Based on this, the second currency management apparatus sends the third digital currency or the circulation identifier of the third digital currency to the first currency management apparatus, so as to enable the first currency management apparatus to verify the first digital currency or the circulation identifier of the first digital currency; and generates the fifth digital currency corresponding to the transaction amount or the third digital currency in the case where the third digital currency or the circulation identifier of the third digital currency passes the verification, thereby achieving transfer of the digital currency between the first client and the second client.

It is to be understood that, upon generating the fifth digital currency, the second currency management apparatus shall update a digital currency record corresponding to the second client, so as to achieve management on the digital currency.

Accordingly, in the case where the second currency management apparatus has cashed the fifth digital currency, the first currency management apparatus updates the digital currency used for payment to the fourth digital currency obtained after the division, and the denomination of the fourth digital currency indicates the difference between the denomination of the first digital currency and the transaction amount. In this way, the balance of the total amount of a digital currency is ensured in the digital currency payment process.

It is worth mentioning that the currency management apparatuses corresponding to the first client and the second client may or may not be the same, and in order to regulate the currency circulation between different currency management apparatuses and avoid illegal transactions between the different currency management apparatuses to further ensure the legitimacy and security of the digital currency, in the case where the first currency management apparatus is different from the second currency management apparatus, the second currency management apparatus sends the third digital currency or the circulation identifier of the third digital currency to the first currency management apparatus via a third party currency management apparatus that regulates the different currency management apparatuses. At the same time, upon verifying the third digital currency or the circulation identifier of the third digital currency, the first currency management apparatus also sends a corresponding verification result to the second currency management apparatus via the third party currency management apparatus.

In addition, to further improve the security in the digital currency payment process, the first client may encrypt the third digital currency or the circulation identifier corresponding to the third digital currency, i.e., set a payment password. The payment transaction of the digital currency may be completed normally when and only when the second client acquires the correct payment password, so as to avoid illegal transactions by illegal clients. As at least one alternative embodiment, encryption methods that may be used include, but are not limited to, any one or a combination of string encryption (letters, numbers, or a combination of letters and numbers), question and answer, voiceprint recognition, face recognition, and picture recognition.

According to the above embodiments, whether the transaction amount is less than the denomination of the first digital currency used for payment is determined through the first currency management apparatus corresponding to the first client. The first digital currency is divided into the fourth digital currency and the third digital currency corresponding to the transaction amount in the case where the transaction amount is less than the denomination of the first digital currency. The payment is made by using the third digital currency, thereby achieving cashing and change of the digital currency in the digital currency payment process, and improving the security and convenience in the digital currency payment process.

Referring to Fig. 14, according to the above embodiment related to Fig. 13, an embodiment of the present disclosure provides another digital currency payment method applied to a first client. The method may specifically include the following steps:
Step S1401: a digital currency exporting request is sent to a first currency management apparatus, the digital currency exporting request indicating a denomination of a first digital currency, so as to enable the first currency management apparatus to generate the first digital currency and to record the first digital currency as a digital currency used for payment.
Step S1402: a transaction amount is generated or a transaction amount sent by a second client is received.
Step S1403: the transaction amount is sent to the first currency management apparatus corresponding to the first client, so as to enable the first currency management apparatus to divide, in the case where the transaction amount is less than the denomination of the first digital currency used for payment, the first digital currency into a third digital currency and a fourth digital currency. A denomination of the third digital currency indicates the transaction amount, and a denomination of the fourth digital currency indicates a difference between the denomination of the first digital currency and the transaction amount.
Step S1404: the third digital currency issued by the first currency management apparatus is received.
Step S1405: a payment request is sent to the second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

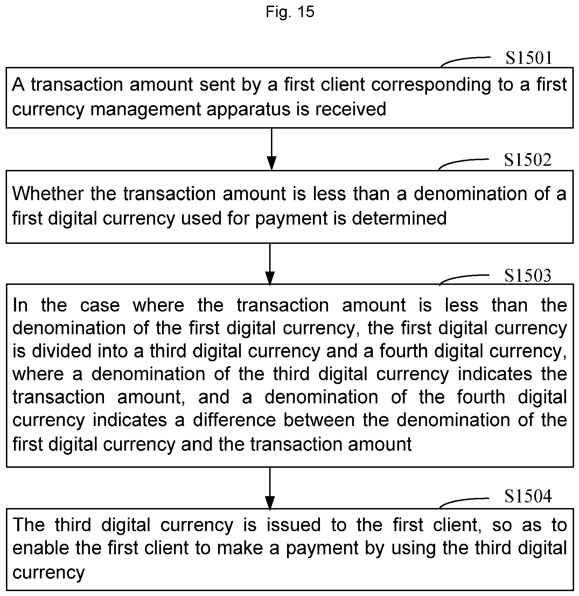

Referring to Fig. 15, corresponding to the above embodiment shown in Fig. 13 or Fig. 14, an embodiment of the present disclosure provides a digital currency payment method applied to a first currency management apparatus. The method may specifically include the following steps:
S1501: a transaction amount sent by a first client corresponding to the first currency management apparatus is received.

The transaction amount may refer to either an amount generated by the first client according to an actual amount to be paid, or a transaction amount received by the first client from a second client. Thus, before sending the transaction amount to the first currency management apparatus, the first client is further required to generate the transaction amount or receive the transaction amount sent by the second client.

S1502: whether the transaction amount is less than a denomination of a first digital currency used for payment is determined.

In the course of a payment transaction, the transaction amount may be either greater or less than the denomination of the first digital currency, and the first digital currency may be used for conducting a normal transaction if and only if the transaction amount is not greater than the denomination of the first digital currency.

Step S1503: In the case where the transaction amount is less than the denomination of the first digital currency, the first digital currency is divided into a third digital currency and a fourth digital currency. A denomination of the third digital currency indicates the transaction amount, and a denomination of the fourth digital currency indicates a difference between the denomination of the first digital currency and the transaction amount.

As at least one alternative embodiment, taking the denomination of the first digital currency being 100 and the transaction amount being 40 as an example for illustration, in order to complete the payment, the first digital currency (with the denomination of 100) is divided into the third digital currency (with the denomination of 40) with the denomination being equal to the transaction amount, and the fourth digital currency (with the denomination of 60) according to the transaction amount; and the third digital currency (with the denomination of 40) corresponding to the transaction amount may then be used for payment directly, thereby achieving cashing and change in the digital currency payment process. It is to be understood that in the case where the transaction amount is equal to the denomination of the first digital currency, the first digital currency does not need to be divided and may be directly used for payment.

Step S1504: the third digital currency is Issued to the first client, so as to enable the first client to make a payment by using the third digital currency.

On this basis, the first client sends a payment request to the second client, the payment request indicating the third digital currency or a circulation identifier of the third digital currency. Upon receiving the payment request sent by the first client, the second client sends a digital currency cashing request to a second currency management apparatus, the digital currency cashing request indicating the third digital currency or the circulation identifier of the third digital currency. Based on this, the second currency management apparatus sends the first digital currency or the circulation identifier of the first digital currency to the first currency management apparatus, so as to enable the first currency management apparatus to verify the third digital currency or the circulation identifier of the third digital currency.

Furthermore, upon receiving the third digital currency or the circulation identifier of the third digital currency sent by the second currency management apparatus corresponding to the second client, the first currency management apparatus verifies the third digital currency or the circulation identifier of the third digital currency as follows: determining whether the third digital currency or the circulation identifier is a third digital currency that has been recorded or stored, so as to verify the legitimacy of the source of the digital currency; or determining, according to an identifier of a currency management apparatus indicated by the third digital currency, whether the identifier of the currency management apparatus is consistent with an identifier of the first currency management apparatus to verify the legitimacy of the source of the digital currency; or performing verification according to a signature of the currency management apparatus included in the third digital currency. For example, if the signature of the currency management apparatus is generated using an asymmetric cryptographic algorithm, the first currency management apparatus may decrypt the signature of the currency management apparatus in the third digital currency by using a private key corresponding to a public key for generating signature information, so as to verify the reliability of the signature information. In this way, both the legitimacy of the source of the third digital currency and the security of digital currency cashing may be ensured.

In the case where the third digital currency or the circulation identifier passes the verification, the first currency management apparatus updates the digital currency used for payment to the fourth digital currency.

At the same time, the first currency management apparatus sends a verification result of the third digital currency or the circulation identifier to the second currency management apparatus, so as to enable the second currency management apparatus to generate a fifth digital currency corresponding to the third digital currency in the case where the third digital currency or the circulation identifier of the third digital currency passes the verification, thereby achieving transfer of the digital currency between the first client and the second client.

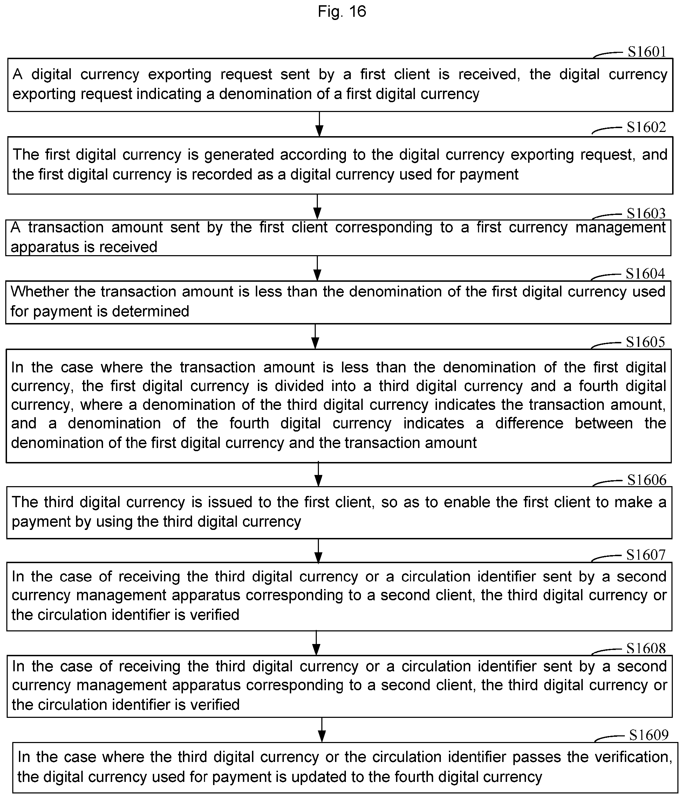

Referring to Fig. 16, according to the above embodiment related to Fig. 15, an embodiment of the present disclosure provides another digital currency payment method applied to a first currency management apparatus. The method may specifically include the following steps:
Step S1601: a digital currency exporting request sent by a first client is received, the digital currency exporting request indicating a denomination of a first digital currency.
Step S1602: the first digital currency is generated according to the digital currency exporting request, and the first digital currency is recorded as a digital currency used for payment.
Step S1603: a transaction amount sent by the first client corresponding to the first currency management apparatus is received.
Step S1604: whether the transaction amount is less than the denomination of the first digital currency used for payment is determined.
Step S1605: In the case where the transaction amount is less than the denomination of the first digital currency, the first digital currency is divided into a third digital currency and a fourth digital currency. A denomination of the third digital currency indicates the transaction amount, and a denomination of the fourth digital currency indicates a difference between the denomination of the first digital currency and the transaction amount.
Step S1606: the third digital currency is issued to the first client, so as to enable the first client to make a payment by using the third digital currency.
Step S1607: In the case of receiving the third digital currency or the circulation identifier sent by a second currency management apparatus corresponding to a second client, the third digital currency or the circulation identifier is verified.
Step S1608: In the case of receiving the third digital currency or the circulation identifier sent by a second currency management apparatus corresponding to a second client, the third digital currency or the circulation identifier is verified.
Step S1609: In the case where the third digital currency or the circulation identifier passes the verification, the digital currency used for payment is updated to the fourth digital currency.

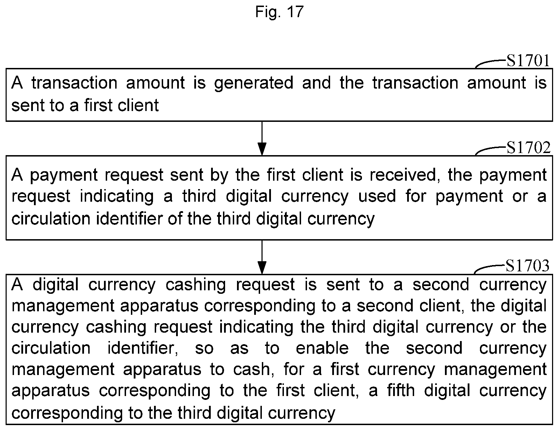

Referring to Fig. 17, corresponding to the above embodiment illustrated in Fig. 13 or Fig. 14, an embodiment of the present disclosure provides a digital currency payment method applied to a second client. The method may specifically include the following steps:
Step S1701: a transaction amount is generated and the transaction amount is sent to a first client.
Step S1702: a payment request sent by the first client is received, the payment request indicating a third digital currency used for payment or a circulation identifier of the third digital currency.
Step S1703: a digital currency cashing request is sent to a second currency management apparatus corresponding to the second client, the digital currency cashing request indicating the third digital currency or the circulation identifier, so as to enable the second currency management apparatus to cash, for a first currency management apparatus corresponding to the first client, a fifth digital currency corresponding to the third digital currency.

As at least one alternative embodiment, upon receiving the payment request sent by the first client, the second client sends the digital currency cashing request to the second currency management apparatus, the digital currency cashing request indicating the third digital currency or the circulation identifier of the third digital currency. Based on this, the second currency management apparatus sends the third digital currency or the circulation identifier of the third digital currency to the first currency management apparatus, so as to enable the first currency management apparatus to verify the third digital currency or the circulation identifier of the third digital currency; and generates the fifth digital currency corresponding to the transaction amount or the third digital currency in the case where the third digital currency or the circulation identifier of the third digital currency passes the verification, thereby achieving transfer of the digital currency between the first client and the second client.

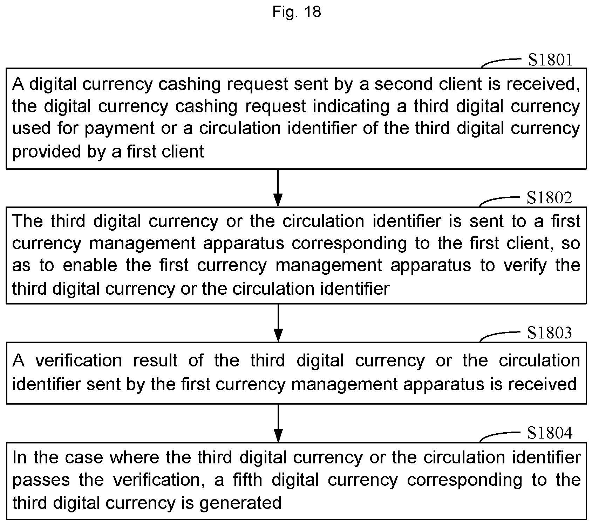

Referring to Fig. 18, corresponding to the above embodiment illustrated in Fig. 13 or Fig. 14, an embodiment of the present disclosure provides a digital currency payment method applied to a second currency management apparatus. The method may specifically include the following steps:
Step S1801: a digital currency cashing request sent by a second client is received, the digital currency cashing request indicating a third digital currency used for payment or a circulation identifier of the third digital currency provided by a first client.
Step S1802: the third digital currency or the circulation identifier is sent to a first currency management apparatus corresponding to the first client, so as to enable the first currency management apparatus to verify the third digital currency or the circulation identifier.
Step S1803: a verification result of the third digital currency or the circulation identifier sent by the first currency management apparatus is received.
Step S1804: In the case where the third digital currency or the circulation identifier passes the verification, a fifth digital currency corresponding to the third digital currency is generated.

It is to be understood that, after generating the fifth digital currency, the second currency management apparatus updates a digital currency record corresponding to the second client, so as to achieve management on the digital currency. In addition, the generated fifth digital currency or a circulation identifier of the fifth digital currency may be issued to the second client according to actual demands.

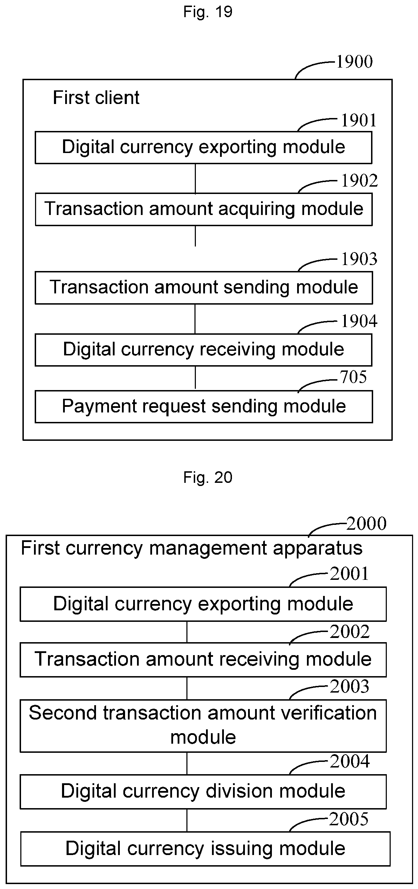

Referring to Fig. 19, according to the above embodiment provided in Fig. 13 or Fig. 14, an embodiment of the present disclosure provides a first client 1900 for digital currency payment. The first client includes: a transaction amount sending module 1903, a digital currency receiving module 1904, and a payment request sending module 1905.

The transaction amount sending module 1903 is configured to send a transaction amount to a first currency management apparatus corresponding to the first client, so as to enable the first currency management apparatus to divide, in the case where the transaction amount is less than a denomination of a first digital currency used for payment, the first digital currency into a third digital currency and a fourth digital currency. A denomination of the third digital currency indicates the transaction amount, and a denomination of the fourth digital currency indicates a difference between the denomination of the first digital currency and the transaction amount.

The digital currency receiving module 1904 is configured to receive the third digital currency issued by the first currency management apparatus.

The payment request sending module 1905 is configured to send a payment request to a second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

In one optional implementation, the first client further includes: a digital currency exporting module 1901.

The digital currency exporting module 1901 is configured to send a digital currency exporting request to the first currency management apparatus, the digital currency exporting request indicating the denomination of the first digital currency, so as to enable the first currency management apparatus to generate the first digital currency and to record the first digital currency as a digital currency used for payment.

In one optional implementation, in the case where the second currency management apparatus has cashed the third digital currency, the first currency management apparatus updates the digital currency used for payment to the fourth digital currency.

In one optional implementation, the first client further includes: a transaction amount acquiring module 1902.

The transaction amount acquiring module 1902 is configured to generate, before sending the transaction amount to the first currency management apparatus, the transaction amount or receive the transaction amount sent by the second client.

Referring to Fig. 20, according to the above embodiment related to Fig. 15 or Fig. 16, an embodiment of the present disclosure provides a first currency management apparatus 2000 for digital currency payment. The first currency management apparatus includes: a transaction amount receiving module 2002, a second transaction amount verification module 2003, a digital currency division module 2004, and a digital currency issuing module 2005.

The transaction amount receiving module 2002 is configured to receive a transaction amount sent by a first client corresponding to the first currency management apparatus.

The second transaction amount verification module 2003 is configured to determine whether the transaction amount is less than a denomination of a first digital currency used for payment.

The digital currency division module 2004 is configured to divide, in the case where the transaction amount is less than the denomination of the first digital currency, the first digital currency into a third digital currency and a fourth digital currency. A denomination of the third digital currency indicates the transaction amount, and a denomination of the fourth digital currency indicates a difference between the denomination of the first digital currency and the transaction amount.

The digital currency issuing module 2005 is configured to issue the third digital currency to the first client, so as to enable the first client to make a payment by using the third digital currency.

In one optional implementation, the first currency management apparatus further includes: a digital currency exporting module 2001.

The digital currency exporting module 2001 is configured to: receive a digital currency exporting request sent by the first client, the digital currency exporting request indicating the denomination of the first digital currency,
generate the first digital currency according to the digital currency exporting request, and record the first digital currency as a digital currency used for payment.

In one optional implementation, the digital currency exporting module 2001 is further configured to:
verify, in the case of receiving the third digital currency or a circulation identifier sent by a second currency management apparatus corresponding to a second client, the third digital currency or the circulation identifier;
send a verification result of the third digital currency or the circulation identifier to the second currency management apparatus; and
update, in the case where the third digital currency or the circulation identifier passes the verification, the digital currency used for payment to the fourth digital currency.

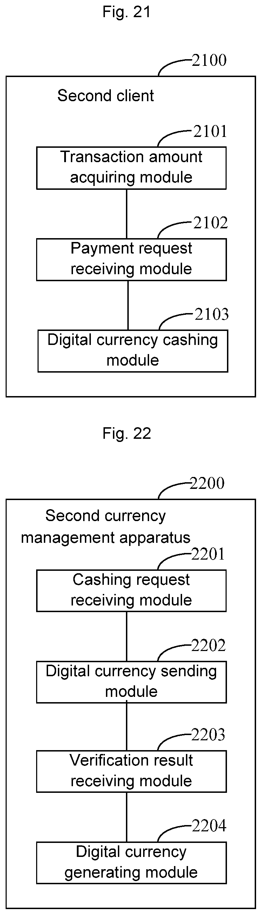

Referring to Fig. 21, according to the above embodiment provided in Fig. 17, an embodiment of the present disclosure provides a second client 2100 for digital currency payment. The second client includes: a payment request receiving module 2102 and a digital currency cashing module 2103.

The payment request receiving module 2102 is configured to receive a payment request sent by a first client, the payment request indicating a third digital currency used for payment or a circulation identifier of the third digital currency.

The digital currency cashing module 2103 is configured to send a digital currency cashing request to a second currency management apparatus corresponding to the second client, the digital currency cashing request indicating the third digital currency or the circulation identifier, so as to enable the second currency management apparatus to cash, for a first currency management apparatus corresponding to the first client, a fifth digital currency corresponding to the third digital currency.

In one optional implementation, the second client further includes: a transaction amount acquiring module 2101.

The transaction amount acquiring module is configured to generate a transaction amount and send the transaction amount to the first client.

Referring to Fig. 22, according to the above embodiment provided in Fig. 18, an embodiment of the present disclosure provides a second currency management apparatus 2200 for digital currency payment. The second currency management apparatus includes: a cashing request receiving module 2201, a digital currency sending module 2202, a verification result receiving module 2203, and a digital currency generating module 2204.

The cashing request receiving module 2201 is configured to receive a digital currency cashing request sent by a second client, the digital currency cashing request indicating a third digital currency used for payment or a circulation identifier of the third digital currency provided by a first client.

The digital currency sending module 2202 is configured to send the third digital currency or the circulation identifier to a first currency management apparatus corresponding to the first client, so as to enable the first currency management apparatus to verify the third digital currency or the circulation identifier.

The verification result receiving module 2203 is configured to receive a verification result of the third digital currency or the circulation identifier sent by the first currency management apparatus.

The digital currency generating module 2204 is configured to generate, in the case where the third digital currency or the circulation identifier passes the verification, a fifth digital currency corresponding to the third digital currency.

According to the methods provided in Fig. 13 to Fig. 18, in the digital currency payment system 1100 illustrated in Fig. 11,
the first client 1101 is further configured to: send a transaction amount to the first currency management apparatus; receive, in the case where the transaction amount is less than the denomination of the first digital currency used for payment, the third digital currency issued by the first currency management apparatus; and send the payment request to the second client, the payment request indicating the third digital currency or the circulation identifier of the third digital currency;
the second client 1102 is further configured to: receive the payment request sent by the first client, and send the digital currency cashing request to the second currency management apparatus corresponding to the second client, the digital currency cashing request indicating the third digital currency or the circulation identifier of the third digital currency;
the first currency management apparatus 1103 is further configured to: receive the transaction amount sent by the first client, and divide the first digital currency into the third digital currency and the fourth digital currency in the case where the transaction amount is less than the denomination of the first digital currency used for payment, where the denomination of the third digital currency indicates the transaction amount, and the denomination of the fourth digital currency indicates the difference between the denomination of the first digital currency and the transaction amount; and
the second currency management apparatus 1104 is further configured to: receive the digital currency cashing request sent by the second client, and cash, for the first currency management apparatus corresponding to the first client, the fifth digital currency corresponding to the third digital currency.

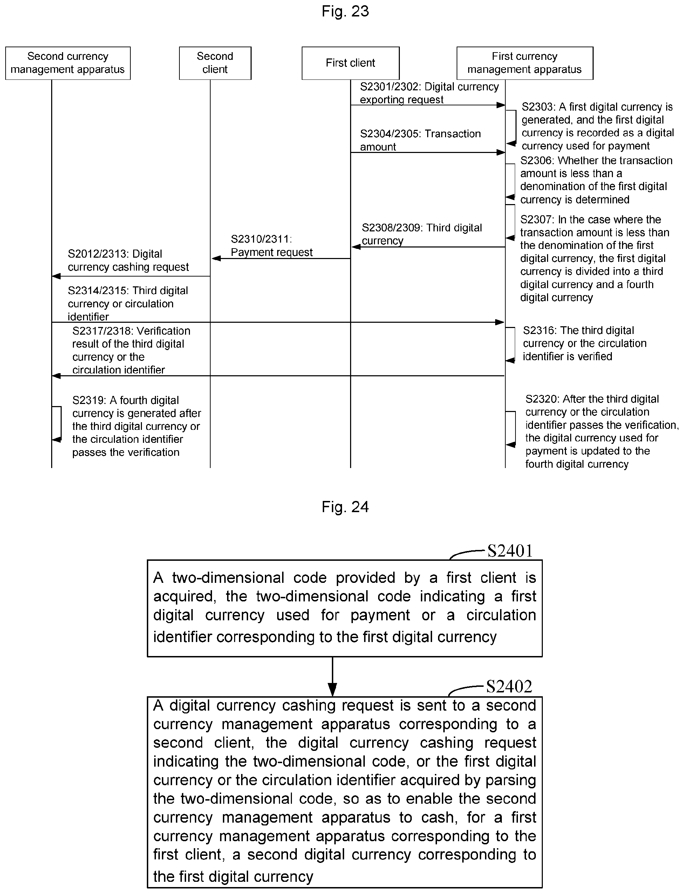

Referring to Fig. 23, according to the above embodiments provided in Fig. 13 to Fig. 18, an embodiment of the present disclosure provides a digital currency payment method applied to a digital currency payment system. The method may include the following steps:
Step S2301: a first client sends a digital currency exporting request to a first currency management apparatus, the digital currency exporting request indicating a denomination of a first digital currency.
Step S2302: the first currency management apparatus receives the digital currency exporting request sent by the first client.
Step S2303: the first currency management apparatus generates the first digital currency, and records the first digital currency as a digital currency used for payment.
Step S2304: the first client sends a transaction amount to the first currency management apparatus. The transaction amount may refer to either an amount generated by the first client according to an actual transaction, or a transaction amount received by the first client from a second client.
Step S2305: the first currency management apparatus receives the transaction amount sent by the first client.
Step S2306: the first currency management apparatus determines whether the transaction amount is less than the denomination of the first digital currency.
Step S2307: In the case where the transaction amount is less than the denomination of the first digital currency, the first currency management apparatus divides the first digital currency into a third digital currency and a fourth digital currency. A denomination of the third digital currency indicates the transaction amount, and a denomination of the fourth digital currency indicates a difference between the denomination of the first digital currency and the transaction amount.
Step S2308: the first currency management apparatus issues the third digital currency to the first client.
Step S2309: the first client receives the third digital currency issued by the first currency management apparatus.
Step S2310: the first client sends a payment request to the second client, the payment request indicating the third digital currency or a circulation identifier of the third digital currency.
Step S2311: the second client receives the payment request sent by the first client.
Step S2312: the second client sends a digital currency cashing request to a second currency management apparatus, the digital currency cashing request indicating the third digital currency or the circulation identifier of the third digital currency.
Step S2313: the second currency management apparatus receives the digital currency cashing request sent by the second client.
Step S2314: the second currency management apparatus sends the third digital currency or the circulation identifier of the third digital currency to the first currency management apparatus.
Step S2315: the first currency management apparatus receives the third digital currency or the circulation identifier of the third digital currency sent by the second currency management apparatus.
Step S2316: the first currency management apparatus verifies the third digital currency or the circulation identifier of the third digital currency.
Step S2317: the first currency management apparatus sends a verification result of the third digital currency or the circulation identifier of the third digital currency to the second currency management apparatus.
Step S2318: the second currency management apparatus receives the verification result of the third digital currency or the circulation identifier of the third digital currency sent by the first currency management apparatus.
Step S2319: In the case where the third digital currency or the circulation identifier of the third digital currency passes the verification, the second currency management apparatus generates a fifth digital currency corresponding to the third digital currency.
Step S2320: In the case where the third digital currency or the circulation identifier of the third digital currency passes the verification, the first currency management apparatus updates the digital currency used for payment to the fifth digital currency.

Fig. 24 is a schematic diagram of a main flow of a digital currency payment method applied to a second client according to an embodiment of the present disclosure. As shown in Fig. 24, the digital currency payment method may include the following steps:
Step S2401: a two-dimensional code provided by a first client is acquired, the two-dimensional code indicating a first digital currency used for payment or a circulation identifier corresponding to the first digital currency.

A digital currency is a currency that may be used to replace a paper currency for a variety of circulation operations, for example, making payment using the digital currency to achieve a transfer of a holder of the digital currency, or directly transferring the digital currency. As at least one alternative embodiment, the digital currency includes one or more of the following information: a circulation identifier of the digital currency, an identifier of a digital currency management apparatus to which the digital currency belongs, and a signature of the digital currency management apparatus. The circulation identifier of the digital currency refers to a unique circulation identifier (e.g., a serial number) corresponding to the digital currency, which may be in the form of a character string or a two-dimensional code or the like, so as to facilitate the circulation of the digital currency.

The two-dimensional code is generated by the first client or a first currency management apparatus according to the first digital currency or the circulation identifier of the first digital currency. The two-dimensional code after parsing includes one or more of the following information: the first digital currency, the circulation identifier of the first digital currency, an identifier of the first currency management apparatus, and a use scenario of the first digital currency. The two-dimensional code may exist in various forms, for example, being stored directly in a user mobile terminal (e.g., a cell phone and IPAD) and a wearable device, or directly in the form of a picture, or a printed document. In this way, when a user provides the two-dimensional code to the second client through the first client, the two-dimensional code may be directly sent through a communication connection therebetween, or the two-dimensional code may be directly displayed to be scanned by the second client by using a scanner gun or a smart terminal in order to acquire digital currency information, etc. indicated by the two-dimensional code. That is, even if the first client is in an offline state, a payment transaction may still be completed by providing the two-dimensional code carrying the digital currency.

Further, in order to prevent other illegal terminals from impersonating the second client to conduct payment transactions with the first client when acquiring the two-dimensional code, the two-dimensional code may be encrypted with a first key corresponding to an encryption method of the two-dimensional code. Encryption methods used may be any one or a combination of string encryption (letters, numbers, or a combination of letters and numbers), question and answer, voiceprint recognition, face recognition, and picture recognition, and different encryption methods correspond to different keys. In this way, the transaction may be conducted normally according to the two-dimensional code when and only when the two-dimensional code and the corresponding first key are acquired. As at least one alternative embodiment, in the case where the two-dimensional code is an encrypted two-dimensional code, before sending a digital currency cashing request to a second currency management apparatus corresponding to the second client, the second client is required to acquire from the first client the first key corresponding to the encryption method of the two-dimensional code and decrypt the two-dimensional code with the first key to acquire digital currency information from the two-dimensional code.

In addition, in order to further ensure the security of digital currency payment, a user of the first client encrypts the first digital currency or the circulation identifier corresponding to the first digital currency through an encryption method corresponding to a denomination of the first digital currency. Meanwhile, the first currency management apparatus corresponding to the first client records the first digital currency, the circulation identifier of the first digital currency, the encryption method corresponding to the denomination of the first digital currency, a second key corresponding to the encryption method, and the like in advance, so as to manage the digital currency.

Based on this, in the case where the first digital currency indicated by the two-dimensional code is an encrypted first digital currency, or in the case where the circulation identifier indicated by the two-dimensional code is an encrypted circulation identifier, the second client is further required to acquire the corresponding second key according to the encryption method corresponding to the denomination of the first digital currency, so as to add the second key to the digital currency cashing request when sending the digital currency cashing request to the second currency management apparatus corresponding to the second client. That is, the digital currency cashing request indicates the two-dimensional code, or the first digital currency or the circulation identifier acquired after parsing the two-dimensional code, and the second key. That is, in order to take into account the security and convenience of digital currency payment, different encryption methods may be set according to a transaction amount. For example, when the transaction amount is greater than a set threshold, a password of voiceprint recognition, face recognition and other biometric types is used for verification of digital currency payment; and when the transaction amount is less than the set threshold, keys corresponding to letter encryption and number encryption are used for verification of digital currency payment.

As at least one alternative embodiment, encryption methods used may be any one or a combination of string encryption (letters, numbers, or a combination of letters and numbers), question and answer, voiceprint recognition, face recognition, and picture recognition. Different encryption methods correspond to different keys, for example, keys corresponding to string encryption are all-letter strings (letter encryption), all-number strings (number encryption), or strings including both letters and numbers (letter and number combined encryption). Keys corresponding to question and answer are one or more pairs of questions and answers. Keys corresponding to voiceprint recognition are audio or files in other formats (e.g., a feature value extracted by a voiceprint recognition model) that may characterize a voiceprint of a user. Keys corresponding to face recognition are images or files in other formats (e.g., a feature value extracted by a face recognition model) that may characterize face features of the user, and keys corresponding to picture recognition are one or more images selected by the user. In addition, the user corresponding to the first client may customize the encryption method, or the first currency management apparatus may define the encryption method according to factors such as ease of management or own operation conditions.

Step S2402: the digital currency cashing request is sent to the second currency management apparatus corresponding to the second client, the digital currency cashing request indicating the two-dimensional code, or the first digital currency or the circulation identifier acquired by parsing the two-dimensional code, so as to enable the second currency management apparatus to cash, for the first currency management apparatus corresponding to the first client, a second digital currency corresponding to the first digital currency.

It is to be understood that, upon acquiring carrying the first digital currency or the circulation identifier of the first digital currency, the second client may either directly parse the two-dimensional code to acquire the first digital currency or the circulation identifier indicated by the two-dimensional code, or directly send the two-dimensional code to the second currency management apparatus so as to enable the second currency management apparatus to parse the two-dimensional code to acquire the first digital currency or the circulation identifier.

On this basis, the second currency management apparatus sends the first digital currency or the circulation identifier to the first currency management apparatus corresponding to the first client, so as to enable the first currency management apparatus to verify the first digital currency or the circulation identifier. Upon receiving the first digital currency or the circulation identifier sent by the second currency management apparatus, the first currency management apparatus may verify, according to a digital currency record corresponding to the first client, the first digital currency or the circulation identifier as follows: determining whether the first digital currency or the circulation identifier is a first digital currency that has been recorded or stored, so as to verify the legitimacy of the source of the digital currency; or determining, according to an identifier of a currency management apparatus indicated by the first digital currency, whether the identifier of the currency management apparatus is consistent with an identifier of the first currency management apparatus to verify the legitimacy of the source of the digital currency; or performing verification according to a signature of the currency management apparatus included in the first digital currency. For example, if the signature of the currency management apparatus is generated using an asymmetric cryptographic algorithm, the first currency management apparatus may decrypt the signature of the currency management apparatus in the first digital currency by using a private key corresponding to a public key for generating signature information, so as to verify the reliability of the signature information. In this way, both the legitimacy of the source of the first digital currency and the security of digital currency cashing may be ensured.

In the case where the first digital currency or the circulation identifier passes the verification, i.e., where the first digital currency is confirmed to be legitimate, the digital currency record corresponding to the first currency management apparatus is updated. For example, a state of the first digital currency is recorded as unavailable or the first digital currency is cancelled to stop the circulation of the first digital currency, an available digital currency balance corresponding to the first client is updated, etc.

Accordingly, the second currency management apparatus generates the second digital currency corresponding to the first digital currency in the case where the first digital currency or the circulation identifier passes the verification by the first currency management apparatus, and a denomination of the second digital currency shall be the same as the denomination of the first digital currency. At the same time, a digital currency record corresponding to the second client is updated, for example, adding the newly generated second digital currency, and recording a state of the second digital currency as exportable.

It is worth noting that the digital currency in the exportable state is in a negotiable state, that is, after a currency management apparatus notifies the digital currency in the exportable state to a corresponding client, a user of the client may conduct a variety of circulation operations on the digital currency, for example, making payment by using the digital currency to achieve transfer of a holder of the digital currency, or directly transferring the digital currency, and a transferee of the digital currency may make payment or transfer or the like again by using the transferred digital currency. In other words, the digital currency in the exportable state is to a certain extent equivalent to a traditional paper currency, and a holder thereof has the right to use the digital currency.

On this basis, the second currency management apparatus, upon generating the second digital currency, may selectively notify the second digital currency or a circulation identifier corresponding to the second digital currency to the second client. Thus, the second client may selectively receive the second digital currency or the circulation identifier corresponding to the second digital currency issued by the second currency management apparatus.

Furthermore, in the case where the first digital currency indicated by the two-dimensional code is an encrypted first digital currency, or in the case where the circulation identifier indicated by the two-dimensional code is an encrypted circulation identifier, the digital currency cashing request sent by the second client to the second currency management apparatus further indicates the second key corresponding to the encryption method corresponding to the denomination of the first digital currency acquired by the second client from the first client, so as to enable the second currency management apparatus sends the first digital currency or the circulation identifier and the second key to the first currency management apparatus, and so as to enable the first currency management apparatus to verify the first digital currency or the circulation identifier and the second key. As at least one alternative embodiment, the first currency management apparatus, upon receiving the second key, determines whether the second key is consistent with a key corresponding to the encryption method corresponding to the denomination of the recorded first digital currency according to the digital currency record corresponding to the first client, so as to determine the legitimacy of the second key. The first currency management apparatus updates the digital currency record corresponding to the first client, and the second currency management apparatus generates the second digital currency corresponding to the first digital currency, when and only when the first digital currency or the circulation identifier and the second key both pass the verification.

It is worth mentioning that the currency management apparatuses corresponding to the first client and the second client may or may not be the same, and in order to regulate the currency circulation between different currency management apparatuses and avoid illegal transactions between the different currency management apparatuses to further ensure the legitimacy and security of the digital currency, in the case where the first currency management apparatus is different from the second currency management apparatus, the second currency management apparatus sends the first digital currency or the circulation identifier to the first currency management apparatus via a third party currency management apparatus that regulates the different currency management apparatuses. At the same time, the first currency management apparatus, upon verifying the first digital currency or the circulation identifier of the first digital currency, also sends a corresponding verification result to the second currency management apparatus via the third party currency management apparatus.

According to the above embodiments, by using the two-dimensional code to carry the digital currency or the circulation identifier of the digital currency, and by using the two-dimensional code to make the digital currency payment, the first client conducting the payment transaction does not need to maintain a communication connection with the second client, and even if the first client is in an offline state, the two-dimensional code may be displayed to the second client through a pre-stored two-dimensional code image or file or the like, so as to continue normal digital currency payment, which improves the convenience of digital currency payment. In addition, by encrypting the two-dimensional code, and/or encrypting the digital currency or the circulation identifier of the digital currency indicated by the two-dimensional code, the security in the digital currency payment process is further improved.

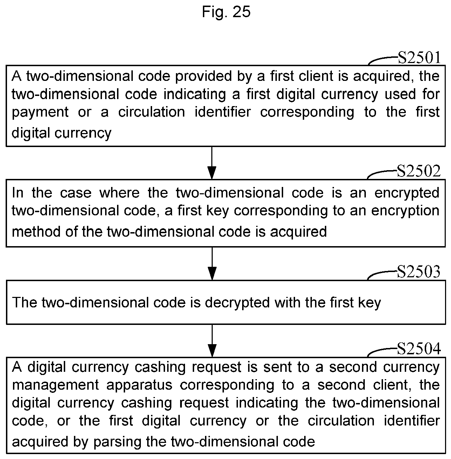

Referring to Fig. 25, according to the above embodiment related to Fig. 24, an embodiment of the present disclosure provides another digital currency payment method applied to a second client. The method may specifically include the following steps:
Step S2501: a two-dimensional code provided by a first client is acquired, the two-dimensional code indicating a first digital currency used for payment or a circulation identifier corresponding to the first digital currency.
Step S2502: In the case where the two-dimensional code is an encrypted two-dimensional code, a first key corresponding to an encryption method of the two-dimensional code is acquired.
Step S2503: the two-dimensional code is decrypted with the first key.
Step S2504: a digital currency cashing request is sent to a second currency management apparatus corresponding to the second client, the digital currency cashing request indicating the two-dimensional code, or the first digital currency or the circulation identifier acquired by parsing the two-dimensional code.

In the case of receiving the two-dimensional code, the second currency management apparatus parses the two-dimensional code to acquire the first digital currency or the circulation identifier, and sends the first digital currency or the circulation identifier to a first currency management apparatus corresponding to the first client, so as to cash a second digital currency corresponding to the first digital currency.

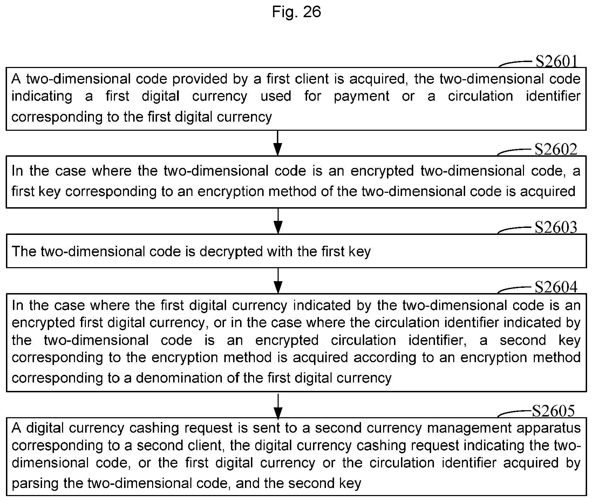

Referring to Fig. 26, according to the above embodiment related to Fig. 24 or Fig. 25, an embodiment of the present disclosure provides yet another digital currency payment method applied to a second client. The method may include the following steps:
Step S2601: a two-dimensional code provided by a first client is acquired, the two-dimensional code indicating a first digital currency used for payment or a circulation identifier corresponding to the first digital currency.
Step S2602: In the case where the two-dimensional code is an encrypted two-dimensional code, a first key corresponding to an encryption method of the two-dimensional code is acquired.
Step S2603: the two-dimensional code is decrypted with the first key.
Step S2604: In the case where the first digital currency indicated by the two-dimensional code is an encrypted first digital currency, or in the case where the circulation identifier indicated by the two-dimensional code is an encrypted circulation identifier, a second key corresponding to the encryption method is acquired according to an encryption method corresponding to a denomination of the first digital currency.

That is, in order to take into account the security and convenience of digital currency payment, different encryption methods may be set according to a transaction amount. For example, when the transaction amount is greater than a set threshold, a password of voiceprint recognition, face recognition and other biometric types is used for verification of digital currency payment, and when the transaction amount is less than the set threshold, keys corresponding to letter encryption and number encryption are used for verification of digital currency payment.

Step S2605: a digital currency cashing request is sent to a second currency management apparatus corresponding to the second client, the digital currency cashing request indicating the two-dimensional code, or the first digital currency or the circulation identifier acquired by parsing the two-dimensional code, and the second key.

In the case of receiving the two-dimensional code, the second currency management apparatus parses the two-dimensional code to acquire the first digital currency or the circulation identifier, and sends the first digital currency or the circulation identifier and the second key to a first currency management apparatus corresponding to the first client, so as to cash a second digital currency corresponding to the first digital currency.

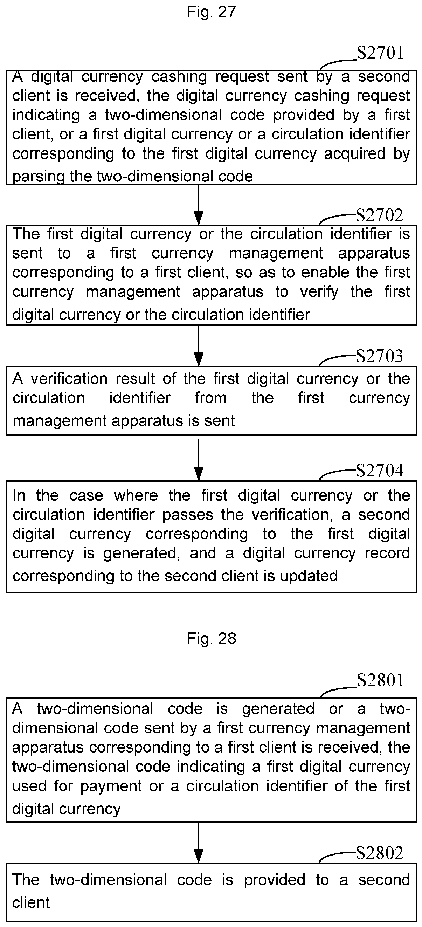

Referring to Fig. 27, corresponding to the embodiments provided in Fig. 24 to Fig. 26, an embodiment of the present disclosure provides a digital currency payment method applied to a second currency management apparatus. The method may specifically include the following steps:
Step S2701: a digital currency cashing request sent by a second client is received, the digital currency cashing request indicating a two-dimensional code provided by a first client, or a first digital currency or a circulation identifier corresponding to the first digital currency acquired by parsing the two-dimensional code.

In the case of receiving the two-dimensional code, the second currency management apparatus parses the two-dimensional code to acquire the first digital currency or the circulation identifier, and sends the first digital currency or the circulation identifier and a second key to a first currency management apparatus corresponding to the first client, so as to cash a second digital currency corresponding to the first digital currency.

In one optional implementation, in the case where the first digital currency is an encrypted first digital currency, or in the case where the circulation identifier is an encrypted circulation identifier, the digital currency cashing request further indicates the second key corresponding to an encryption method corresponding to a denomination of the first digital currency, so as to enable the second currency management apparatus to send the first digital currency or the circulation identifier and the second key to the first currency management apparatus, and so as to enable the first currency management apparatus to verify the first digital currency or the circulation identifier and the second key. As at least one alternative embodiment, the first currency management apparatus, upon receiving the second key, determines whether the second key is consistent with a key corresponding to the encryption method corresponding to the denomination of the recorded first digital currency according to a digital currency record corresponding to the first client, so as to determine the legitimacy of the second key. The first currency management apparatus updates the digital currency record corresponding to the first client, and the second currency management apparatus generates the second digital currency corresponding to the first digital currency, when and only when the first digital currency or the circulation identifier and the second key both pass the verification.

Step S2702: the first digital currency or the circulation identifier is sent to a first currency management apparatus corresponding to the first client, so as to enable the first currency management apparatus to verify the first digital currency or the circulation identifier.

Upon receiving the first digital currency or the circulation identifier sent by the second currency management apparatus, the first currency management apparatus may verify, according to the digital currency record corresponding to the first client, the first digital currency or the circulation identifier as follows: determining whether the first digital currency or the circulation identifier is a first digital currency that has been recorded or stored, so as to verify the legitimacy of the source of the digital currency; or determining, according to an identifier of a currency management apparatus indicated by the first digital currency, whether the identifier of the currency management apparatus is consistent with an identifier of the first currency management apparatus to verify the legitimacy of the source of the digital currency; or performing verification according to a signature of the currency management apparatus included in the first digital currency. For example, if the signature of the currency management apparatus is generated using an asymmetric cryptographic algorithm, the first currency management apparatus may decrypt the signature of the currency management apparatus in the first digital currency by using a private key corresponding to a public key for generating signature information, so as to verify the reliability of the signature information. In this way, both the legitimacy of the source of the first digital currency and the security of digital currency cashing may be ensured.

In the case where the first digital currency or the circulation identifier passes the verification, i.e., where the first digital currency is confirmed to be legitimate, the digital currency record corresponding to the first currency management apparatus is updated. For example, a state of the first digital currency is recorded as unavailable, or the first digital currency is cancelled to stop the circulation of the first digital currency, or an available digital currency balance corresponding to the first client is updated, etc.

Step S2703: a verification result of the first digital currency or the circulation identifier from the first currency management apparatus is received.

Step S2704: In the case where the first digital currency or the circulation identifier passes the verification, the second digital currency corresponding to the first digital currency is generated, and a digital currency record corresponding to the second client is updated.

It is to be understood that in the case where the first digital currency indicated by the two-dimensional code is an encrypted first digital currency, or in the case where the circulation identifier indicated by the two-dimensional code is an encrypted circulation identifier, the first currency management apparatus updates the digital currency record corresponding to the first client, and the second currency management apparatus generates the second digital currency corresponding to the first digital currency, when and only when the first digital currency or the circulation identifier and the second key both pass the verification.

Referring to Fig. 28, corresponding to the embodiments provided in Fig. 24 to Fig. 26, an embodiment of the present disclosure provides a digital currency payment method applied to a first client. The method may specifically include the following steps:
Step S2801: a two-dimensional code is generated or a two-dimensional code sent by a first currency management apparatus corresponding to the first client is received, the two-dimensional code indicating a first digital currency used for payment or a circulation identifier of the first digital currency.
Step S2802: the two-dimensional code is provided to a second client.

The two-dimensional code may exist in various forms, for example, being stored directly in a user mobile terminal (e.g., a cell phone and IPAD) and a wearable device, or directly in the form of a picture, or a printed document. In this way, when a user provides the two-dimensional code to the second client through the first client, the two-dimensional code may be directly sent through a communication connection therebetween, or the two-dimensional code may be directly displayed to be scanned by the second client by using a scanner gun or a smart terminal in order to acquire digital currency information, etc. indicated by the two-dimensional code. That is, even if the first client is in an offline state, a payment transaction may still be completed by providing the two-dimensional code carrying the digital currency.

In one optional implementation, in the case where the two-dimensional code is an encrypted two-dimensional code, a first key corresponding to an encryption method of the two-dimensional code is provided to the second client.

In one optional implementation, in the case where the first digital currency indicated by the two-dimensional code is an encrypted first digital currency, or in the case where the circulation identifier indicated by the two-dimensional code is an encrypted circulation identifier, a second key is provided to the second client according to an encryption method corresponding to a denomination of the first digital currency.

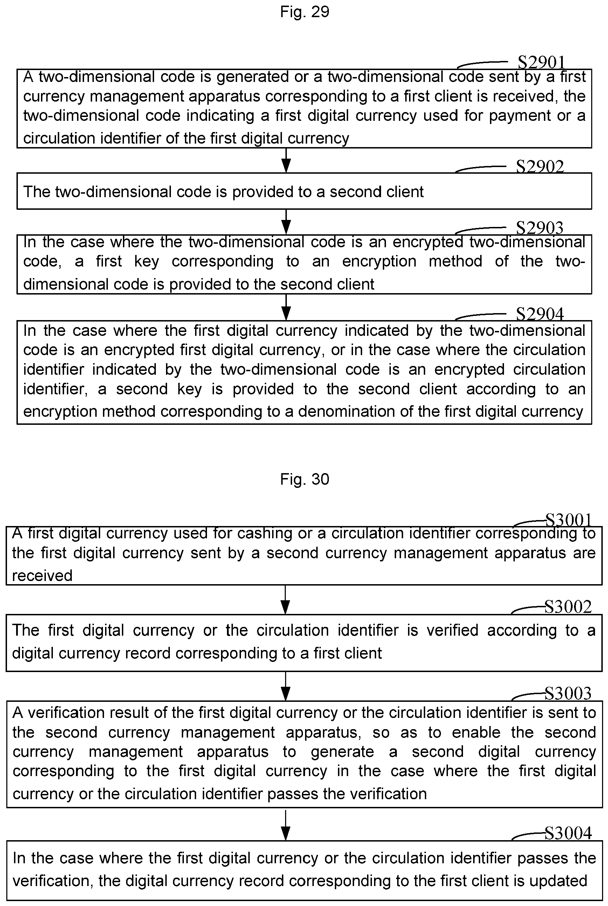

Referring to Fig. 29, according to the above embodiment related to Fig. 28, an embodiment of the present disclosure further provides another digital currency payment method applied to a first client. The method may include the following steps:
Step S2901: a two-dimensional code is generated or a two-dimensional code sent by a first currency management apparatus corresponding to the first client is received, the two-dimensional code indicating a first digital currency used for payment or a circulation identifier of the first digital currency.
Step S2902: the two-dimensional code is provided to a second client.
Step S2903: In the case where the two-dimensional code is an encrypted two-dimensional code, a first key corresponding to an encryption method of the two-dimensional code is provided to the second client.
Step S2904: In the case where the first digital currency indicated by the two-dimensional code is an encrypted first digital currency, or in the case where the circulation identifier indicated by the two-dimensional code is an encrypted circulation identifier, a second key is provided to the second client according to an encryption method corresponding to a denomination of the first digital currency.

Referring to Fig. 30, corresponding to the embodiments shown in Fig. 24 to Fig. 26, an embodiment of the present disclosure provides a digital currency payment method applied to a first currency management apparatus. The method may include the following steps:
Step S3001: a first digital currency used for cashing or a circulation identifier corresponding to the first digital currency sent by a second currency management apparatus is received. In the case where the first digital currency is an encrypted first digital currency, or in the case where the circulation identifier is an encrypted circulation identifier, a second key corresponding to an encryption method corresponding to a denomination of the first digital currency sent by the second currency management apparatus is further received.

In one possible implementation, the method further includes: a two-dimensional code is generated according to the first digital currency used for payment or the circulation identifier of the first digital currency, and the two-dimensional code is sent to the first client.

Step S3002: the first digital currency or the circulation identifier is verified according to a digital currency record corresponding to the first client.

Upon receiving the first digital currency or the circulation identifier sent by the second currency management apparatus, the first currency management apparatus may verify, according to the digital currency record corresponding to the first client, the first digital currency or the circulation identifier as follows: determining whether the first digital currency or the circulation identifier is a first digital currency that has been recorded or stored, so as to verify the legitimacy of the source of the digital currency; or determining, according to an identifier of a currency management apparatus indicated by the first digital currency, whether the identifier of the currency management apparatus is consistent with an identifier of the first currency management apparatus to verify the legitimacy of the source of the digital currency; or performing verification according to a signature of the currency management apparatus included in the first digital currency. For example, if the signature of the currency management apparatus is generated using an asymmetric cryptographic algorithm, the first currency management apparatus may decrypt the signature of the currency management apparatus in the first digital currency by using a private key corresponding to a public key for generating signature information, so as to verify the reliability of the signature information. In this way, both the legitimacy of the source of the first digital currency and the security of digital currency cashing may be ensured.

In the case where the first digital currency or the circulation identifier passes the verification, i.e., where the first digital currency is confirmed to be legitimate, the digital currency record corresponding to the first currency management apparatus is updated. For example, a state of the first digital currency is recorded as unavailable, or the first digital currency is cancelled to stop the circulation of the first digital currency, or an available digital currency balance corresponding to the first client is updated, etc.

Furthermore, in the case where the first digital currency is an encrypted first digital currency, or in the case where the circulation identifier is an encrypted circulation identifier, a second key corresponding to an encryption method corresponding to a denomination of the first digital currency sent by the second currency management apparatus is received, and whether the second key is consistent with a key corresponding to the encryption method corresponding to the denomination of the recorded first currency is determined according to the digital currency record corresponding to the first client, so as to determine the legitimacy of the second key. The first currency management apparatus updates the digital currency record corresponding to the first client, and the second currency management apparatus generates a second digital currency corresponding to the first digital currency, when and only when the first digital currency or the circulation identifier and the second key both pass the verification.

Step S3003: a verification result of the first digital currency or the circulation identifier is sent to the second currency management apparatus, so as to enable the second currency management apparatus to generate the second digital currency corresponding to the first digital currency in the case where the first digital currency or the circulation identifier passes the verification.

Step S3004: In the case where the first digital currency or the circulation identifier passes the verification, the digital currency record corresponding to the first client is updated.

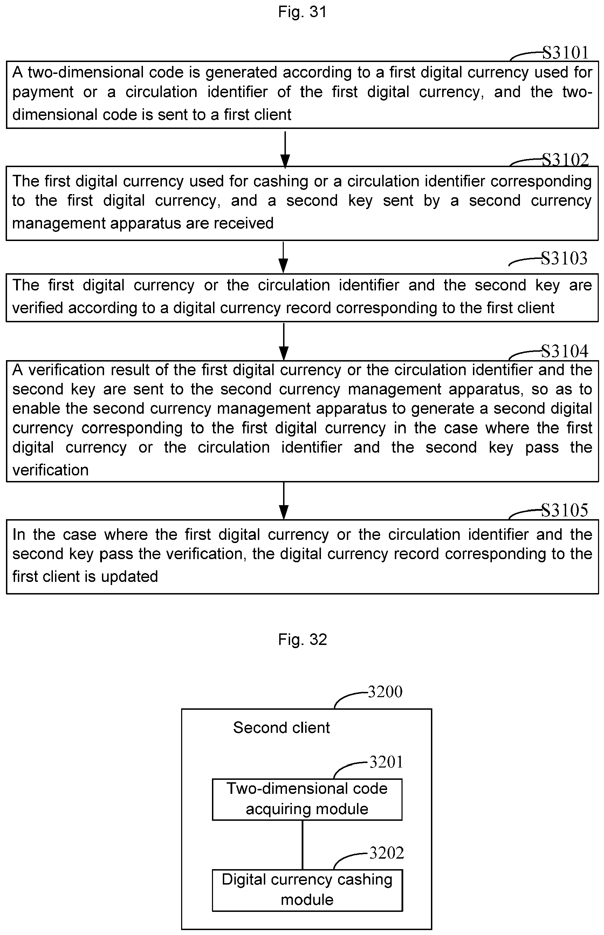

Referring to Fig. 31, according to the above embodiment related to Fig. 30, an embodiment of the present disclosure provides another digital currency payment method applied to a first currency management apparatus. The method may include the following steps:
Step S3101: a two-dimensional code is generated according to a first digital currency used for payment or a circulation identifier of the first digital currency, and the two-dimensional code is sent to a first client.
Step S3102: the first digital currency used for cashing or a circulation identifier corresponding to the first digital currency sent by a second currency management apparatus, and a second key are received.
Step S3103: the first digital currency or the circulation identifier and the second key are verified according to a digital currency record corresponding to the first client.
Step S3104: a verification result of the first digital currency or the circulation identifier and the second key are sent to the second currency management apparatus, so as to enable the second currency management apparatus to generate a second digital currency corresponding to the first digital currency in the case where the first digital currency or the circulation identifier and the second key pass the verification.
Step S3105: In the case where the first digital currency or the circulation identifier and the second key pass the verification, the digital currency record corresponding to the first client is updated.

The first currency management apparatus updates the digital currency record corresponding to the first client, and the second currency management apparatus generates the second digital currency corresponding to the first digital currency, when and only when the first digital currency or the circulation identifier and the second key both pass the verification.

Referring to Fig. 32, corresponding to the above embodiments provided in Fig. 24 to Fig. 26, an embodiment of the present disclosure provides a second client 3200 for digital currency payment. The second client includes: a two-dimensional code acquiring module 3201 and a second digital currency cashing module 3202.

The two-dimensional code acquiring module 3201 is configured to acquire a two-dimensional code provided by a first client, the two-dimensional code indicating a first digital currency used for payment or a circulation identifier corresponding to the first digital currency.

The second digital currency cashing module 3202 is configured to send a digital currency cashing request to a second currency management apparatus corresponding to the second client, the digital currency cashing request indicating the two-dimensional code, or the first digital currency or the circulation identifier acquired by parsing the two-dimensional code, so as to enable the second currency management apparatus to cash, for a first currency management apparatus corresponding to the first client, a second digital currency corresponding to the first digital currency.

In one optional implementation, the two-dimensional code acquiring module 3201 is further configured to:
acquire, in the case where the two-dimensional code is an encrypted two-dimensional code, a first key corresponding to an encryption method of the two-dimensional code before sending the digital currency cashing request to the second currency management apparatus corresponding to the second client; and
decrypt the two-dimensional code with the first key.

In one optional implementation, the second digital currency cashing module 3202 is further configured to:
in the case where the first digital currency indicated by the two-dimensional code is an encrypted first digital currency, or in the case where the circulation identifier indicated by the two-dimensional code is an encrypted circulation identifier, acquire, according to an encryption method corresponding to a denomination of the first digital currency, a second key corresponding to the encryption method; and
send the digital currency cashing request to the second currency management apparatus corresponding to the second client, the digital currency cashing request indicating the first digital currency or the circulation identifier and the second key.

In one optional implementation, the two-dimensional code is generated by the first client or the first currency management apparatus according to the first digital currency or the circulation identifier.

In one optional implementation, the two-dimensional code further indicates one or more of the following information: an identifier of the first currency management apparatus, and a usage scenario of the first digital currency.

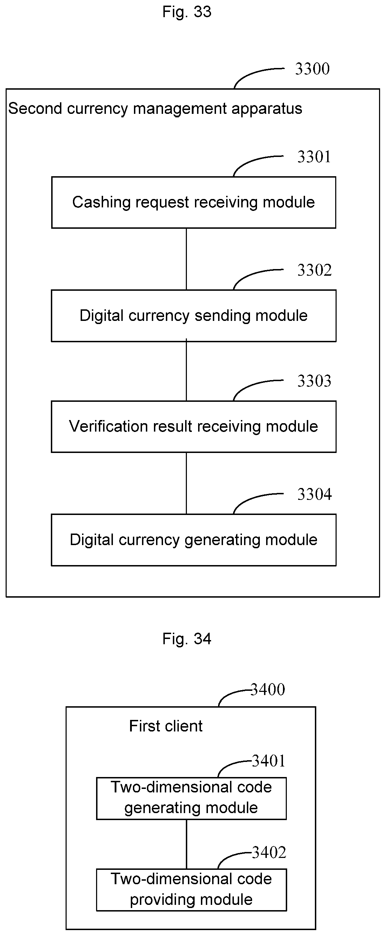

Referring to Fig. 33, corresponding to the embodiment provided in Fig. 27, an embodiment of the present disclosure provides a second currency management apparatus 3300 for digital currency payment. The second currency management apparatus includes: a cashing request receiving module 3301, a digital currency sending module 3302, a verification result receiving module 3303, and a digital currency generating module 3304.

The cashing request receiving module 3301 is configured to receive a digital currency cashing request sent by a second client, the digital currency cashing request indicating a two-dimensional code provided by a first client, or a first digital currency or a circulation identifier corresponding to the first digital currency acquired by parsing the two-dimensional code.

The digital currency sending module 3302 is configured to send the first digital currency or the circulation identifier to a first currency management apparatus corresponding to the first client, so as to enable the first currency management apparatus to verify the first digital currency or the circulation identifier.

The verification result receiving module 3303 is configured to receive a verification result of the first digital currency or the circulation identifier from the first currency management apparatus.

The digital currency generating module 3304 is configured to generate a second digital currency corresponding to the first digital currency in the case where the first digital currency or the circulation identifier passes the verification, and update a digital currency record corresponding to the second client.

In one optional implementation, in the case where the first digital currency is an encrypted first digital currency, or in the case where the circulation identifier is an encrypted circulation identifier, the digital currency cashing request further indicates a second key corresponding to an encryption method corresponding to a denomination of the first digital currency.

Referring to Fig. 34, corresponding to the embodiment provided in Fig. 28, an embodiment of the present disclosure provides a first client 3400 for digital currency payment. The first client includes: a two-dimensional code generating module 3401 and a two-dimensional code providing module 3402.

The two-dimensional code generating module 3401 is configured to generate a two-dimensional code or receive a two-dimensional code sent by a first currency management apparatus corresponding to the first client, the two-dimensional code indicating a first digital currency used for payment or a circulation identifier of the first digital currency.

The two-dimensional code providing module 3402 is configured to provide the two-dimensional code to a second client.

In one optional implementation, the two-dimensional code providing module 3401 is further configured to:
provide, in the case where the two-dimensional code is an encrypted two-dimensional code, a first key corresponding to an encryption method of the two-dimensional code to the second client.

In one optional implementation, the two-dimensional code providing module 3401 is further configured to:
provide, in the case where the first digital currency indicated by the two-dimensional code is an encrypted first digital currency, or in the case where the circulation identifier indicated by the two-dimensional code is an encrypted circulation identifier, a second key to the second client according to an encryption method corresponding to a denomination of the first digital currency.

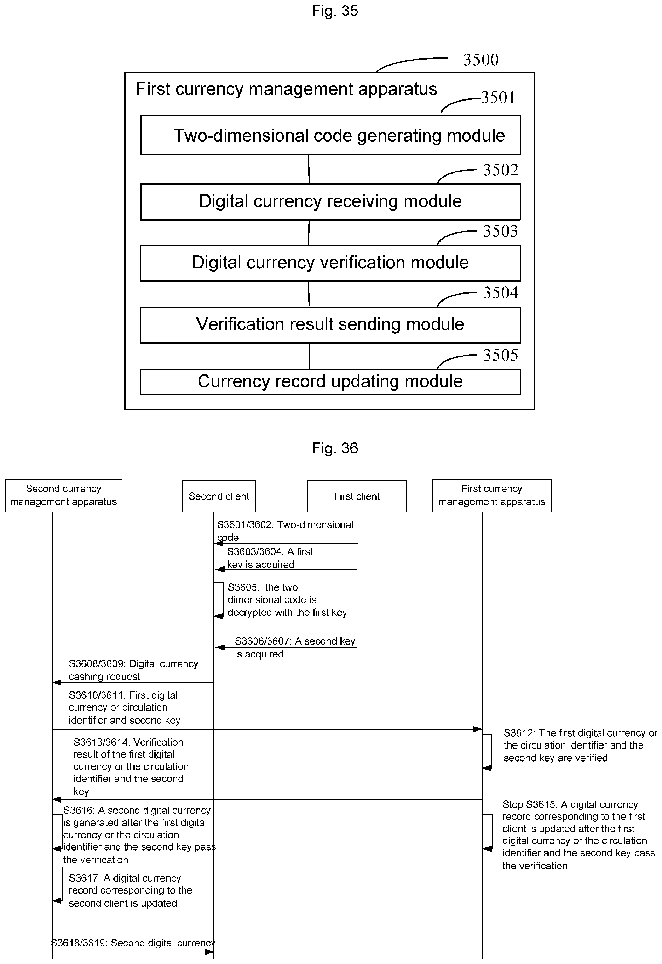

Referring to Fig. 35, corresponding to the embodiment provided in Fig. 30, an embodiment of the present disclosure provides a first currency management apparatus 3500 for digital currency payment. The first currency management apparatus includes: a digital currency receiving module 3502, a digital currency verification module 3503, a verification result sending module 3504, and a currency record updating module 3505.

The digital currency receiving module 3502 is configured to receive a first digital currency used for cashing or a circulation identifier corresponding to the first digital currency sent by a second currency management apparatus.

The digital currency verification module 3503 is configured to verify the first digital currency or the circulation identifier according to a digital currency record corresponding to a first client.

The verification result sending module 3504 is configured to send a verification result of the first digital currency or the circulation identifier to the second currency management apparatus, so as to enable the second currency management apparatus to generate a second digital currency corresponding to the first digital currency in the case where the first digital currency or the circulation identifier passes the verification.

The currency record updating module 3505 is configured to update the digital currency record corresponding to the first client in the case where the first digital currency or the circulation identifier passes the verification.

In one optional implementation, the first currency management apparatus further includes: a two-dimensional code generating module 3501.

The two-dimensional code generating module 3501 is configured to generate a two-dimensional code according to the first digital currency used for payment or the circulation identifier of the first digital currency, and send the two-dimensional code to the first client.

In one optional implementation, the digital currency receiving module 3502 is further configured to: receive, in the case where the first digital currency is an encrypted first digital currency, or in the case where the circulation identifier is an encrypted circulation identifier, a second key, sent by the second currency management apparatus, corresponding to an encryption method corresponding to a denomination of the first digital currency.

The verification result sending module is further configured to verify the second key according to the digital currency record corresponding to the first client.

According to the methods provided in Fig. 24 to Fig. 31, in the digital currency payment system 1100 illustrated in Fig. 11,
the first client 1101 is further configured to provide the two-dimensional code to the second client, the two-dimensional code indicating the first digital currency used for payment or the circulation identifier corresponding to the first digital currency;
the second client 1102 is further configured to receive the two-dimensional code and send the digital currency cashing request to the second currency management apparatus, the digital currency cashing request indicating the two-dimensional code, or the first digital currency or the circulation identifier acquired by parsing the two-dimensional code;
the second currency management apparatus 1104 is further configured to cash, for the first currency management apparatus, the second digital currency corresponding to the first digital currency according to the digital currency cashing request; and
the first currency management apparatus 1103 is further configured to verify the first digital currency or the circulation identifier.

It is worth mentioning that the currency management apparatuses corresponding to the first client and the second client may or may not be the same, and in order to regulate the currency circulation between different currency management apparatuses and avoid illegal transactions between the different currency management apparatuses to further ensure the legitimacy and security of the digital currency, in the case where the first currency management apparatus is different from the second currency management apparatus, the second currency management apparatus may send the first digital currency or the circulation identifier to the first currency management apparatus via a third party currency management apparatus that regulates the different currency management apparatuses. At the same time, the first currency management apparatus, upon verifying the first digital currency or the circulation identifier of the first digital currency, also may send a corresponding verification result to the second currency management apparatus via the third party currency management apparatus.

Referring to Fig. 36, according to the above embodiments provided in Fig. 24 to Fig. 31, an embodiment of the present disclosure provides a digital currency payment method applied to a digital currency payment system. The method specifically include the following steps:
Step S3601: a first client provides a two-dimensional code for a second client, the two-dimensional code indicating a first digital currency or an identifier of the first digital currency. The two-dimensional code may be directly generated by the first client according to the first digital currency or the circulation identifier, or may be received by the first client from a first currency management apparatus.
Step S3602: the second client receives the two-dimensional code sent by the first client. The second client may either directly parse the two-dimensional code to acquire the first digital currency or the circulation identifier, or directly send the two-dimensional code to a corresponding second currency management apparatus to be parsed by the second currency management apparatus, so as to acquire the corresponding first digital currency or circulation identifier.
Step S3603: In the case where the two-dimensional code is an encrypted two-dimensional code, the first client sends a first key corresponding to an encryption method of the two-dimensional code to the second client.
Step S3604: In the case where the two-dimensional code is an encrypted two-dimensional code, the second client receives the first key, corresponding to the encryption method of the two-dimensional code, sent by the first client.
Step S3605: the second client decryptes the two-dimensional code with the first key.
Step S3606: In the case where the first digital currency indicated by the two-dimensional code is an encrypted first digital currency, or in the case where the circulation identifier indicated by the two-dimensional code is an encrypted circulation identifier, the first client provides a second key to the second client, wherein the second key corresponds to an encryption method corresponding to a denomination of the first digital currency.
Step S3607: In the case where the first digital currency indicated by the two-dimensional code is an encrypted first digital currency, or in the case where the circulation identifier indicated by the two-dimensional code is an encrypted circulation identifier, the second client acquires the second key provided by the first client.
Step S3608: the second client sends a digital currency cashing request to the corresponding second currency management apparatus, the digital currency cashing request indicating the two-dimensional code, or the first digital currency or the circulation identifier acquired by parsing the two-dimensional code.
Step S3609: the second currency management apparatus receives the digital currency cashing request sent by the second client, and parses, in the case where the digital currency cashing request indicates the two-dimensional code, the two-dimensional code to acquire the first digital currency or the circulation identifier.
Step S3610: the second currency management apparatus sends the first digital currency or the circulation identifier and the second key to the first currency management apparatus corresponding to the first client.
Step S3611: the first currency management apparatus receives the first digital currency or the circulation identifier and the second key sent by the second currency management apparatus.
Step S3612: the first currency management apparatus verifies the first digital currency or the circulation identifier and the second key.
Step S3613: the first currency management apparatus sends a verification result of the first digital currency or the circulation identifier and the second key to the second currency management apparatus.
Step S3614: the second currency management apparatus receives the verification result of the first digital currency or the circulation identifier and the second key.
Step S3615: the first currency management apparatus updates a digital currency record corresponding to the first client after the first digital currency or the circulation identifier and the second key pass the verification.
Step S3616: the second currency management apparatus generates a second digital currency corresponding to the first digital currency after the first digital currency or the circulation identifier and the second key pass the verification.
Step S3617: the second currency management apparatus updates the digital currency record corresponding to the first client.
Step S3618: the second currency management apparatus issues the second digital currency or a circulation identifier corresponding to the second digital currency to the second client.
Step S3619: the second client receives the second digital currency or the circulation identifier corresponding to the second digital currency issued by the second currency management apparatus.

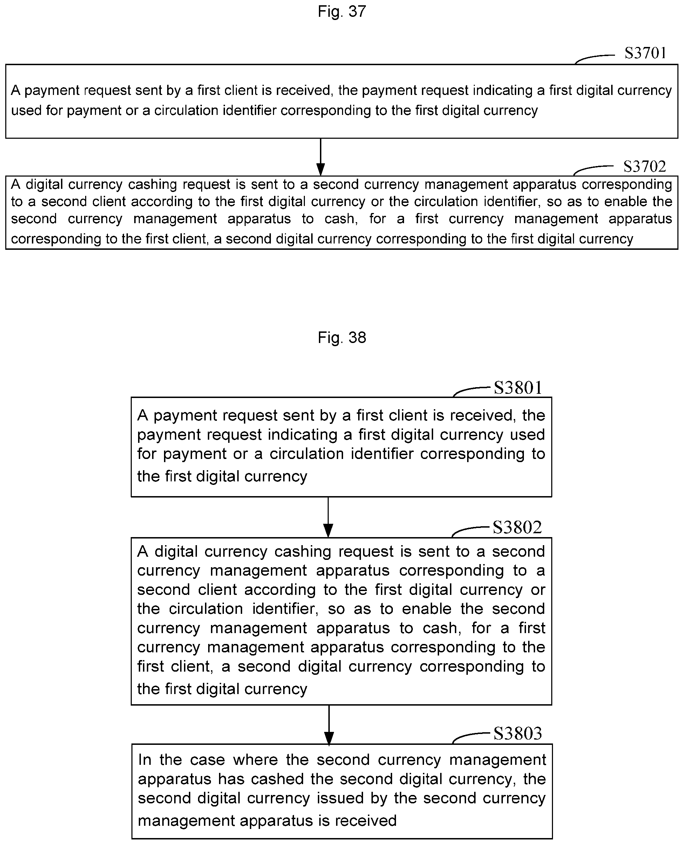

Fig. 37 is a schematic diagram of a main flow of a digital currency payment method applied to a second client according to an embodiment of the present disclosure. As shown in Fig. 37, the digital currency payment method may include the following steps:
Step S3701: a payment request sent by a first client is received, the payment request indicating a first digital currency used for payment or a circulation identifier corresponding to the first digital currency.

A digital currency is a currency that may be used to replace a paper currency for a variety of circulation operations, for example, making payment using the digital currency to achieve a transfer of a holder of the digital currency, or directly transferring the digital currency. As at least one alternative embodiment, the digital currency includes one or more of the following information: a circulation identifier of the digital currency, an identifier of a digital currency management apparatus to which the digital currency belongs, and a signature of the digital currency management apparatus. The circulation identifier of the digital currency refers to a unique circulation identifier (e.g., a serial number) corresponding to the digital currency, which may be in the form of a character string or a two-dimensional code or the like, so as to facilitate the circulation of the digital currency.

Step S3702: a digital currency cashing request is sent to a second currency management apparatus corresponding to the second client according to the first digital currency or the circulation identifier, so as to enable the second currency management apparatus to cash, for a first currency management apparatus corresponding to the first client, a second digital currency corresponding to the first digital currency. In this way, the second currency management apparatus may cash the first digital currency into the second digital currency belonging to the second client according to the first digital currency or the circulation identifier, thereby achieving transfer of the digital currency between different clients to complete payment and other transactions.

As at least one alternative embodiment, the operation that the second currency management apparatus cashes the second digital currency corresponding to the first digital currency for the first currency management apparatus corresponding to the first client includes: sending the first digital currency or the circulation identifier to the first currency management apparatus, so as to enable the first currency management apparatus to verify the first digital currency or the circulation identifier; and in the case where the first digital currency or the circulation identifier passes the verification, generating the second digital currency corresponding to the first digital currency and updating a digital currency record corresponding to the second client.

It is to be understood that a currency management apparatus may record and store a digital currency exported from or generated by the currency management apparatus and/or a corresponding circulation identifier for unified management on the digital currency. Thus, the first currency management apparatus, upon receiving the first digital currency or the circulation identifier sent by the second currency management apparatus, may verify the first digital currency or the circulation identifier as follows: determining whether the first digital currency or the circulation identifier is a first digital currency that has been recorded or stored, so as to verify the legitimacy of the source of the digital currency; or determining, according to an identifier of a currency management apparatus indicated by the first digital currency, whether the identifier of the currency management apparatus is consistent with an identifier of the first currency management apparatus to verify the legitimacy of the source of the digital currency; or performing verification according to a signature of the currency management apparatus included in the first digital currency. For example, if the signature of the currency management apparatus is generated using an asymmetric cryptographic algorithm, the first currency management apparatus may decrypt the signature of the currency management apparatus in the first digital currency by using a private key corresponding to a public key for generating signature information, so as to verify the reliability of the signature information. In this way, both the legitimacy of the source of the first digital currency and the security of digital currency cashing may be ensured.

In the case where the first digital currency or the circulation identifier passes the verification, i.e., where the first digital currency is confirmed to be legitimate, the digital currency record corresponding to the first currency management apparatus is updated. For example, a state of the first digital currency is recorded as unavailable, or the first digital currency is cancelled to stop the circulation of the first digital currency, or an available digital currency balance corresponding to the first client is updated, etc.

Accordingly, the second currency management apparatus generates the second digital currency corresponding to the first digital currency in the case where a verification result that the first digital currency or the circulation identifier passes the verification is received by the first currency management apparatus, and a denomination of the second digital currency shall be the same as a denomination of the first digital currency. At the same time, a digital currency record corresponding to the second client is updated, for example, adding the newly generated second digital currency, and recording a state of the second digital currency as exportable.

It is worth noting that the digital currency in the exportable state is in a negotiable state, that is, after a currency management apparatus notifies the digital currency in the exportable state to a corresponding client, a user of the client may carry out a variety of circulation operations on the digital currency, for example, making payment by using the digital currency to achieve transfer of a holder of the digital currency, or directly transferring the digital currency, and a transferee of the digital currency may make payment or transfer or the like again by using the transferred digital currency. In other words, the digital currency in the exportable state is to a certain extent equivalent to a traditional paper currency, and a holder thereof has the right to use the digital currency.

On this basis, upon generating the second digital currency, the second currency management apparatus may selectively notify the second digital currency or a circulation identifier corresponding to the second digital currency to the second client. Thus, the second client may selectively receive the second digital currency or the circulation identifier corresponding to the second digital currency issued by the second currency management apparatus.

It is worth mentioning that the currency management apparatuses corresponding to the first client and the second client may or may not be the same, and in order to regulate the currency circulation between different currency management apparatuses and avoid illegal transactions between the different currency management apparatuses to further ensure the legitimacy and security of the digital currency, in the case where the first currency management apparatus is different from the second currency management apparatus, the second currency management apparatus may send the first digital currency or the circulation identifier to the first currency management apparatus via a third party currency management apparatus that regulates the different currency management apparatuses. At the same time, upon verifying the first digital currency or the circulation identifier of the first digital currency, the first currency management apparatus may also send a corresponding verification result to the second currency management apparatus via the third party currency management apparatus.

In addition, to further ensure the security of the digital currency, the user of the first client may encrypt the first digital currency or the circulation identifier corresponding to the first digital currency when making payment using the first digital currency or the circulation identifier. That is, a payment password is set for the first digital currency or the circulation identifier, such that the second client may continue to complete the payment normally only when acquiring the correct payment password. As at least one alternative embodiment, encryption methods used may be any one or a combination of string encryption (letters, numbers, or a combination of letters and numbers), question and answer, voiceprint recognition, face recognition, and picture recognition. Different encryption methods correspond to different keys. For example, keys corresponding to string encryption are all-letter strings (letter encryption), all-number strings (number encryption), or strings including both letters and numbers (letter and number combined encryption); keys corresponding to question and answer are one or more pairs of questions and answers; keys corresponding to voiceprint recognition are audio or files in other formats (e.g., a feature value extracted by a voiceprint recognition model) that may characterize a voiceprint of a user; keys corresponding to face recognition are images or files in other formats (e.g., a feature value extracted by a face recognition model) that may characterize face features of the user, and keys corresponding to picture recognition are one or more images selected by the user. In addition, the user corresponding to the first client may customize the encryption method, or the first currency management apparatus may define the encryption method according to factors such as ease of management or own operation conditions.

Based on this, in the case where the first digital currency is an encrypted first digital currency, or the circulation identifier is an encrypted circulation identifier, a key corresponding to an encryption method corresponding to the denomination of the first digital currency is acquired, and the digital currency cashing request is sent to the second currency management apparatus corresponding to the second client, the digital currency cashing request indicating the first digital currency or the circulation identifier and the key corresponding to the encryption method.

That is, in order to take into account the security and convenience of digital currency payment, different encryption methods may be set according to a transaction amount. For example, when the transaction amount is greater than a set threshold, a password of voiceprint recognition, face recognition and other biometric types are used for verification of digital currency payment, and when the transaction amount is less than the set threshold, keys corresponding to letter encryption and number encryption are used for verification of digital currency payment.

As at least one alternative embodiment, encryption methods corresponding to different transaction amounts and keys corresponding to the encryption methods are pre-stored in the first currency management apparatus. When the second client receives the payment request from the first client, a user of the second client may directly enter the payment password informed by the user of the first client, or the user of the second client may let the user of the first client directly to enter a payment password such as a voiceprint audio, and the second client adds the payment password to the digital currency cashing request and sends same to the second currency management apparatus, so as to enable the second currency management apparatus to send the first digital currency or the circulation identifier and the payment password to the first currency management apparatus. Based on this, when receiving the first digital currency or the circulation identifier and the payment password sent by the second currency management apparatus, the first currency management apparatus verifies the received payment password according to the pre-stored payment password corresponding to the transaction amount to ensure the legitimacy of the identity of the user of the first client, so as to further ensure the security of digital currency payment.

According to the digital currency payment method provided by the embodiments above, in the actual transaction process, the first client may directly initiate the payment request to the second client, the payment request indicating the first digital currency used for payment or the circulation identifier corresponding to the first digital currency, so as to enable the second client may apply to, according to the received first digital currency or circulation identifier, the second currency management apparatus for cashing the first digital currency into the second digital currency belonging to the second client, thus achieving circulation of the digital currency between different clients. In addition, in the process of cashing into the second digital currency by the second currency management apparatus, the first digital currency or the circulation identifier may be verified by the first currency management apparatus, thereby ensuring the security and legitimacy of the digital currency in the payment process.

Referring to Fig. 38, according to the above embodiments, an embodiment of the present disclosure provides another digital currency payment method applied to a second client. The method may include the following steps:
Step S3801: a payment request sent by a first client is received, the payment request indicating a first digital currency used for payment or a circulation identifier corresponding to the first digital currency.
Step S3802: a digital currency cashing request is sent to a second currency management apparatus corresponding to the second client according to the first digital currency or the circulation identifier, so as to enable the second currency management apparatus to cash, for a first currency management apparatus corresponding to the first client, a second digital currency corresponding to the first digital currency.
Step S3803: In the case where the second currency management apparatus has cashed the second digital currency, the second digital currency issued by the second currency management apparatus is received.

As at least one alternative embodiment, upon generating the second digital currency and/or a circulation identifier of the second digital currency, the second currency management apparatus may selectively notify the second digital currency or the circulation identifier corresponding to the second digital currency to the second client, and the second client may receive the second digital currency or the circulation identifier corresponding to the second digital currency issued by the second currency management apparatus.

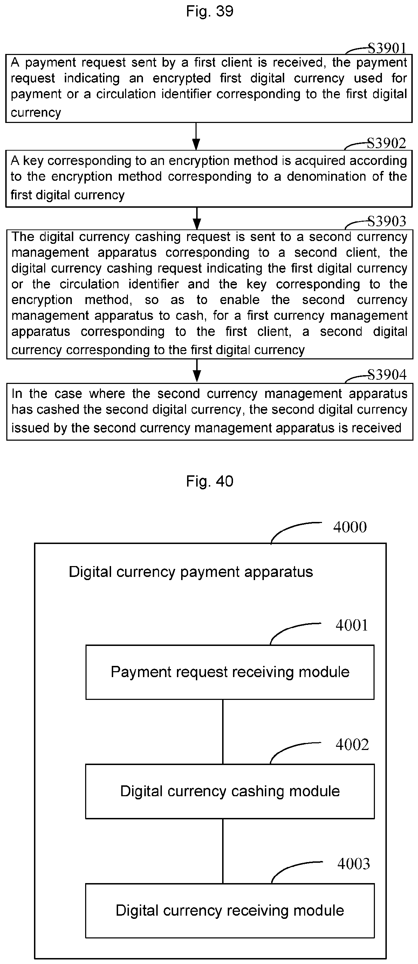

Referring to Fig. 39, according to the above embodiments, an embodiment of the present disclosure provides yet another digital currency payment method applied to a second client. The method may specifically include the following steps:
Step S3901: a payment request sent by a first client is received, the payment request indicating an encrypted first digital currency used for payment or a circulation identifier corresponding to the first digital currency.

That is, a user of the first client sets a payment password for the first digital currency or the circulation identifier, such that the second client may continue to complete the payment normally only when acquiring the correct payment password. As at least one alternative embodiment, encryption methods used may be any one or a combination of string encryption (letters, numbers, or a combination of letters and numbers), question and answer, voiceprint recognition, face recognition, and picture recognition. At the same time, in order to take into account the security and convenience of digital currency payment, different encryption methods may be set according to a transaction amount. For example, when the transaction amount is greater than a set threshold, a password of voiceprint recognition, face recognition and other biometric types is used for verification of digital currency payment, and when the transaction amount is less than the set threshold, keys corresponding to letter encryption and number encryption are used for verification of digital currency payment.

Step S3902: a key corresponding to the encryption method is acquired according to an encryption method corresponding to a denomination of the first digital currency.

When the second client receives the payment request from the first client, a user of the second client may directly enter the payment password informed by the user of the first client, or the user of the first client may directly enter a payment password such as a voiceprint audio, and the second client adds the payment password to a digital currency cashing request and send same to a second currency management apparatus, so as to enable the second currency management apparatus sends the first digital currency or the circulation identifier and the payment password to the first currency management apparatus.

Step S3903: the digital currency cashing request is sent to the second currency management apparatus corresponding to the second client, the digital currency cashing request indicating the first digital currency or the circulation identifier and the key corresponding to the encryption method, so as to enable the second currency management apparatus to cash, for a first currency management apparatus corresponding to the first client, a second digital currency corresponding to the first digital currency.

When receiving the first digital currency or the circulation identifier and the payment password sent by the second currency management apparatus, the first currency management apparatus verifies the received payment password according to the pre-stored payment password corresponding to the transaction amount to ensure the legitimacy of the identity of the user of the first client, so as to further ensure the security of digital currency payment.

Step S3904: In the case where the second currency management apparatus has cashed the second digital currency, the second digital currency issued by the second currency management apparatus is received.

Referring to Fig. 40, according to the above embodiments, a digital currency payment apparatus 4000 applied to a second client is provided. The digital currency payment apparatus includes: a payment request receiving module 4001 and a digital currency cashing module 4002.

The payment request receiving module 4001 is configured to receive a payment request sent by a first client, the payment request indicating a first digital currency used for payment or a circulation identifier corresponding to the first digital currency.

The digital currency cashing module 4002 is configured to send a digital currency cashing request to a second currency management apparatus corresponding to the second client according to the first digital currency or the circulation identifier, so as to enable the second currency management apparatus to cash, for a first currency management apparatus corresponding to the first client, a second digital currency corresponding to the first digital currency.

In one optional implementation, the digital currency payment apparatus 4000 further includes: a digital currency receiving module 4003.

The digital currency receiving module 4003 is configured to receive, in the case where the second currency management apparatus has cashed the second digital currency, the second digital currency issued by the second currency management apparatus.

In one optional implementation, the operation that the second currency management apparatus cashes, for the first currency management apparatus corresponding to the first client, the second digital currency corresponding to the first digital currency includes:
sending the first digital currency or the circulation identifier to the first currency management apparatus, so as to enable the first currency management apparatus to verify the first digital currency or the circulation identifier; and
in the case where the first digital currency or the circulation identifier passes the verification, generating the second digital currency corresponding to the first digital currency, and updating a digital currency record corresponding to the second client.

In one optional implementation, in the case where the first currency management apparatus is different from the second currency management apparatus, the second currency management apparatus sends the first digital currency or the circulation identifier to the first currency management apparatus via a third party currency management apparatus.

In one optional implementation, after the first digital currency or the circulation identifier passes the verification, the first currency management apparatus updates a digital currency record corresponding to the first client.

In one optional implementation, the digital currency cashing module 4002 is further configured to: acquire, in the case where the first digital currency is an encrypted first digital currency or the circulation identifier is an encrypted circulation identifier, a key corresponding to an encryption method corresponding to a denomination of the first digital currency; and
send the digital currency cashing request to the second currency management apparatus corresponding to the second client, the digital currency cashing request indicating the first digital currency or the circulation identifier and the key corresponding to the encryption method.

According to the methods provided in Fig. 37 to Fig. 39, in the digital currency payment system 1100 illustrated in Fig. 11,
the first client 1101 is further configured to send the payment request to the second client;
the second client 1102 is further configured to: receive the payment request sent by the first client, the payment request indicating the first digital currency used for payment or the circulation identifier corresponding to the first digital currency, and send the digital currency cashing request to the second currency management apparatus corresponding to the second client according to the first digital currency or the circulation identifier;
the second currency management apparatus 1103 is further configured to cash, for the first currency management apparatus corresponding to the first client, the second digital currency corresponding to the first digital currency according to the digital currency cashing request; and
the first currency management apparatus 1104 is further configured to verify the first digital currency or the circulation identifier.

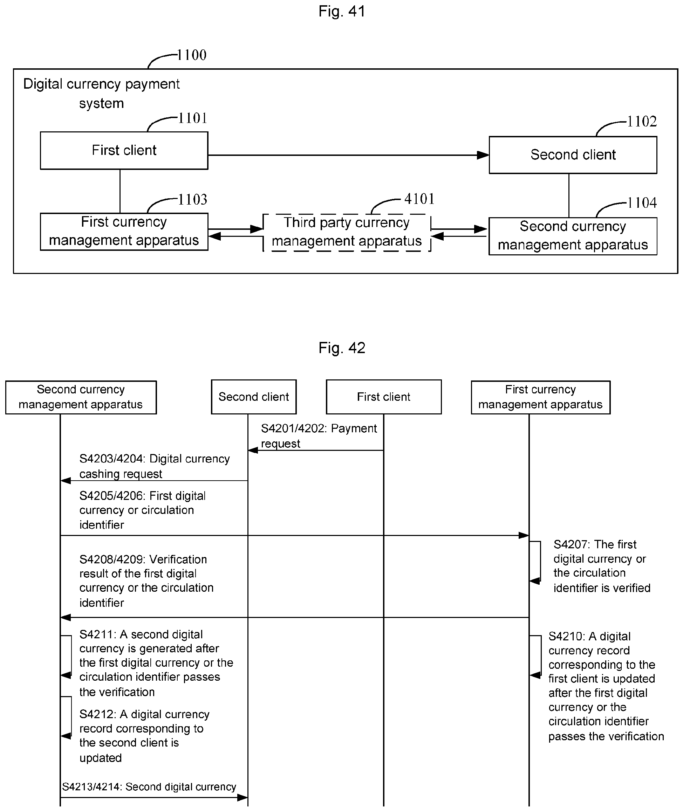

In one optional implementation, as shown in Fig. 41, the digital currency payment system further includes: a third party currency management apparatus 4101.

The third party currency management apparatus 4101 is configured to send, in the case where the first currency management apparatus 1103 is different from the second currency management apparatus 1104, the first digital currency or the circulation identifier to the first currency management apparatus 1103.

Referring to Fig. 42, according to the above embodiments provided in Fig. 37 to Fig. 39, an embodiment of the present disclosure provides a digital currency payment method applied to a digital currency payment system. The method may specifically include the following steps:
Step S4201: a first client sends a payment request to a second client, the payment request indicating a first digital currency used for payment or a circulation identifier corresponding to the first digital currency.
Step S4202: the second client receives the payment request sent by the first client.

In the case where the first digital currency indicated by the payment request is an encrypted first digital currency or the circulation identifier corresponding to the first digital currency is an encrypted circulation identifier, the second client is further required to acquire a payment password corresponding to a denomination of the first digital currency. As at least one alternative embodiment, when the second client receives the payment request from the first client, a user of the second client may directly enter the payment password informed by a user of the first client, or the user of the first client may directly enter the payment password such as a voiceprint audio, and the second client adds the payment password to a digital currency cashing request and sends same to the second currency management apparatus, so as to enable the second currency management apparatus to send the first digital currency or the circulation identifier and the payment password to the first currency management apparatus.

Step S4203: the second client sends the digital currency cashing request to the second currency management apparatus, the digital currency cashing request indicating the first digital currency or the circulation identifier of the first digital currency. In addition, in the case where the user of the first client has set the payment password, the digital currency cashing request shall further include the payment password acquired by the second client.

Step S4204: the second currency management apparatus receives the digital currency cashing request sent by the second client.

Step S4205: the second currency management apparatus sends the first digital currency or the circulation identifier of the first digital currency to the first currency management apparatus. In the case where the user of the first client has set the payment password, the second currency management apparatus is further required to send the payment password acquired by the second client to the first currency management apparatus.

Step S4206: the first currency management apparatus receuves the first digital currency or the circulation identifier of the first digital currency sent by the second currency management apparatus. In addition, in the case where the user of the first client has set the payment password, the first currency management apparatus further receives the payment password sent by the second currency management apparatus.

Step S4207: the first currency management apparatus verifies the first digital currency or the circulation identifier of the first digital currency. In addition, in the case where the user of the first client has set the payment password, the first currency management apparatus is further required to verify the payment password sent by the second currency management apparatus.

Step S4208: the first currency management apparatus sends a verification result of the first digital currency or the circulation identifier of the first digital currency to the second currency management apparatus.

Step S4209: the second currency management apparatus receives the verification result of the first digital currency or the circulation identifier of the first digital currency sent by the first currency management apparatus. As at least one alternative embodiment, if the verification result is that the first digital currency or the circulation identifier passes the verification, the first currency management apparatus continues to perform the following step S4210, and the second currency management apparatus continues to perform the following steps S4211-S4214; and if the verification result is that the first digital currency or the circulation identifier fails to pass the verification, the current payment transaction is stopped.

Step S4210: the first currency management apparatus updates a digital currency record corresponding to the first client after the first digital currency or the circulation identifier passes the verification.

Step S4211: the second currency management apparatus generates a second digital currency corresponding to the first digital currency after the first digital currency or the circulation identifier passes the verification.

Step S4212: the second currency management apparatus updates a digital currency record corresponding to the second client.

Step S4213: the second currency management apparatus issues the second digital currency to the second client. In addition, the second currency management apparatus may also issue a circulation identifier corresponding to the second digital currency to the second client.

Step S4214: the second client receives the second digital currency issued by the second currency management apparatus. In addition, the second client may also receive the circulation identifier corresponding to the second digital currency issued by the second currency management apparatus.

Fig. 42 illustrates an exemplary system architecture 4200 to which the digital currency payment method or the digital currency payment apparatus according to an embodiment of the present disclosure may be applied.

As shown in Fig. 42, the system architecture 4200 may include terminal devices 4201, 4202 and 4203, a network 4204, and a server 4205. The network 4204 is used for providing a medium for a communication link between the terminal devices 4201, 4202 and 4203 and the server 4205. The network 4204 may include various connection types, such as wired communication links, wireless communication links, and fiber optic cables.

Users may use the terminal devices 4201, 4202 and 4203 to interact with the server 4205 via the network 4204, so as to receive or send messages, etc. Various communication client applications, such as shopping applications, web browser applications, search applications, instant messengers, email clients, and social platform software, may be installed on the terminal devices 4201, 4202 and 4203.

The terminal devices 4201, 4202 and 4203 may be various electronic devices that have displays and support web browsing, including but not limited to smart phones, tablets, laptops and desktop computers, etc.

The server 4205 may be a server that provides various services, such as a backend management server that supports shopping websites viewed by users via the terminal devices 4201, 4202 and 4203. The backend management server may perform analysis and other processing on received data such as a product information query request, and feed processing results to the terminal devices.

It should be noted that the digital currency payment method according to the embodiment of the present disclosure is generally executed by the server 4205, and accordingly, the digital currency payment apparatus is generally provided in the server 4205.

It is to be understood that the numbers of the terminal devices, the network, and the server in Fig. 42 are merely schematic. Any number of terminal devices, networks, and servers may be provided as required by the implementation.

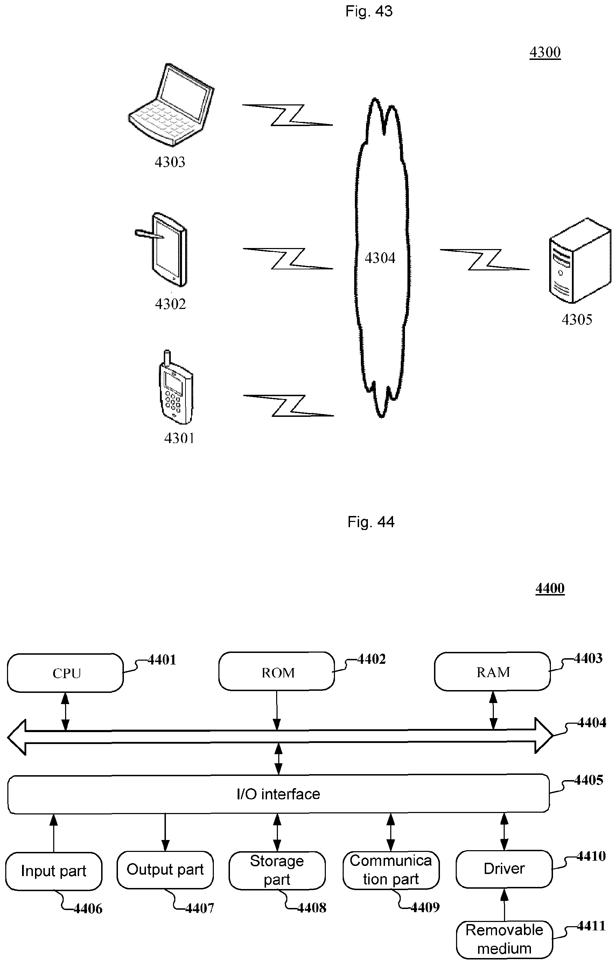

Reference is made below to Fig. 43, which illustrates a schematic structural diagram of a computer system 4300 suitable for implementing the terminal device according to the embodiment of the present disclosure. The terminal device shown in Fig. 43 is only one example and should not impose any limitation on the function and scope of usage of the embodiments of the present disclosure.

As shown in Fig. 43, the computer system 4300 includes a central processing unit (CPU) 4301 that may perform various appropriate actions and processing according to programs stored in a read-only memory (ROM) 4302 or programs loaded from a storage part 4308 into a random access memory (RAM) 4303. Programs and data required for operations of the system 4300 may be further stored in the RAM 4303. The CPU 4301, the ROM 4302, and the RAM 4303 are connected to each other via a bus 4304. An input/output (I/O) interface 4305 is also connected to the bus 4304.

The following components are connected to the I/O interface 4305: an input part 4306 including a keyboard, a mouse, etc.; an output part 4307 including a cathode ray tube (CRT), a liquid crystal display (LCD) and a speaker, etc.; the storage part 4308 including a hard disk, etc.; and a communication part 4309 including network interface cards such as an LAN card and a modem. The communication part 4309 performs communication processing via a network such as the Internet. A driver 4310 is also connected to the I/O interface 4305 as needed. A removable medium 4311, such as a disk, a compact disk, a magnetic disk and a semiconductor memory, is installed on the driver 4310 as needed such that computer programs read therefrom are installed into the storage part 4308 as needed.

In particular, according to the embodiments of the present disclosure, the process described above with reference to the flow diagrams may be implemented as a computer software program. For example, the embodiments of the present disclosure include a computer program product. The computer program product includes a computer program carried on a computer-readable medium. The computer program includes a program code for performing the method shown in the flow diagrams. According to this embodiment, the computer program may be downloaded and installed from the network via the communication part 4309, and/or installed from the removable medium 4311. The computer program, when executed by the central processing unit (CPU) 4301, performs the above functions as defined in the system according to the present disclosure.

It is to be noted that the computer-readable medium according to the present disclosure may be a computer-readable signal medium or a computer-readable storage medium or any combination of both of the above. The computer-readable storage medium may be, for example, but is not limited to, an electrical, magnetic, optical, electromagnetic, infrared, or semiconductor system, apparatus, or device, or any combination of the above. More specific examples of the computer-readable storage medium may include, but are not limited to: electrical connection via one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic memory device, or any suitable combination of the above. According to the present disclosure, the computer-readable storage medium may be any tangible medium that includes or stores a program, and the program may be used by or in combination with an instruction execution system, apparatus, or device. According to the present disclosure, the computer-readable signal medium may include data signals propagated in a baseband or as part of a carrier wave, in which computer-readable program codes are carried. Such propagated data signals may be in a variety of forms, including but not limited to electromagnetic signals, optical signals, or any suitable combination of the above. The computer-readable signal medium may also be any computer-readable medium other than the computer-readable storage medium, and the computer-readable medium may send, propagate, or transmit a program for use by or in conjunction with the instruction execution system, apparatus, or device. The program codes included by the computer-readable medium may be transmitted via any suitable medium, including but not limited to: wireless, wired, fiber optic cables, RF, etc., or any suitable combination of the above.

The flow diagrams and the block diagrams in the accompanying drawings illustrate possible implementations of the architecture, functionality, and operation of the system, the method, and the computer program product according to the embodiments of the present disclosure. In this regard, each block in the flow diagrams or block diagrams may represent a module, a program segment, or part of a code, the module, the program segment, or part of the code including one or more executable instructions for implementing specified logical functions. It is also to be noted that in some alternative implementations, the functions noted in the blocks may also occur out of the order noted in the accompanying drawings. For example, two blocks shown in succession may actually be executed in parallel substantially, and sometimes they may also be executed in an inverse order, which depends upon the functionality involved. It is also to be noted that each block in the block diagrams or flow diagrams as well as a combination of blocks in the block diagrams or flow diagrams may be implemented using a special hardware-based system that executes specified functions or operations, or implemented using a combination of special hardware and computer instructions.

The digital currency payment described in the embodiments of the present disclosure may be implemented in a software-based manner or may be implemented in a hardware-based manner. The described digital currency payment may also be provided in a processor, for example, a processor may be described as including a transaction amount sending module and a payment request sending module. The names of digital currency payment do not in some cases constitute a limitation of digital currency payment itself, for example, the transaction amount sending module may also be described as "a module configured to send a transaction amount to a first currency management apparatus corresponding to a first client".

As another aspect, the present disclosure further provides a computer-readable medium, which may be included in the device described in the above embodiments, or be present separately and not fitted into the device. The computer-readable medium described above hosts one or more programs. The one or more programs, when executed by the device, cause the device to include: sending a transaction amount to a first currency management apparatus corresponding to a first client, so as to enable the first currency management apparatus to determine whether the transaction amount is greater than an available balance of a first digital currency used for payment; and in the case where the transaction amount is not greater than the available balance, sending a payment request to a second client, the payment request indicating the first digital currency or a circulation identifier of the first digital currency, so as to enable a second currency management apparatus corresponding to the second client to cash, for the first currency management apparatus, a second digital currency corresponding to the transaction amount.

The computer-readable medium described above hosts one or more programs. The one or more programs, when executed by the device, cause the device to include: sending a transaction amount to a first currency management apparatus corresponding to the first client, so as to enable the first currency management apparatus to divide, in the case where the transaction amount is less than a denomination of a first digital currency used for payment, the first digital currency into a third digital currency and a fourth digital currency, where a denomination of the third digital currency indicates the transaction amount, and a denomination of the fourth digital currency indicates a difference between the denomination of the first digital currency and the transaction amount; receiving the third digital currency issued by the first currency management apparatus; and sending a payment request to a second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

The computer-readable medium described above hosts one or more programs. The one or more programs, when executed by the device, cause the device to include: receiving a payment request sent by a first client, the payment request indicating a first digital currency used for payment or a circulation identifier corresponding to the first digital currency; and sending a digital currency cashing request to a second currency management apparatus corresponding to a second client according to the first digital currency or the circulation identifier, so as to enable the second currency management apparatus to cash, for a first currency management apparatus corresponding to the first client, a second digital currency corresponding to the first digital currency.

The computer-readable medium described above hosts one or more programs. The one or more programs, when executed by the device, cause the device to include: sending a transaction amount to a first currency management apparatus corresponding to a first client, so as to enable the first currency management apparatus to determine whether the transaction amount is greater than an available balance of a first digital currency used for payment; and in the case where the transaction amount is not greater than the available balance, sending a payment request to a second client, the payment request indicating the first digital currency or a circulation identifier of the first digital currency, so as to enable a second currency management apparatus corresponding to the second client to cash, for the first currency management apparatus, a second digital currency corresponding to the transaction amount.

According to the technical solutions of the embodiments of the present disclosure, by maintaining the available balance of the first digital currency used for payment through the first currency management apparatus corresponding to the first client, and comparing the available balance with the transaction amount, a payment transaction may be conducted normally when and only when the transaction amount is not greater than the available balance, thereby achieving control over the transaction amount, avoiding a user of the first client from overdrawing an account for illegal transactions, and ensuring the security and reliability of the digital currency transaction process.

According to the technical solutions of the embodiments of the present disclosure, the first currency management apparatus corresponding to the first client determines whether the transaction amount is less than the denomination of the first digital currency used for payment; divides, in the case where the transaction amount is less than the denomination of the first digital currency, the first digital currency into the fourth digital currency and the third digital currency corresponding to the transaction amount; and makes a payment by using the third digital currency, thereby achieving cashing and change of the digital currency in the digital currency payment process, and improving the security and convenience in the digital currency payment process.

According to the technical solutions of the embodiments of the present disclosure, by using the two-dimensional code to carry a digital currency or the circulation identifier of the digital currency, and using the two-dimensional code to carry out the digital currency payment, the first client conducting the payment transaction does not need to maintain a communication connection with the second client, and even if the first client is in an offline state, the two-dimensional code may be displayed to the second client through a pre-stored two-dimensional code image or file or the like, so as to continue normal digital currency payment, which improves the convenience of digital currency payment. In addition, by encrypting the two-dimensional code, and/or encrypting the digital currency or the circulation identifier of the digital currency indicated by the two-dimensional code, the security in the digital currency payment process is further improved.

According to the technical solutions of the embodiments of the present disclosure, in the actual transaction process, the first client may directly initiate the payment request to the second client, the payment request indicating the first digital currency used for payment or the circulation identifier corresponding to the first digital currency, so that the second client may apply to, according to the received first digital currency or circulation identifier, the second currency management apparatus for cashing the first digital currency into the second digital currency which is attributable to the second client, thereby achieving circulation of the digital currency between different clients. In addition, in the process of cashing into the second digital currency by the second currency management apparatus, the first digital currency or the circulation identifier may be verified by the first currency management apparatus, thereby ensuring the security and legitimacy of the digital currency in the payment process.

The specific implementations above are not to be construed as limiting the scope of protection of the present disclosure. It will be apparent to a person skilled in the art that various modifications, combinations, sub-combinations, and substitutions may occur, depending upon design requirements and other factors. Any modification, equivalent substitution, improvement, etc. made within the spirit and principles of the present disclosure shall fall within the scope of protection of the present disclosure.

## Claims

1. A digital currency payment method, applied to a first client and comprising:
sending a transaction amount to a first currency management apparatus corresponding to the first client, so as to enable the first currency management apparatus to determine whether the transaction amount is greater than an available balance of a first digital currency used for payment; and
in a case where the transaction amount is not greater than the available balance, sending a payment request to a second client, the payment request indicating the first digital currency or a circulation identifier of the first digital currency, so as to enable a second currency management apparatus corresponding to the second client to cash, for the first currency management apparatus, a second digital currency corresponding to the transaction amount.

2. The digital currency payment method as claimed in claim 1, wherein
in a case where the second currency management apparatus has cashed the second digital currency, the first currency management apparatus updates the available balance of the first digital currency, and the available balance after updating indicates a difference between the available balance before updating and the transaction amount.

3. A digital currency payment method, applied to a first client and comprising:
sending a transaction amount to a first currency management apparatus corresponding to the first client, so as to enable the first currency management apparatus to divide, in a case where the transaction amount is less than a denomination of a first digital currency used for payment, the first digital currency into a third digital currency and a fourth digital currency, wherein a denomination of the third digital currency indicates the transaction amount, and a denomination of the fourth digital currency indicates a difference between the denomination of the first digital currency and the transaction amount;
receiving the third digital currency issued by the first currency management apparatus; and
sending a payment request to a second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

4. The digital currency payment method as claimed in claim 3, wherein
in a case where the second currency management apparatus has cashed the third digital currency, the first currency management apparatus updates a digital currency used for payment to the fourth digital currency.

5. The digital currency payment method as claimed in claim 1 or 3, further comprising:
sending a digital currency exporting request to the first currency management apparatus, the digital currency exporting request indicating the denomination of the first digital currency, so as to enable the first currency management apparatus to generate the first digital currency and to record the first digital currency as a digital currency used for payment.

6. The digital currency payment method as claimed in claim 1 or 3, further comprising:
before sending the transaction amount to the first currency management apparatus, generating the transaction amount or receiving the transaction amount sent by the second client.

7. A digital currency payment method, applied to a first client and comprising:
generating a two-dimensional code or receiving a two-dimensional code sent by a first currency management apparatus corresponding to the first client, the two-dimensional code indicating a first digital currency used for payment or a circulation identifier of the first digital currency; and
providing the two-dimensional code to a second client.

8. The digital currency payment method as claimed in claim 7, further comprising:
in a case where the two-dimensional code is an encrypted two-dimensional code, providing a first key corresponding to an encryption method of the two-dimensional code to the second client.

9. The digital currency payment method as claimed in claim 7, further comprising:
in a case where the first digital currency indicated by the two-dimensional code is an encrypted first digital currency, or in a case where the circulation identifier indicated by the two-dimensional code is an encrypted circulation identifier, providing a second key to the second client according to an encryption method corresponding to a denomination of the first digital currency.

10. A digital currency payment method, applied to a first currency management apparatus and comprising:
receiving a transaction amount sent by a first client and determining whether the transaction amount is greater than an available balance of a first digital currency used for payment; and
in a case where the transaction amount is not greater than the available balance, notifying the first client to send a payment request to a second client, the payment request indicating the first digital currency or a circulation identifier of the first digital currency.

11. The digital currency payment method as claimed in claim 10, further comprising:
receiving a digital currency exporting request sent by the first client, the digital currency exporting request indicating a denomination of the first digital currency; and
generating the first digital currency according to the digital currency exporting request, and recording the available balance corresponding to the first digital currency as the denomination of the first digital currency.

12. The digital currency payment method as claimed in claim 10, further comprising:
in a case of receiving the first digital currency or the circulation identifier sent by a second currency management apparatus corresponding to the second client, verifying the first digital currency or the circulation identifier;
sending a verification result of the first digital currency or the circulation identifier to the second currency management apparatus; and
in a case where the first digital currency or the circulation identifier passes a verification, updating the available balance of the first digital currency, the available balance after updating indicating a difference between the available balance before updating and the transaction amount.

13. A digital currency payment method, applied to a first currency management apparatus and comprising:
receiving a transaction amount sent by a first client corresponding to the first currency management apparatus;
determining whether the transaction amount is less than a denomination of a first digital currency used for payment;
in a case where the transaction amount is less than the denomination of the first digital currency, dividing the first digital currency into a third digital currency and a fourth digital currency, wherein a denomination of the third digital currency indicates the transaction amount, and a denomination of the fourth digital currency indicates a difference between the denomination of the first digital currency and
the transaction amount; and
issuing the third digital currency to the first client, so as to enable the first client to make a payment by using the third digital currency.

14. The digital currency payment method as claimed in claim 13, further comprising:
receiving a digital currency exporting request sent by the first client, the digital currency exporting request indicating the denomination of the first digital currency; and
generating the first digital currency according to the digital currency exporting request, and recording the first digital currency as a digital currency used for payment.

15. The digital currency payment method as claimed in claim 13, further comprising:
in a case of receiving the third digital currency or a circulation identifier sent by a second currency management apparatus corresponding to a second client, verifying the third digital currency or the circulation identifier;
sending a verification result of the third digital currency or the circulation identifier to the second currency management apparatus; and
in a case where the third digital currency or the circulation identifier passes a verification, updating a digital currency used for payment to the fourth digital currency.

16. A digital currency payment method, applied to a first currency management apparatus and comprising:
receiving a first digital currency used for cashing or a circulation identifier corresponding to the first digital currency sent by a second currency management apparatus;
verifying the first digital currency or the circulation identifier according to a digital currency record corresponding to a first client;
sending a verification result of the first digital currency or the circulation identifier to the second currency management apparatus, so as to enable the second currency management apparatus to generate, in a case where the first digital currency or the circulation identifier passes a verification, a second digital currency corresponding to the first digital currency; and
in the case where the first digital currency or the circulation identifier passes the verification, updating the digital currency record corresponding to the first client.

17. The digital currency payment method as claimed in claim 16, further comprising:
generating a two-dimensional code according to the first digital currency used for payment or the circulation identifier of the first digital currency, and sending the two-dimensional code to the first client.

18. The digital currency payment method as claimed in claim 16, further comprising:
in a case where the first digital currency is an encrypted first digital currency, or in a case where the circulation identifier is an encrypted circulation identifier, receiving a second key corresponding to an encryption method corresponding to a denomination of the first digital currency sent by the second currency management apparatus; and
verifying the second key according to the digital currency record corresponding to the first client.

19. A digital currency payment method, applied to a second client and comprising:
receiving a payment request sent by a first client, the payment request indicating a first digital currency used for payment or a circulation identifier of the first digital currency; and
sending a digital currency cashing request to a second currency management apparatus corresponding to the second client, the digital currency cashing request indicating a transaction amount and the first digital currency or the circulation identifier, so as to enable the second currency management apparatus to cash, for a first currency management apparatus corresponding to the first client, a second digital currency corresponding to the transaction amount.

20. The digital currency payment method as claimed in claim 19, further comprising:
generating the transaction amount or receiving the transaction amount sent by the first client.

21. A digital currency payment method, applied to a second client and comprising:
receiving a payment request sent by a first client, the payment request indicating a third digital currency used for payment or a circulation identifier of the third digital currency; and
sending a digital currency cashing request to a second currency management apparatus corresponding to the second client, the digital currency cashing request indicating the third digital currency or the circulation identifier, so as to enable the second currency management apparatus to cash, for a first currency management apparatus corresponding to the first client, a fifth digital currency corresponding to the third digital currency.

22. The digital currency payment method as claimed in claim 21, further comprising:
generating a transaction amount and sending the transaction amount to the first client.

23. A digital currency payment method, applied to a second client and comprising:
acquiring a two-dimensional code provided by a first client, the two-dimensional code indicating a first digital currency used for payment or a circulation identifier corresponding to the first digital currency; and sending a digital currency cashing request to a second currency management apparatus corresponding to the second client, the digital currency cashing request indicating the two-dimensional code, or the first digital currency or the circulation identifier acquired by parsing the two-dimensional code, so as to enable the second currency management apparatus to cash, for a first currency management apparatus corresponding to the first client, a second digital currency corresponding to the first digital currency.

24. The digital currency payment method as claimed in claim 23, further comprising:
in a case where the two-dimensional code is an encrypted two-dimensional code, acquiring a first key corresponding to an encryption method of the two-dimensional code before sending the digital currency cashing request to the second currency management apparatus corresponding to the second client; and decrypting the two-dimensional code with the first key.

25. The digital currency payment method as claimed in claim 23, further comprising:
in a case where the first digital currency indicated by the two-dimensional code is an encrypted first digital currency, or in a case where the circulation identifier indicated by the two-dimensional code is an encrypted circulation identifier, acquiring, according to an encryption method corresponding to a denomination of the first digital currency, a second key corresponding to the encryption method; and
sending the digital currency cashing request to the second currency management apparatus corresponding to the second client, the digital currency cashing request indicating the two-dimensional code, or the first digital currency or the circulation identifier acquired by parsing the two-dimensional code, and the second key.

26. The digital currency payment method as claimed in claim 23, wherein
the two-dimensional code is generated by the first client or the first currency management apparatus according to the first digital currency or the circulation identifier.

27. The digital currency payment method as claimed in claim 26, wherein
the two-dimensional code further indicates one or more of the following information: an identifier of the first currency management apparatus, and a usage scenario of the first digital currency.

28. A digital currency payment method, applied to a second client and comprising:
receiving a payment request sent by a first client, the payment request indicating a first digital currency used for payment or a circulation identifier corresponding to the first digital currency; and
sending a digital currency cashing request to a second currency management apparatus corresponding to the second client according to the first digital currency or the circulation identifier, so as to enable the second currency management apparatus to cash, for a first currency management apparatus corresponding to the first client, a second digital currency corresponding to the first digital currency.

29. The digital currency payment method as claimed in claim 28, further comprising:
in a case where the second currency management apparatus has cashed the second digital currency, receiving the second digital currency issued by the second currency management apparatus.

30. The digital currency payment method as claimed in claim 28, wherein the second currency management apparatus cashing, for the first currency management apparatus corresponding to the first client, the second digital currency corresponding to the first digital currency comprises:
sending the first digital currency or the circulation identifier to the first currency management apparatus, so as to enable the first currency management apparatus to verify the first digital currency or the circulation identifier; and
in a case where the first digital currency or the circulation identifier passes a verification, generating the second digital currency corresponding to the first digital currency, and updating a digital currency record corresponding to the second client.

31. The digital currency payment method as claimed in claim 30, wherein
in a case where the first currency management apparatus is different from the second currency management apparatus, the second currency management apparatus sends the first digital currency or the circulation identifier to the first currency management apparatus via a third party currency management apparatus.

32. The digital currency payment method as claimed in claim 30, wherein
after the first digital currency or the circulation identifier passes the verification, the first currency management apparatus updates a digital currency record corresponding to the first client.

33. The digital currency payment method as claimed in claim 28, further comprising:
in a case where the first digital currency is an encrypted first digital currency or the circulation identifier is an encrypted circulation identifier, acquiring, according to an encryption method corresponding to a denomination of the first digital currency, a key corresponding to the encryption method; and
sending the digital currency cashing request to the second currency management apparatus corresponding to the second client, the digital currency cashing request indicating the first digital currency or the circulation identifier and the key corresponding to the encryption method.

34. A digital currency payment method, applied to a second currency management apparatus and comprising:
receiving a digital currency cashing request sent by a second client, the digital currency cashing request indicating a transaction amount, and a first digital currency used for payment or a circulation identifier of the first digital currency provided by a first client;
sending the first digital currency or the circulation identifier to a first currency management apparatus corresponding to the first client, so as to enable the first currency management apparatus to verify the first digital currency or the circulation identifier;
receiving a verification result of the first digital currency or the circulation identifier sent by the first currency management apparatus; and
in a case where the first digital currency or the circulation identifier passes a verification, generating a second digital currency corresponding to the transaction amount.

35. A digital currency payment method, applied to a second currency management apparatus and comprising:
receiving a digital currency cashing request sent by a second client, the digital currency cashing request indicating a third digital currency used for payment or a circulation identifier of the third digital currency provided by a first client;
sending the third digital currency or the circulation identifier to a first currency management apparatus corresponding to the first client, so as to enable the first currency management apparatus to verify the third digital currency or the circulation identifier;
receiving a verification result of the third digital currency or the circulation identifier sent by the first currency management apparatus; and
in a case where the third digital currency or the circulation identifier passes a verification, generating a fifth digital currency corresponding to the third digital currency.

36. A digital currency payment method, applied to a second currency management apparatus and comprising:
receiving a digital currency cashing request sent by a second client, the digital currency cashing request indicating a two-dimensional code provided by a first client, or a first digital currency or a circulation identifier corresponding to the first digital currency acquired by parsing the two-dimensional code;
sending the first digital currency or the circulation identifier to a first currency management apparatus corresponding to the first client, so as to enable the first currency management apparatus to verify the first digital currency identifier or the circulation identifier;
receiving a verification result of the first digital currency or the circulation identifier from the first currency management apparatus; and
in a case where the first digital currency or the circulation identifier passes the verification, generating a second digital currency corresponding to the first digital currency, and updating a digital currency record corresponding to the second client.

37. The digital currency payment method as claimed in claim 36, wherein
in a case where the first digital currency is an encrypted first digital currency, or in a case where the circulation identifier is an encrypted circulation identifier, the digital currency cashing request further indicates a second key corresponding to an encryption method corresponding to a denomination of the first digital currency.

38. A first client for digital currency payment, comprising: a transaction amount sending module and a payment request sending module, wherein
the transaction amount sending module is configured to send a transaction amount to a first currency management apparatus corresponding to the first client; and
the payment request sending module is configured to send a payment request to a second client according to a processing result of the first currency management apparatus.

39. The first client for digital currency payment as claimed in claim 38, wherein
the transaction amount sending module is further configured to send the transaction amount to the first currency management apparatus corresponding to the first client, so as to enable the first currency management apparatus to determine whether the transaction amount is greater than an available balance of a first digital currency used for payment; and
the payment request sending module is further configured to send, in a case where the transaction amount is not greater than the available balance, the payment request to the second client, the payment request indicating the first digital currency or a circulation identifier of the first digital currency, so as to enable a second currency management apparatus corresponding to the second client to cash, for the first currency management apparatus, a second digital currency corresponding to the transaction amount.

40. The first client for digital currency payment as claimed in claim 38, further comprising: a digital currency receiving module, wherein
the transaction amount sending module is configured to send the transaction amount to the first currency management apparatus corresponding to the first client, so as to enable the first currency management apparatus to divide, in a case where the transaction amount is less than a denomination of a first digital currency used for payment, the first digital currency into a third digital currency and a fourth digital currency, wherein a denomination of the third digital currency indicates the transaction amount, and a denomination of the fourth digital currency indicates a difference between the denomination of the first digital currency and the transaction amount;
the digital currency receiving module is configured to receive the third digital currency issued by the first currency management apparatus; and
the payment request sending module is configured to send the payment request to the second client, the payment request indicating the third digital currency or a circulation identifier of the third digital currency, so as to enable a second currency management apparatus corresponding to the second client to cash, for the first currency management apparatus, a fifth digital currency corresponding to the third digital currency.

41. A first client for digital currency payment, comprising: a two-dimensional code generating module and a two-dimensional code providing module, wherein
the two-dimensional code generating module is configured to generate a two-dimensional code or receive a two-dimensional code sent by a first currency management apparatus corresponding to the first client, the two-dimensional code indicating a first digital currency used for payment or a circulation identifier of the first digital currency; and
the two-dimensional code providing module is configured to provide the two-dimensional code to a second client.

42. A first currency management apparatus for digital currency payment, comprising: a transaction amount receiving module, a transaction amount verification module, and a payment request notification module, wherein
the transaction amount receiving module is configured to receive a transaction amount sent by a first client;
the transaction amount verification module is configured to determine whether the transaction amount is greater than an available balance of a first digital currency used for payment; and
the payment request notification module is configured to notify, in a case where the transaction amount is not greater than the available balance, the first client to send a payment request to a second client, the payment request indicating the first digital currency or a circulation identifier of the first digital currency.

43. A first currency management apparatus for digital currency payment, comprising: a transaction amount receiving module, a second transaction amount verification module, a digital currency division module, and a digital currency issuing module, wherein
the transaction amount receiving module is configured to receive a transaction amount sent by a first client corresponding to the first currency management apparatus;
the second transaction amount verification module is configured to determine whether the transaction amount is less than a denomination of a first digital currency used for payment;
the digital currency division module is configured to divide, in a case where the transaction amount is less than the denomination of the first digital currency, the first digital currency into a third digital currency and a fourth digital currency, wherein a denomination of the third digital currency indicates the transaction amount, and a denomination of the fourth digital currency indicates a difference between the denomination of the first digital currency and the transaction amount; and
the digital currency issuing module is configured to issue the third digital currency to the first client, so as to enable the first client to make a payment by using the third digital currency.

44. A first currency management apparatus for digital currency payment, comprising: a digital currency receiving module, a digital currency verification module, a verification result sending module, and a currency record updating module, wherein
the digital currency receiving module is configured to receive a first digital currency used for cashing or a circulation identifier corresponding to the first digital currency sent by a second currency management apparatus;
the digital currency verification module is configured to verify the first digital currency or the circulation identifier according to a digital currency record corresponding to a first client;
the verification result sending module is configured to send a verification result of the first digital currency or the circulation identifier to the second currency management apparatus, so as to enable the second currency management apparatus to generate a second digital currency corresponding to the first digital currency in a case where the first digital currency or the circulation identifier passes a verification; and
the currency record updating module is configured to update the digital currency record corresponding to the first client in the case where the first digital currency or the circulation identifier passes the verification.

45. A second client for digital currency payment, comprising: a payment request receiving module and a digital currency cashing module, wherein
the payment request receiving module is configured to receive a payment request sent by a first client, the payment request indicating a first digital currency used for payment or a circulation identifier of the first digital currency; and
the digital currency cashing module is configured to send a digital currency cashing request to a second currency management apparatus corresponding to the second client, the digital currency cashing request indicating a transaction amount and the first digital currency or the circulation identifier, so as to enable the second currency management apparatus to cash, for a first currency management apparatus corresponding to the first client, a second digital currency corresponding to the transaction amount.

46. A second client for digital currency payment, comprising: a payment request receiving module and a digital currency cashing module, wherein
the payment request receiving module is configured to receive a payment request sent by a first client, the payment request indicating a third digital currency used for payment or a circulation identifier of the third digital currency; and
the digital currency cashing module is configured to send a digital currency cashing request to a second currency management apparatus corresponding to the second client, the digital currency cashing request indicating the third digital currency or the circulation identifier, so as to enable the second currency management apparatus to cash, for a first currency management apparatus corresponding to the first client, a fifth digital currency corresponding to the third digital currency.

47. A second client for digital currency payment, comprising: a two-dimensional code acquiring module and a second digital currency cashing module, wherein
the two-dimensional code acquiring module is configured to acquire a two-dimensional code provided by a first client, the two-dimensional code indicating a first digital currency used for payment or a circulation identifier corresponding to the first digital currency; and
the second digital currency cashing module is configured to send a digital currency cashing request to a second currency management apparatus corresponding to the second client, the digital currency cashing request indicating the two-dimensional code, or the first digital currency or the circulation identifier acquired by parsing the two-dimensional code, so as to enable the second currency management apparatus to cash, for a first currency management apparatus corresponding to the first client, a second digital currency corresponding to the first digital currency.

48. A digital currency payment apparatus, applied to a second client and comprising: a payment request receiving module and a digital currency cashing module, wherein
the payment request receiving module is configured to receive a payment request sent by a first client, the payment request indicating a first digital currency used for payment or a circulation identifier corresponding to the first digital currency; and
the digital currency cashing module is configured to send a digital currency cashing request to a second currency management apparatus corresponding to the second client according to the first digital currency or the circulation identifier, so as to enable the second currency management apparatus to cash, for a first currency management apparatus corresponding to the first client, a second digital currency corresponding to the first digital currency.

49. The digital currency payment apparatus as claimed in claim 48, further comprising: a digital currency receiving module, wherein
the digital currency receiving module is configured to receive, in a case where the second currency management apparatus has cashed the second digital currency, the second digital currency issued by the second currency management apparatus.

50. A second currency management apparatus for digital currency payment, comprising: a cashing request receiving module, a digital currency sending module, a verification result receiving module, and a digital currency generating module, wherein
the cashing request receiving module is configured to receive a digital currency cashing request sent by a second client, the digital currency cashing request indicating a transaction amount, and a first digital currency used for payment or a circulation identifier of the first digital currency provided by a first client;
the digital currency sending module is configured to send the first digital currency or the circulation identifier to a first currency management apparatus corresponding to the first client, so as to enable the first currency management apparatus to verify the first digital currency or the circulation identifier;
the verification result receiving module is configured to receive a verification result of the first digital currency or the circulation identifier sent by the first currency management apparatus; and
the digital currency generating module is configured to generate a second digital currency corresponding to the transaction amount in a case where the first digital currency or the circulation identifier passes the verification.

51. A second currency management apparatus for digital currency payment, comprising: a cashing request receiving module, a digital currency sending module, a verification result receiving module, and a digital currency generating module, wherein
the cashing request receiving module is configured to receive a digital currency cashing request sent by a second client, the digital currency cashing request indicating a third digital currency used for payment or a circulation identifier of the third digital currency provided by a first client;
the digital currency sending module is configured to send the third digital currency or the circulation identifier to a first currency management apparatus corresponding to the first client, so as to enable the first currency management apparatus to verify the third digital currency or the circulation identifier;
the verification result receiving module is configured to receive a verification result of the third digital currency or the circulation identifier sent by the first currency management apparatus; and
the digital currency generating module is configured to generate, in a case where the third digital currency or the circulation identifier passes the verification, a fifth digital currency corresponding to the third digital currency.

52. A second currency management apparatus for digital currency payment, comprising: a cashing request receiving module, a digital currency sending module, a verification result receiving module, and a digital currency generating module, wherein
the cashing request receiving module is configured to receive a digital currency cashing request sent by a second client, the digital currency cashing request indicating a two-dimensional code provided by a first client, or a first digital currency or a circulation identifier corresponding to the first digital currency acquired by parsing the two-dimensional code;
the digital currency sending module is configured to send the first digital currency or the circulation identifier to a first currency management apparatus corresponding to the first client, so as to enable the first currency management apparatus to verify the first digital currency or the circulation identifier;
the verification result receiving module is configured to receive a verification result of the first digital currency or the circulation identifier from the first currency management apparatus; and
the digital currency generating module is configured to generate a second digital currency corresponding to the first digital currency and update a digital currency record corresponding to the second client in a case where the first digital currency or the circulation identifier passes the verification.

53. A digital currency payment system, comprising: a first client, a second client, a first currency management apparatus corresponding to the first client, and a second currency management apparatus corresponding to the second client.

54. The digital currency payment system as claimed in claim 33, wherein
the first client is configured to: send a transaction amount to the first currency management apparatus, and
send, in the case where the transaction amount is not greater than an available balance of a first digital currency used for payment, a payment request to the second client, the payment request indicating the first digital currency or a circulation identifier of the first digital currency;
the second client is configured to: receive the payment request sent by the first client, the payment request indicating the first digital currency used for payment or the circulation identifier of the first digital currency, and send a digital currency cashing request to the second currency management apparatus corresponding to the second client, the digital currency cashing request indicating the transaction amount and the first digital currency or the circulation identifier;
the first currency management apparatus is configured to: receive the transaction amount sent by the first client, determine whether the transaction amount is greater than the available balance of the first digital currency used for payment, and notify, in the case where the transaction amount is not greater than the available balance, the first client to send the payment request to the second client; and
the second currency management apparatus is configured to: receive the digital currency cashing request sent by the second client, and cash, for the first currency management apparatus corresponding to the first client, a second digital currency corresponding to the transaction amount.

55. The digital currency payment system as claimed in claim 53, wherein
the first client is configured to: send a transaction amount to the first currency management apparatus, receive, in the case where the transaction amount is less than a denomination of a first digital currency used for payment, a third digital currency issued by the first currency management apparatus, and send a payment request to the second client, the payment request indicating the third digital currency or a circulation identifier of the third digital currency;
the second client is configured to: receive the payment request sent by the first client and send a digital currency cashing request to the second currency management apparatus corresponding to the second client, the digital currency cashing request indicating the third digital currency or the circulation identifier of the third digital currency;
the first currency management apparatus is configured to: receive the transaction amount sent by the first client, divide, in the case where the transaction amount is less than the denomination of the first digital currency used for payment, the first digital currency into the third digital currency and a fourth digital currency, wherein a denomination of the third digital currency indicates the transaction amount, and a denomination of the fourth digital currency indicates a difference between the denomination of the first digital currency and the transaction amount, and issue the third digital currency to the first client; and
the second currency management apparatus is configured to: receive the digital currency cashing request sent by the second client, and cash, for the first currency management apparatus corresponding to the first client, a fifth digital currency corresponding to the third digital currency.

56. The digital currency payment system as claimed in claim 53, wherein
the first client is configured to provide a two-dimensional code to the second client, the two-dimensional code indicating a first digital currency used for payment or a circulation identifier corresponding to the first digital currency;
the second client is configured to receive the two-dimensional code and send a digital currency cashing request to the second currency management apparatus, the digital currency cashing request indicating the two-dimensional code, or the first digital currency or the circulation identifier acquired by parsing the two-dimensional code;
the second currency management apparatus is configured to cash, for the first currency management apparatus, a second digital currency corresponding to the first digital currency according to the digital currency cashing request; and
the first currency management apparatus is configured to verify the first digital currency or the circulation identifier.

57. The digital currency payment system as claimed in claim 53, wherein
the first client is configured to send a payment request to the second client;
the second client is configured to: receive the payment request sent by the first client, the payment request indicating a first digital currency used for payment or a circulation identifier corresponding to the first digital currency, and send a digital currency cashing request to the second currency management apparatus corresponding to the second client according to the first digital currency or the circulation identifier;
the second currency management apparatus is configured to cash, for the first currency management apparatus corresponding to the first client, a second digital currency corresponding to the first digital currency according to the digital currency cashing request; and
the first currency management apparatus is configured to verify the first digital currency or the circulation identifier.

58. The digital currency payment system as claimed in claim 57, further comprising: a third party currency management apparatus, wherein
the third party currency management apparatus is configured to send, in a case where the first currency management apparatus is different from the second currency management apparatus, the first digital currency or the circulation identifier to the first currency management apparatus.

59. An electronic device for digital currency payment, comprising:
one or more processors; and
a storage apparatus configured to store one or more programs, wherein
the one or more programs, when executed by the one or more processors, cause the one or more processors to implement the method as claimed in any one of claims 1 to 37.

60. A computer-readable medium storing a computer program, wherein the program, when executed by a processor, implements the method as claimed in any one of claims 1 to 37.
